(19) Europäisches Patentamt
European Patent Office
Office européen des brevets

(11) EP 4 381 951 B1

(12) **EUROPEAN PATENT SPECIFICATION**

(45) Date of publication and mention of the grant of the patent:
**21.01.2026 Bulletin 2026/04**

(21) Application number: **23831539.4**

(22) Date of filing: **28.06.2023**

(51) International Patent Classification (IPC):
***A21D 2/36** (2006.01)* ***A21D 13/00** (2017.01)*
***A23G 3/00** (2006.01)* ***A23L 7/161** (2016.01)*

(52) Cooperative Patent Classification (CPC):
**A23L 7/161; A21D 2/186; A21D 2/362; A21D 13/02; A21D 13/045; A23L 7/10; A23L 7/109; A23L 7/165; A23L 11/05; A23L 29/212**

(86) International application number:
**PCT/JP2023/024040**

(87) International publication number:
**WO 2024/005099 (04.01.2024 Gazette 2024/01)**

# (54) STARCH-CONTAINING SWOLLEN COMPOSITION AND PRODUCTION METHOD THEREFOR, FERMENTED COMPOSITION AND PRODUCTION METHOD THEREFOR, AND FERMENTED AND ENZYME-TREATED COMPOSITION AND PRODUCTION METHOD THEREFOR

STÄRKEHALTIGE GEQUOLLENE ZUSAMMENSETZUNG UND VERFAHREN ZU DEREN HERSTELLUNG, FERMENTIERTE ZUSAMMENSETZUNG UND VERFAHREN ZU DEREN HERSTELLUNG SOWIE FERMENTIERTE UND ENZYMBEHANDELTE ZUSAMMENSETZUNG UND VERFAHREN ZU DEREN HERSTELLUNG

COMPOSITION DE LEVAGE CONTENANT DE L'AMIDON ET SON PROCÉDÉ DE PRODUCTION, COMPOSITION DE FERMENTATION ET SON PROCÉDÉ DE PRODUCTION, ET COMPOSITION DE TRAITEMENT ENZYMATIQUE DE FERMENTATION ET SON PROCÉDÉ DE PRODUCTION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.06.2022 JP 2022103973**

(43) Date of publication of application:
**12.06.2024 Bulletin 2024/24**

(73) Proprietor: **Mizkan Holdings Co., Ltd.**
**Handa-shi, Aichi 475-8585 (JP)**

(72) Inventors:
- **MIZUNO, Hirofumi**
  **Handa-shi, Aichi 475-8585 (JP)**
- **YAMAMOTO, Eisuke**
  **Handa-shi, Aichi 475-8585 (JP)**
- **MIZUTA, Erika**
  **Handa-shi, Aichi 475-8585 (JP)**
- **SAKANO, Yuka**
  **Handa-shi, Aichi 475-8585 (JP)**
- **HIBI, Naruhiro**
  **Handa-shi, Aichi 475-8585 (JP)**
- **TANAKA, Shungo**
  **Handa-shi, Aichi 475-8585 (JP)**

(74) Representative: **Hasegawa, Kan**
**Patentanwaltskanzlei Hasegawa**
**Untere Hauptstraße 56**
**85354 Freising (DE)**

(56) References cited:
**EP-A1- 4 176 723** **EP-A1- 4 381 950**
**WO-A1-2013/114048** **WO-A1-2022/145472**
**JP-A- 2015 506 694** **US-A1- 2016 037 808**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 381 951 B1

## Description

### TECHNICAL FIELD

The present invention relates to a swollen composition containing starch derived from pulse and/or cereal and a method for producing the same, a fermented composition and a method for producing the same, and a fermented and enzyme-treated composition and a method for producing the same.

### BACKGROUND ART

Various technologies have been known for swollen foods such as bread containing starch derived from pulse or cereal. For example, Patent Literature 1 discloses that a mix containing rice flour and psyllium was used to obtain bread that maintains good swelling and texture despite the absence of gluten. Patent Literature 2 describes that non-digestible starch was included in wheat-based bread, whereby the volume after baking was reduced, the shape was stabilized and homogenized, and the viscoelasticity characteristic of the starch network (hereinafter sometimes referred to as "pull" as appropriate) was suppressed. Patent Literature 3 describes that psyllium was subjected to enzymatic treatment to obtain a partially degraded psyllium product which has reduced viscosity and is suitable for liquid beverages. Patent Literature 4 describes that a fermented composition was obtained by an extrusion process. Patent Literature 5 describes a technology relating to bread using an enzyme having xylan degrading activity. Patent Literature 6 describes a technology relating to bread using glycase. Patent Literature 7 describes a technology for bread using xylanase. Patent Literature 8 deals with a composition for a gluten-free cooking product.

### LIST OF CITATIONS

### Patent Literature

[Patent Literature 1] JP2019-024347 A
[Patent Literature 2] JP2007-124928 A
[Patent Literature 3] JP-H11-075776 A
[Patent Literature 4] US2007/0248726 A
[Patent Literature 5] CN1681392 A
[Patent Literature 6] CN102796717 A
[Patent Literature 7] EP1989302 A
[Patent Literature 8] WO 2013/114048 A

### SUMMARY OF INVENTION

### PROBLEM TO BE SOLVED BY THE INVENTION

However, the technology described in Patent Literature 1 has the problem of insufficient swelling. The technology described in Patent Literature 2 is based on wheat-based bread, and therefore cannot be applied to swollen food products that do not contain gluten as a main ingredient, and also does not provide the viscoelasticity (pull) characteristic of starch networks. The technology described in Patent Literature 3 also had the problem of not imparting such viscoelasticity (pull).

With regard to fermented compositions, to which one aspect of the present invention relates, the technology described in Patent Literature 4 requires a special extrusion device, and lacks versatility.

With regard to fermented compositions with enzyme treatment, to which another aspect of the present invention relates, the technologies described in Patent Literature 5, Patent Literature 6, and Patent Literature 7 are not capable of solving the above issues. Specifically, Patent Literature 5 relates to a technology based on network formation by glutelin in flour, and therefore cannot be applied to swollen food products that do not contain gluten as a main ingredient. The technology described in Patent Literature 6 requires a heat-resistant glycase. The technology described in Patent Literature 7 requires nucleic acid. Thus, these techniques also lack versatility.

The present invention was made in view of the above issues, and an objective of the present invention is to provide a swollen composition comprising a starch derived from pulse and/or cereal which exhibits accelerated swelling property and to which a viscoelasticity (pull) characteristic of the starch network is imparted.

## MEANS TO SOLVE THE PROBLEM

After diligent study, the present inventors have conceived of improving swollen compositions containing starch derived from pulse and/or cereal by adjusting each of the starch content, dry mass basis moisture content, dietary fiber content, and plant polysaccharide content to a predetermined value or more, adjusting, when aqueous slurry of a crushed product of the composition is measured using a rapid visco-analyzer under predetermined conditions, the ratio of the peak viscosity (cP) during the temperature decreasing step [Value $\beta$] to the breakdown viscosity (cP) during the temperature increasing step [Value $\alpha$] ([Value $\beta$] / [Value $\alpha$]) to a predetermined value or less, and adjusting, when the composition is subjected to a predetermined treatment and the resulting product is subjected to measurement under predetermined conditions to obtain a molecular weight distribution curve in an interval with molecular weight logarithms of 3.0 or more but less than 6.0 ($MWDC_{3.0-6.0}$), the ratio of the molecular weight logarithm at the peak apex of 2ndMP to the molecular weight logarithm at the peak apex of 1stMP (2ndMP/1stMP) to a predetermined value or less, to thereby obtain a swollen composition comprising a starch derived from pulse and/or cereal which exhibits accelerated swelling property and to which a viscoelasticity (pull) characteristic of the starch network is imparted. Thus, the present inventors have successfully solved the above problems and arrived at the present invention according to the claims.

## EFFECT OF THE INVENTION

The present invention provides a swollen composition comprising a starch derived from pulse and/or cereal which exhibits accelerated swelling property and to which a viscoelasticity (pull) characteristic of the starch network is imparted.

## DESCRIPTION OF EMBODIMENTS

The present invention will be described in detail in accordance with the specific embodiments below. However, the present invention is not bound by the following embodiments, but can be implemented in any form to the extent that it does not depart from the intent of the present invention.

It should be noted that when a plurality of upper limits and/or a plurality of lower limits are indicated for any numerical range herein, the subject matter intended for the present invention includes at least the combination of the maximal value of the upper limits and the minimal value of the lower limits, as well as all numerical ranges obtained by combining any value of the upper limits and any value of the upper limits, regardless of they are explicitly indicated. For example, the statement about the numerical ranges of $AUC_{5.0\text{-}6.5}$ below, i.e., "preferably 1 % or more, or 3 % or more, or 5 % or more, or 10 % or more" and "preferably 70 % or less, or 67 % or less, or 65 % or less, or 63 % or less," means that the subject matter intended for the present invention includes all numerical ranges obtained by combining any value of the upper limits and any value of the upper limits, i.e., 1 % or more but 70 % or less, 1 % or more but 67 % or less, 1 % or more but 65 % or less, 1 % or more but 63 % or less, 3 % or more but 70 % or less, 3 % or more but 67 % or less, 3 % or more but 65 % or less, more than 3% but 63 % or less, 5 % or more but 70 % or less, 5 % or more but 67 % or less, 5 % or more but 65 % or less, 5 % or more but 63 % or less, 10 % or more but 70 % or less, 10 % or more but 67 % or less, and 10 % or more but 65 % or less, 10 % or more but 63 % or less.

The term "wet mass basis" (also referred to as "wet mass equivalent") herein means the ratio of the content of a target component in a sample calculated with the wet mass containing water of the sample as the denominator and the content mass of the target component in the sample as the numerator. The term "dry mass basis" (also referred to as "dry mass equivalent") herein means the ratio of the content of a target component in a sample calculated with the dry mass of the sample excluding water as the denominator and the content mass of the target component in the sample as the numerator. When the term "mass %" is used herein for indicating ratios, they are indicated in terms of "wet mass basis," unless specified otherwise.

<u>[Starch-containing swollen composition]</u>

An aspect of the present invention relates to a swollen composition containing starch (hereinafter also referred to as "the starch-containing swollen composition of the present invention," "the swollen composition of the present invention," or simply "the composition of the present invention"). The term "swollen composition" herein refers to a composition with pores of a certain size or larger inside the composition. A swollen compositions can typically be produced by increasing the volume of pores in a dough composition by expanding the liquid or gas inside the dough composition, followed by curing with cooling the composition. Specific examples of swollen compositions include bread or similar food products such as waffles (also referred to as bread-like food products), which can be produced by causing and expanding gas using an expander (typically baking powder, sodium bicarbonate (baking soda), or ammonium bicarbonate that produces gas when heated) or yeast fermentation inside a dough composition via heat treatment to increase its pore volume, followed by cooling to cure the dough composition. Examples of swollen food compositions also include bread food products prepared by forming swollen compositions into desired shapes. The swollen composition of the present invention may be a fermented puffed composition, which is produced by a production method that includes a fermentation process (especially a fermentation process with yeast), or a non-fermented swollen composition, which is produced by a production method that does not include a fermentation process (especially a fermentation process with yeast). When the swollen composition of the present invention is a fermented swollen composition, it may be a fermented composition produced by keeping the temperature of a mixture (e.g., dough composition) containing certain ingredients at a predetermined temperature range (e.g., 0°C to 60°C for 1 minute or more), or a fermented baked composition produced by baking such a mixture at 100°C for 1 minute or more, or a composition produced by a combination of those production methods. The swollen composition may also be an enzyme-treated composition, which is produced by a production method including enzyme treatment (preferably cellulase, pectinase, or xylanase treatment), or a fermented enzyme-treated composition, which is produced by combining the fermentation process and enzyme treatment described above.

As will be explained in the section on the production method of the swollen composition of the present invention, the contents of various ingredients in the swollen composition of the present invention may be achieved at any stage of the production method. For example, they may be achieved before the step of heat treatment in a predetermined temperature range, during the step of heat treatment in a predetermined temperature range, or after the step of heat treatment in a predetermined temperature range.

[Starch content]

The swollen composition of the present invention may preferably be characterized in that the starch content in the total composition is within a predetermined range. Specifically, the starch content in the swollen composition of the present invention in terms of wet mass basis is within the range of 3 mass % or more, while the upper limit is not restricted, but may be 100 mass % or less may be. More specifically, the lower limit of the ratio in terms of wet mass basis may be typically 3 mass % or more, preferably 5 mass % or more, or 10 mass % or more, or 15 mass % or more, or 20 mass % or more, or 25 mass % or more, or 30 mass % or more, or 32 mass % or more, or 35 mass % or more. On the other hand, the upper limit of the ratio is not particularly limited, but may be, in terms of wet mass basis, typically 100 mass % or less, or 90 mass % or less, or 80 mass % or less, or 70 mass % or less, or 65 mass % or less, or 60 mass % or less, or 50 mass % or less.

The origin of the starch contained in the swollen composition of the present invention is not particularly restricted. Examples include those derived from plant and those derived from animal. However, the swollen composition of the present invention at least contains pulse-derived starch and/or cereal-derived starch. Specifically, the ratio of the total content of pulse-derived starch and/or cereal-derived starch (preferably the content of pulse-derived starch) to the total starch content in the swollen composition of the present invention may be within the range of 10 mass % or more but 100 mass % or less. More specifically, the lower limit of the ratio may preferably be typically 10 mass % or more, or 20 mass % or more, or 30 mass % or more, particularly 40 mass % or more, or 50 mass % or more, or 60 mass % or more, or 70 mass % or more, or 80 mass % or more, or 90 mass % or more. On the other hand, the upper limit of the ratio may be, although not particularly limited to, typically 100 mass %, or 100 mass % or less. The pulse-derived starch may preferably be mung bean starch and especially pea-derived starch, most preferably yellow pea-derived starch. The cereal-derived starch may preferably be quinua-derived starch, oat-derived starch, corn-derived starch, or especially starch derived from kibi (common millet). The starch may preferably be contained in pulse and/or cereal. The pulse and cereal will be explained later. The ratio of the pulse-derived starch content to the total starch content of the entire composition may satisfy the above range, or the ratio of the cereal-derived starch content to the total starch content of the entire composition may satisfy the above range, or the sum of the pulse-derived starch content and the cereal-derived starch content may preferably satisfy the above provision.

The starch contained in the swollen composition of the present invention may be either in the form of an isolated pure product, but at least pulse-derived starch content and cereal-derived starch may more preferably be in the form of being contained in pulse and/or cereal. Specifically, the ratio of the total content of starch contained in pulse and/or cereal (preferably the total content of starch contained in pulse) the total starch content in the whole composition may be within the range of typically 10 mass % or more, and 100 mass % or less. More specifically, the lower limit of the ratio may be typically 10 mass % or more, preferably 20 mass % or more, or 30 mass % or more, or 40 mass % or more, or 50 mass % or more, or 60 mass % or more, or 70 mass % or more, or 80 mass % or more, or 90 mass % or more. On the other hand, the upper limit of the ratio is not particularly limited, but may be typically 100 mass %, or 100 mass % or less. The ratio of the content of starch contained in pulse to the total starch content of the entire composition may satisfy the above range, or the ratio of the content of starch contained in cereal to the total starch content of the entire composition may satisfy the above range, or the sum of the content of starch contained in pulse and the content of starch contained in cereal may preferably satisfy the above provision.

In the present invention, the starch content in a swollen composition is determined according to the Japan Standard Tables for Food Composition 2015 (7th revised edition) and using the method of AOAC 996.11, by a method in which soluble carbohydrates (glucose, maltose, maltodextrin, etc.) that affect the measured value are removed via extraction treatment with 80% ethanol.

The total content of starch derived from rice, wheat, and/or barley (preferably wheat and/or barley) in the swollen composition of the present invention may preferably be within a predetermined range. Specifically, the ratio of the total content of starch derived from rice, wheat, and/or barley (preferably, wheat and/or barley) to the total starch content in the swollen composition may be within the range of 0 mass % or more but 20 mass % or less. More specifically, the upper limit of the ratio may be typically 20 mass % or less, or 15 mass % or less, or 10 mass % or less, or 9 mass % or less, or 8 mass % or less, or 7 mass % or less, or 6 mass % or less, or 5 mass % or less, or 4 mass % or less, or 3 mass % or less, or 2 mass % or less, or 1 mass % or less, more preferably substantially absent (which may specifically refer to a content of less than 1 ppm, which is a lower limit for general measurement methods), or absent. On the other hand, the lower limit of the ratio is not particularly limited, but may be typically 0 mass %, or 0 mass % or more.

<u>[Dry mass basis moisture content]</u>

The swollen composition of the present invention is characterized in that its dry mass basis moisture content is within a predetermined ratio. Specifically, the dry mass basis moisture content of the swollen composition of the present invention may be within the range of 0 mass % or more but less than 150 mass %. More specifically, the upper limit of the dry mass basis moisture content of the swollen composition of the present invention may be typically less than 150 mass %, preferably less than 140 mass %, or less than 130 mass %, or less than 120 mass %, or less than 110 mass %, or less than 100 mass %, or less than 90 mass %, or less than 80 mass %, or less than 70 mass %, or less than 60 mass %, or less than 50 mass %, or less than 40 mass %, or less than 30 mass %, or less than 26 mass %, or less than 21 mass %, or less than 16 mass %, or less than 10 mass %. On the other hand, the lower limit of the dry mass basis moisture content of the swollen composition of the present invention may be, although is not limited to, 0 mass % or more, or 0.5 mass % or more, or 1 mass % or more, or 2 mass % or more, or 5 mass % or more, from the viewpoint of industrial production efficiency. The dry mass basis moisture content of the swollen composition of the present invention may be either derived from various ingredients of the composition or derived from further added water. If the dry mass basis moisture content in the dough composition before processing is high, a process such as drying can be employed to adjust the dry mass basis moisture content to within the aforementioned range.

In the case of a fermented swollen composition (e.g., bread or bread-like food), which is produced by a production method including fermentation step (especially fermentation step with yeast), its dry mass basis moisture content may preferably relatively higher. Specifically, fermented swollen the dry mass basis moisture content of the composition may be within the range of 20 mass % or more but less than 150 mass %. More specifically, its upper limit may preferably be typically less than 150 mass %, or less than 125 mass %, or less than 110 mass %. On the other hand, its lower limit may preferably be, although is not limited to, 20 mass % or more, or 30 mass % or more, or 40 mass % or more, or 50 mass % or more, from the viewpoint of industrial production efficiency.

The "dry mass basis water content" herein refers to the ratio of the total amount of water in the composition of the present invention which either originates from the raw materials or was added externally to the total amount of solids in the solid paste composition of the present invention. The value can be measured by a method, for example, according to the Japan Standard Tables for Food Composition 2015 (7th revised edition), by heating to 90°C using the decompression heating and drying method. Specifically, an appropriate amount of sample ($W_1$) is put in a pre-weighed weighing vessel ($W_0$) and weighed, the weighing vessel with the lid removed or opened is placed in a reduced pressure electric constant temperature dryer adjusted to a predetermined temperature (more specifically, 90°C) at normal pressure, the door is closed, and the vacuum pump is operated to dry the sample at a predetermined reduced pressure for a predetermined period of time. The vacuum pump is then stopped, dry air is sent to bring the pressure back to normal, the weighing vessel is removed, the lid is put on, the vessel is left to cool in a desiccator, and the mass is then weighed. The method of drying, cooling, and weighing ($W_2$) is repeated until a constant amount is reached, and the water content (water content based on dry weight) (mass %) is determined using the following formula.

[Formula 1]

$$\text{Dry basis water content (g/100g)} = (W_1 -- W_2) / (W_2 -- W_0) \text{ x } 100$$

In the formula, $W_0$ is the mass (g) of the pre-weighed weighing vessel, $W_1$ is the mass (g) of the weighing vessel with the sample before drying, and $W_2$ is the mass (g) of the weighing vessel with the sample after drying.

[Dietary fiber content]

The swollen composition of the present invention is characterized in that the content of dietary fiber (which may preferably be, although is not limited to, insoluble dietary fiber) in the composition in terms of wet mass basis is within a predetermined range. Specifically, the dietary fiber content in the swollen composition of the present invention in terms of wet mass basis may be within the range of typically 3.0 mass % or more, while the upper limit may preferably be, although is not particularly limited to, less than 40 mass %. More specifically, its lower limit in terms of wet mass basis may preferably be typically 3.0 mass % or more, preferably 3.5 mass % or more, or 4.0 mass % or more, or 4.5 mass % or more, or 5.0 mass % or more, or 5.5 mass % or more, or 6.0 mass % or more, or 7.0 mass % or more, or 8.0 mass % or more, or 9.0 mass % or more, or 10.0 mass % or more, or 11.0 mass % or more, or 12.0 mass % or more. On the other hand, its upper limit in terms of wet mass basis may be, although is not particularly limited to, typically 40 mass % or less, or 35 mass % or less, or 30 mass % or less. The "dietary fiber content" (i.e., "total dietary fiber content," which is a sum of the soluble dietary fiber content and the insoluble dietary fiber content), "soluble dietary fiber content," and "insoluble dietary fiber content" are measured in accordance with the Japan Standard Tables for Food Composition 2015 (7th revised edition) using the Prosky variant method.

It may be preferred that the above provisions for dietary fiber are also satisfied for soluble and/or insoluble dietary fiber. Specifically, the content(s) of soluble dietary fiber and/or insoluble dietary fiber in the composition of the present invention in terms of wet mass basis for example lower limit may preferably be within the range of typically 3.0 mass % or more, while the upper limit may preferably be, although is not particularly limited to, less than 40 mass %. More specifically, its lower limit in terms of wet mass basis may preferably be typically 3.0 mass % or more, preferably 3.5 mass % or more, or 4.0 mass % or more, or 4.5 mass % or more, or 5.0 mass % or more, or 6.0 mass % or more, or 7.0 mass % or more, or 8.0 mass % or more, or 9.0 mass % or more, or 10.0 mass % or more, or 11.0 mass % or more, or 12.0 mass % or more. On the other hand, its upper limit in terms of wet mass basis may be, although is not particularly limited to, typically 40 mass % or less, or 35 mass % or less, or 30 mass % or less.

The origin of the dietary fiber contained in the swollen composition of the present invention is not particularly limited, and may be either those derived from various naturally-occurring materials (such as edible plants) containing dietary fiber or those synthesized. When those derived from naturally-occurring materials are used, dietary fiber contained in various materials may be isolated, purified, and used, or alternatively, such materials containing dietary fiber may be used as such. Among these, dietary fibers contained in various materials (particularly pulse and/or cereal) are preferred. Examples of dietary fibers that can be used include those derived from general cereals (particularly from specific cereals), those derived from pulse (beans), those derived from potatoes, those derived from vegetables, those derived from nuts, and those derived from fruits. Preferable among them are those derived from cereals and those derived from pulse (beans) from the viewpoint of the texture of the composition, more preferably those derived from pulse (beans), even more preferably those derived from mung bean or those derived from pea, most preferably those derived from yellow pea. Preferable among dietary fibers derived from cereals are those derived from oat, those derived from quinua, or especially those derived from kibi (common millet).

Specifically, the ratio of the total content of pulse-derived dietary fiber and/or cereal-derived dietary fiber (preferably the pulse dietary fiber content) to the total dietary fiber content in the whole composition may be within the range of 5 mass % or more but 100 mass % or less. More specifically, the lower limit of the ratio may preferably be 5 mass % or more, or 10 mass % or more, or 15 mass % or more, or 20 mass % or more, or 25 mass % or more, or 30 mass % or more, or 40 mass % or more, or 50 mass % or more, or 60 mass % or more, or 70 mass % or more, or 80 mass % or more, or 90 mass % or more. On the other hand, the upper limit of the ratio may be, although not particularly limited to, typically 100 mass %, or 100 mass % or less. With respect to the total dietary fiber content in the composition, the ratio of pulse-derived dietary fiber content may satisfy the above range, or the ratio of cereal-derived dietary fiber content may satisfy the above range, or the total ratio of pulse-derived dietary fiber and cereal-derived dietary fiber may preferably satisfy the above range.

When pulse containing dietary fiber is used, it may be used either with or without its seed skin, but pulse with seed skin may preferably be used since it has a higher content of dietary fiber. When cereal containing dietary fiber is used, it may be used either with or without its bran, but cereal with bran may preferably be used since it has a higher content of dietary fiber.

The swollen composition of the present invention (especially fermented swollen composition) may preferably contain dietary fiber derived from seed skin of psyllium (psyllium husk) at a certain ratio or more. Specifically, the ratio of the dietary fiber content derived from seed skin of psyllium to the total dietary fiber content in in the composition may be within the range of typically 5 mass % or more but 100 mass % or less. More specifically, the lower limit of the ratio may preferably be 1 mass % or more, or 2 mass % or more, or 3 mass % or more, or 4 mass % or more, or 5 mass % or more, or 8 mass % or more, or 10 mass % or more, or 15 mass % or more, or 20 mass % or more, or 25 mass % or more, or 30 mass % or more, or 40 mass % or more, or 50 mass % or more, or 60 mass % or more, or 70 mass % or more, or 80 mass % or more, or 90 mass % or more. The upper limit is not particularly limited, but may be typically 100 mass % or less, or 90 mass % or less, or 80 mass % or less.

The dietary fiber (preferably, although not limited to, the insoluble dietary fiber) in the swollen composition of the present invention may be either in the form of an isolated pure product or, more preferably, in the form of being contained in pulse and/or cereal. Specifically, the ratio of the dietary fiber content contained in pulse and/or cereal (preferably pulse) to the total dietary fiber content in the whole composition may be within the range of 10 mass % or more, and 100 mass % or less. More specifically, the lower limit of the ratio may preferably be 10 mass % or more, particularly 20 mass % or more, or 30 mass % or more, or 40 mass % or more, or 50 mass % or more, or 60 mass % or more, or 70 mass % or more, or 80 mass % or more, or 90 mass % or more. The upper limit of the ratio may be, although not particularly limited to, typically 100 mass %, or 100 mass % or less. The ratio of the dietary fiber content contained in pulse and/or cereal (preferably pulse) to the total dietary fiber content in the swollen composition of the present invention may preferably satisfy the ranges mentioned above, and the insoluble dietary fiber content may more preferably satisfy the ranges mentioned above. With respect to the total dietary fiber content in the composition, the ratio of the dietary fiber contained in pulse may satisfy the above range, or the ratio of the dietary fiber contained in cereal may satisfy the above range, or the total ratio of the dietary fiber contained in pulse and the dietary fiber contained in cereal may satisfy the above range.

The constitution of the dietary fiber contained in the composition of the present invention is not particularly restricted. However, the ratio of lignin (especially acid-soluble lignin) to the total dietary fiber content (especially to the total insoluble dietary fiber) may preferably satisfy the aforementioned limits or more, since this will make it easier to effects of the present invention. Specifically, the ratio of the lignin content (especially the acid-soluble lignin content) to the total dietary fiber content to the total dietary fiber in terms of wet mass basis may be within the range of 5 mass % or more but 100 mass % or less. More specifically, it may preferably be 5 mass % or more, or 10 mass % or more, or 30 mass % or more.

<u>[Plant polysaccharides content]</u>

The plant viscous component contained in the composition of the present invention may be any component that expresses viscosity by water absorption, such as plant polysaccharides. Plant polysaccharides to be used in the present invention are not restricted, but the ratio of the soluble dietary fiber content to the total dietary fiber content therein may preferably be within a specified range. Specifically, the ratio of the soluble dietary fiber content to the total dietary fiber content is not limited, but may be within the range of 5 mass % or more, while the upper limit may preferably be, although is not particularly limited to, 100 mass % or less. More specifically, its lower limit may preferably be typically 5 mass % or more, or 10 mass % or more, or 15 mass % or more, or 20 mass % or more, or 25 mass % or more, or 30 mass % or more. Its upper limit is not limited, but may be 100 mass % or less, or 90 mass % or less, or 80 mass % or less.

When analyzed by the AOAC.2011.25 method (Japanese Standard Tables of Food Composition, 2020 edition (8th revision)), the ratio of the content of high molecular weight water-soluble dietary fiber to the total content of water-soluble dietary fiber may preferably be within a predetermined range. Specifically, the ratio of the content of high molecular weight water-soluble dietary fiber to the total content of water-soluble dietary fiber is not limited, but may be within the range of 50 mass % or more, while the upper limit may preferably be, although is not particularly limited to, 100 mass % or less. More specifically, its lower limit may preferably be typically 50 mass % or more, or 55 mass % or more, or 60 mass % or more, or 65 mass % or more, or 70 mass % or more. Its upper limit is not limited, but may be 100 mass % or less, or 90 mass % or less.

The swollen composition of the present invention may preferably be characterized in that the content of plant viscous component (especially plant polysaccharides) is within a predetermined range. Specifically, the plant polysaccharides content in the swollen composition of the present invention in terms of wet mass basis may be within the range of 0.1 mass % or more, while the upper limit is not restricted, but may be less than 40 mass %. More specifically, its lower limit in terms of wet mass basis may preferably be typically 0.1 mass % or more, preferably 0.2 mass % or more, or 0.3 mass % or more, or 0.4 mass % or more, or 0.5 mass % or more, or 0.8 mass % or more, or 1.0 mass % or more, or 2.0 mass % or more, or 3.0 mass % or more, or 4.0 mass % or more. On the other hand, its upper limit is not particularly limited, but may be typically 40 mass % or less, or 35 mass % or less, or 30 mass % or less, or 25 mass % or less, or 20 mass % or less, in terms of wet mass basis. Examples of the methods for measuring the plant polysaccharide content in a composition include a method of decomposing polysaccharides into monosaccharides and quantifying the amount of monosaccharides by high-performance liquid chromatography (HPLC). An exemplary method for degrading polysaccharides to monosaccharides is hydrolysis by adding trifluoroacetic acid (TFA). Specifically, 1M TFA can be added in a 2-fold amount to a subject to be hydrolyzed (solid content) to completely hydrolyze it at 105°C for 3 hours.

The plant viscous component (especially plant polysaccharides) to be contained in the swollen composition of the present invention may preferably be characterized in that its viscosity as measured under predetermined conditions satisfies a predetermined range. Specifically, when 4 mass % aqueous solution of plant polysaccharides is subjected to measurement of viscosity using a type B viscometer (rotor No.4) under measurement conditions of 4°C at 60rpm, pH4, the resulting viscosity may preferably be, although is not limited to, within the range of more than 200 cP, while the upper limit may preferably be, although is not particularly limited to, less than 30000 cP. More specifically, its lower limit is not limited, but may preferably be more than 200 cP, or 300 cP or more, or 400 cP or more, or 500 cP or more, or 1000 cP or more, or 2000 cP or more, or 3000 cP or more, or 4000 cP or more, or 5000 cP or more. Its upper limit is not limited, but may be 30000 cP or less, or 20000 cP or less, or 10000 cP or less, or 5000 cP or less.

The origin of the plant viscous component (especially plant polysaccharides) to be contained in the swollen composition of the present invention is not particularly restricted, and may be either derived from various naturally-occurring materials such as edible plants or a synthesized product. When it is derived from a naturally-occurring material, plant polysaccharides contained in various materials may be isolated and purified before being used, or various material containing plant polysaccharides may be used as such. Specifically, plant polysaccharides in the state of being contained in various edible plants may preferably be used. Examples of such edible plants containing plant polysaccharides include the seed skin of edible wild plant psyllium (also referred to as psyllium seed skin or psyllium husk) as a dietary fiber-localized part, preferably a treated product of the seed skin of psyllium (psyllium husk) with an enzyme (e.g., cellulase, pectinase, and xylanase) or an acid, since it may help facilitate the swelling of the swollen composition and provide the resulting composition with viscoelasticity (pull) characteristic of starch network. The details of the dietary fiber-localized part of psyllium and its enzyme treatment.

The plant viscous component (especially plant polysaccharides) to be contained in the swollen composition of the present invention may preferably be characterized in that its soluble dietary fiber content is within a predetermined range. Specifically, the soluble dietary fiber content of the plant polysaccharides contained in the swollen composition of the present invention is not limited, but may preferably be within the range of 5 mass % or more, while the upper limit may preferably be, although is not particularly limited to, 100 mass % or less, in terms of wet mass basis. More specifically, its lower limit is not limited, but may preferably be 5 mass % or more, or 10 mass % or more, or 15 mass % or more, or 20 mass % or more. Its upper limit is not limited, but may be 100 mass % or less, or 90 mass % or less, or 80 mass % or less.

<u>[Ratio of peak viscosity to breakdown viscosity by RVA ([Value β] / [Value α])]</u>

The swollen composition of the present invention may preferably be characterized in that when the composition is measured in accordance with <Method a> with a rapid visco-analyzer (RVA ), the ratio of the peak viscosity during temperature decreasing step (a2) [Value β] to the breakdown viscosity during temperature increasing step (a1) [Value α] ([Value β] / [Value α]) is a predetermined value or less.

<Method a>

As a measurement sample, 32 g of 22 mass % aqueous slurry of a crushed product of the composition is subjected to measurement using a rapid visco-analyzer with carrying out steps (a1) and (a2) below.

(a1) Temperature increasing step, in which the temperature of the measurement sample is increased from 50 °C to 140 °C at an increasing rate 12 °C/min and then maintained for 3 minutes.
(a2) Temperature decreasing step, in which the temperature is decreased from 140 °C to 50 °C at a decreasing rate of 12 °C/min.

The rapid visco-analyzer (RVA) to be used in <Method a> above is a device that measures the irreversible viscosity profile of a sample as it is stirred and heated up and down under a given temperature profile. Any device that can raise the temperature of the object to 95°C can be used as the RVA, a specific example being RVA 4800 manufactured by Perten. The measuring principle of this device is that a sample is placed in an aluminum cup (approx. 70 mL volume) for measurement, and while raising and lowering the temperature under a predetermined temperature profile, the sample is agitated by rotating two paddles (blades) of about 13 mm x 19 mm, and its viscosity characteristics are measured based on the resistance applied to the paddles. If the viscosity of the sample is high, the resistance applied to the paddles will be high, while if the viscosity is low, the resistance will be low. This makes it possible to measure the viscosity characteristics of the sample based on the resistance applied to the paddles.

When RVA measurement is carried out with changing the temperature at an increasing rate of 6 °C/min, the breakdown viscosity (cP) during temperature increasing step (a1) (also referred to as [Value α]) and the peak viscosity (cP) during temperature increasing step (a2) (also referred to as [Value β]) are measured specifically in accordance with the procedure below. A sample of the composition with a dry mass of 7.0g is pulverized (until it has a size of, e.g., 100 mesh pass (sieve opening: 150 μm) and 120 mesh on (sieve opening: 125 μm)), then placed in an aluminum cup for RVA measurement, combined with distilled water to prepare 22 mass % aqueous slurry of the sample (also referred to as "aqueous slurry of the crushed composition" or "sample aqueous slurry") with a total mass at 32g, and then subjected to the RVA viscosity measurement according to [Method a] above. The measurement of the 22 mass % aqueous slurry of the crushed composition is started at 50°C, and the revolving speed is set at 960 rpm from the start of measurement to 10 seconds after the start of measurement, and then at 160 rpm from 10 seconds after the start of measurement to the end of measurement. The temperature is retained at 50°C for one minute, then increased from 50 °C to 140 °C at an increasing rate of 6 °C/min as temperature increasing step (a1), and then retained at 140°C for 3 minutes, while the breakdown viscosity (cP) [Value α] is measured. Next, the temperature is decreased from 140 °C to 50 °C at a decreasing rate of 12 °C/min, while the peak viscosity (cP) [Value β] are measured.

The swollen composition of the present invention may preferably be characterized in that the ratio of the peak viscosity during temperature increasing step (a2) [Value β] to the breakdown viscosity during temperature increasing step (a1) [Value α] ([Value β] / [Value α]) obtained via the above procedure is within a predetermined range. Specifically, the [Value β] / [Value α] value of the swollen composition of the present invention may be within the range of typically 100 or less, while its lower limit is not particularly limited, but may be 0. More specifically, its upper limit may preferably be typically 100 or less, preferably 90 or less, or 80 or less, or 70 or less, or 65 or less, or 60 or less, or 50 or less, or 40 or less, or 30 or less, or 20 or less. If this value exceeds the aforementioned upper limit, it may be difficult for the swollen composition to swell, or it may be difficult to impart the viscoelasticity (pull) characteristic of the starch network. If the viscosity of the composition is so high that [value β] cannot be measured and the ratio of [Value β] / [Value α] cannot be calculated, the ratio of [value β]/[value α] shall be considered to exceed the aforementioned limits and be therefore unsuitable. On the other hand, its lower limit is not particularly limited, but may be 0, or 0 or more, or 0.5 or more.

In the swollen composition of the present invention, the breakdown viscosity during temperature increasing step (a1) [Value α] obtained via the above procedure is not limited, but may be within the range of 1 cP or more 1000 or less. Specifically, the lower limit of [Value α] may be, although is not limited to, 1 cP or more, or 5 cP or more, or 10 cP or more, or 20 cP or more, or 30 cP or more, or 50 cP or more. The upper limit of [Value α] is also not restricted, but may be 1000 cP or less, or 800 cP or less, or 600 cP or less. On the other hand, If the viscosity of the composition is so high that [Value α] cannot be measured, [Value α] shall be considered to exceed the aforementioned limits and be therefore unsuitable.

In the swollen composition of the present invention, the peak viscosity during temperature increasing step (a2) [Value β] obtained via the above procedure is not restricted, but may be within the range of 10 cP or more 10000 cP or less. Specifically, the lower limit of [Value β] may be, although is not limited to, 10 cP or more, or 30 cP or more, or 50 cP or more. The upper limit of [Value β] is also not restricted, but may be 10000 cP or less, or 8000 cP or less, or 7000 cP or less, or 6000 cP or less, or 5000 cP or less, or 4000 cP or less, or 3000 cP or less. On the other hand, If the viscosity of the composition is so high that [Value β] cannot be measured, [Value β] shall be considered to exceed the aforementioned limits and be therefore unsuitable.

The term "breakdown" as used herein refers to the phenomenon wherein in the measurement of a subject using an RVA in accordance with <Method a>, which includes the temperature increasing step (hereinafter also referred to as "step a1" or "a1") of increasing the temperature of the subject from 50 °C to 140 °C at an increasing rate of 12 °C/min and then maintaining it for 3 minutes, the viscosity decreases after reaching the maximum viscosity (cP). The term "breakdown viscosity (cP) ([Value α])" as used herein refers to the minimum viscosity (cP) after reaching the maximum viscosity (cP) until the end of measurement according to [Method a]. Therefore, if no viscosity reduction occurs from [Value α], the maximum viscosity (cP) and [Value α] will be the same value, and if a slight viscosity reduction occurs, the ratio of [Value α] / the maximum viscosity (cP) will be close to 1.

When a plurality of breakdowns are observed during the temperature increasing step, in which the temperature is increased from 50 °C to 140 °C at an increasing rate of 12 °C/min and then retained for 3 minutes, then the breakdown viscosity may be determined based on the breakdown observed during the period in which the temperature is increased from 80 °C to 140 °C at an increasing rate of 12 °C/min and then retained for 3 minutes, and the minimal viscosity value should be adopted. However, even when the differential value of viscosity transition (or viscosity) turns from decreasing to increasing, if it can be evaluated, from the viscosity transition spectrum as a whole, as merely a change in the baseline, such as in the case when the differential value of viscosity transition (or viscosity) turns from increasing to decreasing again immediately after the decrease, such viscosity shall not be considered as breakdown viscosity.

The term "peak viscosity (cp)" ("Value β") as used herein refers to, when the differential value of viscosity transition as measured by RVA first increases and then decreases and then increases again during a temperature decreasing step in which the temperature is decreased from 140 °C to 50 °C at a decreasing rate of 12 °C/min (also referred to as "step a2" or "a2"), the viscosity (cP) at which the differential value changes from increasing to decreasing, and typically refers to, when the viscosity as measured by RVA first increases and then decreases and then increases again during the temperature increase phase a1, the viscosity (cP) at which the viscosity changes from increasing to decreasing. This viscosity is an indicator that reflects the heat resistance of plant viscous component (especially plant polysaccharides). For example, if the viscosity first shows an increasing trend, then remains constant but not decreases, and then increases again, the peak viscosity is the viscosity at the point when the differential value of viscosity transition changes from increasing to decreasing, that is, when the viscosity changes from increasing to remaining constant. However, even when the differential value of viscosity transition (or viscosity) turns from increasing to decreasing, if it can be evaluated, from the viscosity transition spectrum as a whole, as merely a change in the baseline, such as in the case when the differential value of viscosity transition (or viscosity) turns from decreasing to increasing again immediately after the decrease, such viscosity shall not be considered as peak viscosity.

[Characteristics on molecular weight distribution curve $MWDC_{3.0\text{-}6.0}$]

The swollen composition of the present invention may preferably be characterized in that when the composition is subjected to [Procedure b] below and the resulting product is subjected to measurement under [Condition B] below to obtain a molecular weight distribution curve in an interval with molecular weight logarithms of 3.0 or more but less than 6.0 ($MWDC_{3.0\text{-}6.0}$), the following features are satisfied.

[Procedure b] The composition is crushed, and 5 mass % aqueous suspension of the composition is treated with 0.003 mass % of $\alpha$-amylase and 0.003 mass % of glucoamylase, an ethanol-insoluble and dimethyl sulfoxide-soluble component is obtained.

[Condition B] A product obtained by treating the composition in accordance with the [Procedure b] above is dissolved into 1M aqueous solution of sodium hydroxide at a concentration of 0.30 mass % and allowed to stand at 37 °C for 30 minutes, then combined with an equal volume of water and an equal volume of eluent and subjected to filtration with a 5-$\mu$m filter, and 5mL of the filtrate is then subjected to gel filtration chromatography to thereby obtain a molecular weight distribution.

The terms "molecular weight distribution" or "molecular weight distribution curve" used herein refers to a distribution diagram obtained by plotting the logarithms of molecular weights on the horizontal axis (x-axis) and the percentage (%) of the measured value at each logarithm of molecular weight against the total RI detector measured values over the entire measurement range on the vertical axis (y-axis). In addition, when the composition is subjected to the [Procedure b] above and ingredient and the resulting product is analyzed under the [Condition B] below to determine a molecular weight distribution curve, the area under the curve is calculated from the molecular weight distribution curve as follows. That is, after numerically correcting the entire curve so that the lowest value in the measurement range is 0, the area under the curve is calculated by plotting the logarithms of molecular weights on the horizontal axis (X-axis) with even intervals. This allows proper evaluation of the low molecular weight fraction (the fraction around AUC1), which has a large quality effect but is underestimated in molecular weight conversion. Furthermore, using the property that the molecular weight logarithm is proportional to the elution time, each elution time is converted to a mass molecular weight logarithmic value (also referred to as the molecular weight logarithm or the mass molecular weight logarithm). Conversion of the elution time (more specifically, the elution time obtained by analysis at an oven temperature of 40°C, at a flow rate of 1 mL/min, and with a unit time of 0.5 seconds) to the molecular weight logarithm in this manner allows for measurement data in which the molecular weight logarithms are distributed at even intervals.

*[Procedure b]:

[Procedure b] is a procedure in which the composition is subjected to pulverization (or pulverization and degreasing treatment), and 5 mass % aqueous suspension of the pulverized composition is treated with 0.003 mass % of $\alpha$-amylase and 0.003 mass % of glucoamylase at 37°C for 20 hours to thereby obtain an ethanol-insoluble and dimethyl sulfoxide-soluble component. The technical significance of the [Procedure b] is to prevent column blockage during gel filtration chromatography and improve the accuracy and reproducibility of the analysis by obtaining a component in which starch has been decomposed with amylase and glucoamylase, and the concentration of polysaccharides other than starch (e.g., polysaccharides derived from psyllium seeds) has been increased via purification using the ethanol-insoluble and dimethyl sulfoxide-soluble properties of non-starch polysaccharides (this component may also be referred to herein as "the component obtained via the treatment under [Procedure b]").

The method for crushing the composition after the thermostatic treatment in this [Procedure b] may be any method that can sufficiently homogenize the composition, an example of which is to crush the composition at 25,000 rpm for 30 seconds using a homogenizer NS52 (Microtech Nichion, Inc.).

When a composition with a particularly high lipid content (e.g., a composition with a total oil content of at least 10 mass % or more in terms of dry mass, particularly at least 15 mass % or more, particularly at least 20 mass % or more in terms of dry mass) is subjected to this [Procedure b], it may optionally be preferable to carry out degreasing treatment with hexane from the viewpoint of preventing column blockage. Such treatment may be performed, e.g., by (i) treating the pulverized composition with 20 times the volume of hexane (CAS 110-54-3, FUJIFILM Wako Pure Chemicals Co.) followed by mixing, and then (ii) centrifuging the mixture (at 4300 rpm for 3 min: with a swing rotor) to remove the supernatant. It is preferable to perform the above steps (i) to (ii) twice from the viewpoint of not leaving residual fats and oils.

The extraction of ethanol-insoluble and dimethyl sulfoxide-soluble components from the 5 mass % aqueous suspension of the pulverized composition (or pulverized defatted composition) treated with 0.003 mass % of $\alpha$-amylase and 0.003 mass % of glucoamylase at 37°C for 20 hours in this [Procedure b] is not limited, but may be carried out, for example, as follows. (i) After having undergone pulverizing and optional degreasing treatment, the treated composition is mixed with 20 times the volume of distilled water relative to the mass of the initially-used crushed composition, then mixed with α-amylase (Sigma, α-Amylase from Bacillus sp., Product No. A6380) and glucoamylase (Toyobo, Glucoamylase, product number 49811-26) so that their contents are adjusted to 0.003 mass% each, and the mixed suspension is thermostatically treated at 90°C for 15 minutes with stirring, and then treated at 37°C for 20 hours. Then, 0.2 g of NaCl is added to the treated solution, mixed, and centrifuged (treated at 4000 rpm for 3 minutes using a swinging rotor) to collect the supernatant (a solution excluding the enzyme-treated pulverized composition; also referred to as "α-amylase- and glucoamylase-treated solution"). Then, (ii) twice the volume of 99.5% ethanol is added to the resulting α-amylase- and glucoamylase-treated solution, mixed, and centrifuged (using a swinging rotor at 4000 rpm for 3 minutes) to collect the precipitate fraction as an ethanol-insoluble component. Next, (iii) the collected precipitate fraction is mixed with 15 times the volume of dimethyl sulfoxide (CAS 67-68-5, FUJIFILM Wako Pure Chemicals Co.) based on the initial volume of the crushed composition. The mixture is dissolved by isothermal treatment at 90°C for 15 minutes with stirring, and the dissolved solution after isothermal treatment is centrifuged (at 12,000 rpm for 3 minutes using an angle rotor). The resulting supernatant (Dimethyl sulfoxide solution in which the dimethyl sulfoxide soluble component in the composition is dissolved; hereinafter also referred to as "dimethyl sulfoxide solution") is collected to obtain dimethyl sulfoxide solution. Next, (iv) the resulting dimethyl sulfoxide solution is mixed with three times the volume of 99.5% ethanol, and the mixture is centrifuged (at 4000 rpm for 3 minutes using a swinging rotor). The precipitate fraction is collected as the ethanol-insoluble component. Then, (iii) the above (ii) is repeated three times, and the final precipitate obtained is dried under reduced pressure, whereby the ethanol-insoluble and dimethyl sulfoxide-soluble component can be obtained from the crushed composition (or crushed and degreased composition).
s

*[Condition B]:

The [Condition B] means a procedure in which the product obtained by treating the composition in accordance with the [Procedure b] above is dissolved into 1M aqueous solution of sodium hydroxide at a concentration of 0.30 mass % and allowed to stand at 37 °C for 30 minutes, then combined with an equal volume of water and an equal volume of eluent and subjected to filtration with a 5-μm filter, and 5mL of the filtrate is then subjected to gel filtration chromatography to measure molecular weight distribution.

The technical significance of this [Condition B] is to prevent column blockage during gel filtration chromatography by removing insoluble coarse foreign matter from polysaccharides dissolved in water under alkaline conditions by filtration, thereby improving the accuracy and reproducibility of the analysis.

*Gel filtration chromatography:

According to the present invention, the component obtained by treatment the composition according to [Procedure b] is subjected to gel filtration chromatography on the aforementioned filtrate obtained under [Condition b], and the molecular weight distribution in the interval between 3.0 and 6.0 in the molecular weight logarithm is measured. The resulting filtrate is then subjected to gel filtration chromatography to thereby determine a molecular weight distribution in an interval with molecular weight logarithms of 3.0 or more but less than 6.0. The thus-obtained molecular weight distribution curve is then analyzed after correcting the data so that the lowest value is zero, to thereby obtain a molecular weight distribution curve in an interval with molecular weight logarithms of 3.0 or more but less than 6.0 ($MWDC_{3.0-6.0}$). Gel filtration chromatography conditions may preferably be set appropriately such that these values can be obtained. Specifically, the signal intensity ratio for each molecular weight logarithm range is calculated using the total signal intensity (RI detector measurement) of the entire molecular weight distribution curve in the interval with interval with molecular weight logarithms of 3.0 or more but less than 6.0 as the denominator, and the mass-averaged molecular weight is calculated by multiplying the molecular weights converted from the molecular weight logarithms over the entire interval by the signal intensity percentage and then summing the multiplied values. A molecular weight distribution curve in an interval with molecular weight logarithms of 3.5 or more but less than 6.5 ($MWDC_{3.5-6.5}$) can be obtained in a similar manner.

For this reason, in the present invention, it is preferable to use the combination of a gel filtration column having a molecular exclusion limit (Da) logarithm of 3.0 or more but less than 6.0 and a gel filtration column having a molecular exclusion limit (Da) logarithm of 6.0 or more as gel filtration columns for gel filtration chromatography. It is more preferable to adopt a column configuration in which these plural gel filtration columns with different molecular exclusion limits within the aforementioned ranges are connected in series (in tandem) from the one with the highest molecular exclusion limit to the one with the lowest, in order from the upstream of analysis. Such a column configuration allows for the starch with relatively small molecular weight logarithms (3.0 or more but less than 6.0) to be separated from the starch with relatively large molecular weight logarithms (6.0 or more), and for each parameter to be measured appropriately.

A specific example of such a combination of gel filtration columns is the following combination of four columns connected in tandem. When measuring $AUC_{5.0-6.5}$, it may be preferable to use a combination of the 4 columns below connected in tandem.

*TOYOPEARL HW-75S (made by Tosoh Co., exclusion limit molecular weight (logarithm):7.7Da, average pore diameter 100 nm or more, Φ2cm x 30cm): two columns.
*TOYOPEARL HW-65S (made by Tosoh Co., exclusion limit molecular weight (logarithm):6.6Da, average pore diameter 100 nm, Φ2cm x 30cm): one column.
*TOYOPEARL HW-55S (made by Tosoh Co., exclusion limit molecular weight (logarithm):5.8Da, average pore diameter 50 nm, Φ2cm x 30cm): one column.

When measuring a molecular weight distribution curve in an interval with molecular weight logarithms of 3.0 or more but less than 6.0 (hereinafter referred to as "$MWDC_{3.0-6.0}$"), the molecular weight logarithm of the peak apex at 1stMP, and the molecular weight logarithm of the peak apex at 2ndMP, it may be preferable to use a combination of the 4 columns below connected in tandem.

*TOYOPEARL HW-65S (made by Tosoh Co., exclusion limit molecular weight (logarithm): 6.6Da, average pore diameter 100nm, Φ2cm×30cm): one column.
*TOYOPEARL HW-55S (made by Tosoh Co., exclusion limit molecular weight (logarithm): 5.8Da, average pore diameter 50nm, Φ2cm×30cm): one column.
*TOYOPEARL HW-50S (made by Tosoh Co., exclusion limit molecular weight (logarithm): 4.9Da, average pore diameter 12.5nm, Φ2cm×30cm): two column.

The eluting agent for gel filtration chromatography may be, although not restricted, 0.05M NaOH/0.2% NaCl.

The conditions for gel filtration chromatography may be, although not restricted, such that the analysis can be carried out at an oven temperature of 40°C, at a flow rate of 1 mL/min, and with a unit time of 0.5 seconds.

The detection equipment for gel filtration chromatography may be, although not restricted, an RI detector (RI-8021 manufactured by Tosoh Co., Ltd.).

Data analysis methods for gel filtration chromatography are not limited, but specific examples include the following. Measurement values obtained from the detection instrument within the molecular weight logarithmic range to be measured (i.e., 3.0 or more but less than 6.0) are corrected so that the lowest value within the measurement range is zero. A calibration curve is prepared from the peal top elution times of two linear standard pullulan markers for size exclusion chromatography with a peak top molecular weight of 1660000 and a peak top molecular weight of 380000 (e.g., P400 (DP2200, MW380000) and P1600 (DP9650, MW1660000), both manufactured by Showa Denko Co.). Using the property that the molecular weight logarithm is proportional to the elution time, each elution time is converted to a mass molecular weight logarithmic value (also referred to as the molecular weight logarithm or the mass molecular weight logarithm). Conversion of the elution time (more specifically, the elution time obtained by analysis at an oven temperature of 40°C, at a flow rate of 1 mL/min, and with a unit time of 0.5 seconds) to the molecular weight logarithm in this manner allows for measurement data in which the molecular weight logarithms are distributed at even intervals. In addition, the sum of the measurement values obtained at all elution times within a given molecular weight logarithmic range (e.g., 3.5 or more but less than 6.0) of the measurement target is set at 100, and the measured value at each elution time (molecular weight log) is expressed as a percentage. This allows for the molecular weight distribution of the measured sample (X-axis: molecular weight logarithm, Y-axis: percentage (%) of the measured value at each molecular weight logarithm to the total of the measurement values from the RI detector over the entire measurement range) to be calculated, and for a molecular weight distribution curve to be created. A molecular weight distribution curve in an interval with molecular weight logarithms of 3.5 or more but less than 6.5 ($MWDC_{3.5-6.5}$) can be determined in a similar manner.

The swollen composition of the present invention may preferably be characterized in that according to the molecular weight distribution curve $MWDC_{3.0-6.0}$, the ratio of the molecular weight logarithm value of the peak apex at 2ndMP (also referred to as "2ndMP molecular weight logarithm value") to the molecular weight logarithm value of the peak apex at 1stMP (also referred to as "1stMP molecular weight logarithm value") (hereinafter also referred to as "{(2ndMP molecular weight logarithm value) / (1stMP molecular weight logarithm value)}" or "2ndMP/1stMP") is within a predetermined range, where "1stMP" refers to the peak with the highest molecular weight logarithm and "2ndMP" refers to the peak with the second highest molecular weight logarithm. Specifically, the 2ndMP/1stMP of the swollen composition of the present invention may be within the range of typically 95 % or less, while its lower limit is not particularly limited, but may be 50 % or more. More specifically, its upper limit may preferably be typically 95 % or less, more preferably 94 % or less, or 93 % or less, or 92 % or less, or 90 % or less, or 88 % or less, or 87 % or less, or 86 % or less, or 85 % or less. When this value exceeds the upper limit, it may be difficult for the swollen composition to swell, or it may be difficult to impart the viscoelasticity (pull) characteristic of the starch network. On the other hand, its lower limit is not particularly limited, but may be typically 50 % or more, or 60 % or more, or 65 % or more.

In the swollen composition of the present invention, the 1stMP molecular weight logarithm value of $MWDC_{3.0-6.0}$

obtained in accordance with the procedure mentioned above is not limited, but may be within the range of 5.0 or more but less than 6.0. Specifically, the lower limit of the 1stMP molecular weight logarithm value may be, although is not limited to, 5.0 or more, or 5.1 or more, or 5.1 or more, or 5.2 or more, or 5.3 or more. The upper limit of the 1stMP molecular weight logarithm value is also not restricted, but may be less than 6.0, or 5.9 or less, or 5.8 or less. The 1stMP is considered to be a value that reflects a relatively large molecular weight fraction of the plant viscous component (especially plant polysaccharides, preferably the seed skin of psyllium) obtained by subjecting the composition to the [Procedure b] mentioned above. It may be desirable for the composition of the present invention to have such a relatively large molecular weight fraction at the lower limit mentioned above.

In the swollen composition of the present invention, the 2ndMP molecular weight logarithm value of $MWDC_{3.0-6.0}$ obtained in accordance with the procedure mentioned above is not limited, but may be within the range of 3.5 or more but 5.5 or less. Specifically, the lower limit of the 2ndMP molecular weight logarithm value may be, although is not limited to, 3.5 or more, or 3.8 or more, or 4.0 or more, or 4.2 or more. The upper limit of the 2ndMP molecular weight logarithm value is also not restricted, but may be 5.5 or less, or 5.4 or less, or 5.3 or less. The 2ndMP is considered to be a value that reflects a relatively small molecular weight fraction of the plant viscous component (especially plant polysaccharides, preferably the seed skin of psyllium) obtained by subjecting the composition to the [Procedure b] mentioned above. It may be desirable for the composition of the present invention to have a large difference between 2ndMP and 1stMP (i.e., a small 2ndMP/1stMP value), where 1stMP is considered to be a value that reflects a relatively large molecular weight fraction as mentioned above. This may make it easier to obtain the effects of the present invention or to form bubbles of sufficient size in the composition, resulting in a lighter texture. Specifically, when the 1stMP molecular weight logarithm value is, for example, 5.5, the 2ndMP molecular weight logarithm value may preferably be 3.5 rather than 5.0. Examples of the methods for adjusting the 2ndMP molecular weight logarithm value include, although are not limited to, enzymatic treatment performed in parallel with the fermentation process by adding enzymes such as cellulase, pectinase or xylanase to the dough before fermentation, or using plant polysaccharides (especially psyllium seed skin) that have been enzyme-treated beforehand as raw material.

The swollen composition of the present invention may preferably be characterized in that in the molecular weight distribution curve $MWDC_{3.0-6.0}$, the ratio of the sum of the detection intensity of 1stMP and the detection intensity of 2ndMP to the detection intensity at a molecular weight logarithm of 3.5 (hereinafter also referred to as "(1stMP+2ndMP) / (molecular weight logarithm 3.5)") is within a predetermined range. Specifically, the (1stMP+2ndMP) / (molecular weight logarithm 3.5) of the swollen composition of the present invention may be within the range of typically 0.1 or more, while its upper limit is not particularly limited, but may be 30 or less. More specifically, its lower limit may preferably be 0.1 or more, or 0.2 or more, or 0.3 or more, or 0.5 or more, or 1 or more, or 2 or more, or 3 or more, or 4 or more, or 5 or more. If this value is below the lower limit, it may be difficult for the swollen composition to swell, or it may be difficult to impart the viscoelasticity (pull) characteristic of the starch network. On the other hand, its upper limit is not particularly limited, but may be 30 or less, or 25 or less, or 20 or less.

[Features relating to molecular weight distribution curve $MWDC_{3.5\text{-}6.5}$]

The swollen composition of the present invention may preferably be characterized in that when the composition is subjected to [Procedure d] below and the resulting product is subjected to measurement under [Condition D] below to obtain a molecular weight distribution curve in an interval with molecular weight logarithms of 3.5 or more but less than 6.5 ($MWDC_{3.5-6.5}$), the following requirements are satisfied.

> [Procedure d] The composition is crushed, and an ethanol-insoluble and dimethyl sulfoxide-soluble component is obtained.
>
> [Condition D] When the composition is treated via [Procedure d] above and dissolved into 1M aqueous solution of sodium hydroxide at a concentration of 0.30 mass %, and allowed to stand at 37 °C for 30 minutes, then combined with an equal volume of water and an equal volume of eluent and subjected to filtration with a 5-μm filter, and the filtrate is then subjected to gel filtration chromatography to thereby obtain a molecular weight distribution.

*[Procedure d]:

[Procedure d] is a procedure in which the composition is subjected to pulverization (or pulverization and degreasing treatment), and then an ethanol-insoluble and dimethyl sulfoxide-soluble ingredient is obtained. The technical significance of the [Procedure b] is to prevent column blockage during gel filtration chromatography and improve the accuracy and reproducibility of the analysis by obtaining a component that has been purified using the ethanol-insoluble and dimethyl sulfoxide-soluble properties of starch and has an increased starch concentration (also referred to as "the product from the treatment of [Procedure d] above").

The contents of [Condition D] are the same as those of [Condition B] explained above, so the explanation thereof is omitted.

Specifically, the swollen composition of the present invention may preferably be characterized in that when the composition is subjected to [Procedure d] below and the resulting product is subjected to measurement under [Condition D] below to obtain a molecular weight distribution curve $MWDC_{3.5-6.5}$, the logarithm of the mass average molecular weight and the ratio of the area under the curve in an interval with molecular weight logarithms of 5.0 or more but less than 6.5 to the area under the entire molecular weight distribution curve (the area under the molecular weight distribution curve in an interval with molecular weight logarithms of 3.5 or more but less than 6.5) (hereinafter also referred to as "$AUC_{5.0-6.5}$") satisfy the predetermined conditions. Although the principle behind this is unknown, it is deemed that the amylose in the starch (which is presumably contained in a fraction in an interval with molecular weight logarithms of 5.0 or more but less than 6.5) is degraded in part or all of the relatively high molecular weight amylose to lower molecular weight amylose, which may help provide the resulting composition with texture characteristic of swollen food that can be easily felt, and prevent the resulting composition from shrinking over time after swelling. The $AUC_{5.0.6.5}$ value of the swollen composition of the present invention is not limited, but may preferably be within the range of 1 % or more but 70 % or less. More specifically, the lower limit of the $AUC_{5.0.6.5}$ value is not limited, but may preferably be 1 % or more, or 3 % or more, or 5 % or more, or 10 % or more. Its upper limit is not limited, but may be 70 % or less, or 67 % or less, or 65 % or less, or 63 % or less, or 61 % or less, or 58 % or less, or 55 % or less.

[Starch grain structures]

The swollen composition of the present invention may preferably be characterized by having starch grain structures that have been disrupted. Specifically, the swollen composition of the present invention may preferably be characterized in that when 6% suspension of a crushed product of the composition is observed, the number of starch grain structures is within a predetermined range. Specifically, in the swollen composition of the present invention, the number of starch grain structures may preferably be within the range of $0/mm^2$ or more but $300/mm^2$ or less. More specifically, its upper limit may preferably be typically $300/mm^2$ or less, or $250/mm^2$ or less, or $200/mm^2$ or less, or $150/mm^2$ or less, or $100/mm^2$ or less, or $50/mm^2$ or less, or $40/mm^2$ or less, or $30/mm^2$ or less, or $20/mm^2$ or less, or $10/mm^2$ or less, or $5/mm^2$ or less. On the other hand, its lower limit is not particularly limited, but may be typically $0/mm^2$, or $0/mm^2$ or more.

The term "starch grain structures" as used herein means iodine-stained structures with circular shapes of about 1 to 50 μm in diameter in a planar image, and can be observed, for example, by preparing 6% aqueous suspension of crushed product of the composition and observing the suspension under magnified view. Specifically, 6% suspension of the composition powder is prepared by sieving crushed product of the composition through a sieve with 150 μm apertures, and 3 mg of the 150-μm pass composition powder is suspended in 50 μL of water. This suspension is then placed on a slide to obtain a prepared slide, which is observed under a phase contrast microscope with polarized light or under an optical microscope with iodine staining. The magnification factor is not restricted, but may be 100 times or 200 times. When the distribution of starch grain structures on the prepared slide is uniform, the percentage of starch grain structures in the entire prepared slide can be estimated by observing a representative field of view. On the other hand, when the distribution of starch grain structures on the prepared slide is found to be biased, a finite number of fields of view (e.g., two or more, e.g., five or ten) can be observed, and the observation results can be added together to obtain a measurement for the entire preparation. The reason for this is not clear, but it is estimated that the starch grains are destroyed when the pores in the dough composition expands under highly hydrated conditions (e.g., with a dry mass basis moisture content of 40 mass % or more, or 50 mass % or more, or 60 mass % or more, and 250 mass % or less, or 200 mass % or less).

[Features relating to pores]

The swollen composition of the present invention may preferably be characterized in that when at least one frozen section A of the composition is observed in accordance with the predetermined procedure C, the pores in the frozen section satisfy predetermined conditions. Specifically, the composition is frozen at -25°C and cut along a cut plane A composition frozen section A ([Procedure C]). A cross-section image of the resulting frozen section A is observed, and pores with areas of 10000 $\mu m^2$ or more are measured to determine the following parameters.

When pores in a cross-section of the frozen section A of the swollen composition of the present invention are observed as such, the ratio of the weighted average area [$\mu m^2$] to the weighted average perimeter [μm], i.e., {(weighted average area [μm]) / (weighted average perimeter [$\mu m^2$])} may preferably be within the range of 100 or more but 10000 or less. More specifically, its lower limit is not limited, but may preferably be typically 100 more, preferably 120 or more, or 130 or more, or 150 or more, or 180 or more, or 200 or more, or 230 or more, or 250 or more, or 280 or more, or 300 or more. On the other hand, its upper limit is not particularly limited, but may be typically 10000 or less, or 9000 or less, or 8000 or less, or 7000 or less, or 6000 or less.

In the present invention, the geometrical characteristics of pores in a composition can be determined based on a two-dimensional cross-sectional image of the composition (e.g., an X-ray CT scan image, which allows non-destructive evaluation of the composition's internal pore shapes). Specifically, an image can be acquired and evaluated as a two-dimensional cross-sectional image by a digital camera.

In the present invention, the "perimeter" of a certain pore in a composition represents the value obtained by calculating the length of the rounded corners of the pore on a two-dimensional cross-sectional image of the composition in terms of the number of pixels, with the length of one side of a pixel as "one pixel." Pores that do not have intricate internal contours have smaller "perimeters." Specifically, the "perimeter" of a pore is calculated by, in principle, summing up, among the pixels that make up the pore image (2 pixels x 2 pixels or more), the number of pixels that are not in contact with other pixels and form the contour of the pore. However, as an exception, for pixels that are in contact with other pixels only on two orthogonal sides, the diagonal length is calculated as the number of pixels to round off the corners. Accordingly, a composition having pores with small irregularities have a relatively large pore area relative to their perimeter, resulting in a relatively large ratio of {(weighted average area)/(weighted average perimeter)}.

The "area" of a certain pore in a frozen section of a composition as used herein refers to an area equivalent to the total number of pixels constituting the pore on a two-dimensional cross-sectional image of the composition. All pixels overlapping the contour of the pore shall be counted as pixels constituting the pore.

In the present invention, the "weighted average perimeter" of the pores in a frozen section of a composition can be calculated using the perimeter value of each pore as a weight, and the "weighted average area" of the pores in the frozen section of the composition can be calculated using the area of each pore as a weight. Specifically, the percentage of the measured value (pore area and pore perimeter) for each pore is calculated when the total of the measured values (pore area and pore perimeter) for all pores is 100. The percentage of each pore is further multiplied by the measured value (pore area and pore perimeter) of the pore as a weight. This multiplied value is calculated for each pore {(the square of the measured value of each pore) / (the sum of the measured values of all pores)}, and the sum of the calculated values of all pores is determined as the weighted average value. For any of the above parameters related to the shapes of pores, when analyzing a magnified image, the respective values can be converted to actual values by converting an image of known length (scale bar, etc.) into pixels.

A more specific method for determining the "weighted average perimeter" and "weighted average area" of pores in a frozen section of a composition is described below, taking a two-dimensional cross-sectional image of the composition obtained by a digital camera as an example. An image of a cross-sectional section of a compositional frozen section (e.g., 5 cm long, 5 cm wide, 2 cm high) is captured by, e.g., RX100III (DSC-RX100M3), manufactured by SONY, Inc. More specifically, images of three spots (e.g., 5 cm x 5 cm square) at different shooting angles are captured by, e.g., SONY RX100III (DSC-RX100M3). From the images thus obtained, a two-dimensional cross-sectional image (magnification magnified equally, pixel count 2,736 x 1,824) is generated and acquired.

The resulting image is grayscaled and binarized, and all pixel sets each of which consists of pixels that are white-cut (i.e., pixels corresponding to pores in the original photo) and are connected to each other at any of their four sides and is independent of other pixel sets are extracted as "pores," and their shapes, etc. are evaluated. Binarization is carried out using a discriminant analysis method to determine a threshold value so as to maximize the variance ratio of the within-class variance and between-class variance for the background and pattern regions when binarized. Specifically, the grayscaled image can be binarized using Particle Analysis ver. 3.5 (Nittetsu Technology, Inc.). Next, these pixel aggregates are screened for those that overlap in whole or in part on the outer edges of the field of view, and the remaining pixel aggregates are selected for analysis. If there are independent black pixels inside the set of white pixels (i.e., if there are spot-like dots, etc. inside the pore in the image), the area is calculated ignoring such pixels. For the selected pores, the pore perimeters and pore areas can be measured and calculated by the above procedure as parameters related to the shape of the pore area. The measurement and calculation of these parameters can be performed using various known image analysis software that can analyze shapes in an image.

When measuring porosity, etc., frozen sections prepared by the aforementioned method are imaged of the composition cross section using, for example, SONY's RX100III (DSC-RX100M3). More specifically, for example, images of three spots (e.g., 5 cm x 5 cm square) at different shooting angles are captured by the RX100III (DSC-RX100M3) manufactured by SONY. From the images thus obtained, a two-dimensional cross-sectional image (magnification magnified equally, pixel count 2,736 $\times$ 1,824) is generated and acquired. The total porosity and other properties of the interior of the composition can be measured by analyzing the images thus obtained. Specifically, the vertices of adjacent convexities in the composition image are connected by line segments so that they do not intersect the composition image at the shortest distance to draw an envelope perimeter. The envelope area surrounded by the obtained envelope perimeter (the number of pixels surrounded by the envelope perimeter) is then calculated, and the composition area (the number of pixels constituting the image of the solid composition other than pores, etc.) from the obtained envelope area to obtain the difference (total pore area). The ratio of this difference to the composition area (total pore area/composition area) is calculated as the total pore ratio. Accordingly, the term "pores" used herein refers to a concept that encompasses both open and closed pores.

The swollen composition of the present invention may preferably be characterized in that the ratio of the total area of pores in the frozen section A is within a predetermined range.

Specifically, when the frozen section A of the swollen composition of the present invention is observed, the ratio of the total area pores with areas exceeding10000 $\mu m^2$ to the area of the cross-section of the frozen section A of the composition may preferably be within the range of more than 1 % but 90 % or less. More specifically, its lower limit may preferably be typically more than 1 %, more preferably more than 2 %, or more than 3 %, or more than 4 %, or more than 5 %, or more than 6 %, or more than 7 %, or more than 8 %, or more than 9 %, or more than 10 %, or more than 11 %, or more than 12 %, or more than 13 %, or more than 14 %, or more than 15 %, or more than 20 %, or especially more than 30%. On the other hand, its upper limit is not particularly limited, but may be typically 90 % or less, or 80 % or less.

The swollen composition of the present invention may more preferably be characterized in that when the frozen section A of the composition is prepared, closed pores (the definition of which will be explained later) satisfy various features relating to porosity. Specifically, the swollen composition of the present invention may be characterized in that the ratio of the total area of closed pores to the area of the composition in a cross-section image of the frozen section of the composition A, i.e., {(the total area of closed pores)/(the area of the composition)}, may be within the range of more than 1 % but 90 % or less. More specifically, its lower limit may preferably be typically more than 1 %, or more than 2 %, or more than 3 %, or more than 4 %, or more than 5 %, or more than 6 %, or more than 7 %, or more than 8 %, or more than 9 %, or more than 10 %, or more than 11 %, or more than 12 %, or more than 13 %, or more than 14 %, or more than 15 %, or more than 20 %, or more than 30 %. On the other hand, the upper limit of the total ratio of closed pores is not particularly limited, but may be typically 90 % or less, or 80 % or less.

In the frozen section A of the swollen composition of the present invention, the ratio of the total area of closed pores to the total area of the cross-section image area of the frozen section A may preferably be, although is not limited to, within the range of more than 1 % but 50 % or less. More specifically, its lower limit may preferably be typically more than 1 %, or more than 2 %, or more than 3 %. On the other hand, its upper limit is not particularly limited, but may be typically 50 % or less, or 40 % or less, or 30 % or less.

In the frozen section A of the swollen composition of the present invention, the ratio of the total area of closed pores to the total area of all pores, i.e., {(the total area of closed pores)/(total area of pores)}, may preferably be, although is not limited to, within the range of 20 % or more but 100 % or less. More specifically, its lower limit may preferably be typically 20 % or more, or 30 % or more, or 40 % or more, or 50 % or more, from the viewpoint of improved swelling ability. On the other hand, its upper limit is not particularly limited, but may be typically 100 % or less, or 90 % or less.

The term "closed pore" in a frozen section of a composition as used herein refers to "a pore surrounded by a single contour, without interruption, and separated from the rest of the frozen section of the composition. In other words, if the contour of a pore is broken by the contour of the cross-section of the frozen section of the composition even at one point, the pore is open to the outside and does not correspond to a "closed pore." Where the contour of a pore is tangent to the periphery of the cross-sectional image of the frozen section, the contour of the pore shall be considered to be continuous.

In the swollen composition of the present invention, its closed pores may also preferably satisfy the features relating to porosity. Specifically, the total ratio of closed pores, which is defined as {(total area of closed pores) / (composition area)}, may preferably be within the range of more than 1 % but 90 % or less. More specifically, its lower limit may preferably be typically more than 1 %, or more than 2 %, or more than 3 %, or more than 4 %, or more than 5 %, or more than 6 %, or more than 7 %, or more than 8 %, or more than 9 %, or more than 10 %, or more than 11 %, or more than 12 %, or more than 13 %, or more than 14 %, or more than 15 %, or more than 20 %, or especially more than 30%. On the other hand, the upper limit of the total closed pore ratio is not particularly limited, but may be typically 90 % or less, or 80 % or less.

The swollen composition of the present invention may preferably be characterized in that when the composition is frozen at -25 °C and cut along a cut plane A into a frozen section A with a thickness of 20 $\mu m$, he ratio of the weighted average area [$\mu m^2$] of pores in the section to the weighted average perimeter [$\mu m$] of pores in the section is within a predetermined range. The swollen composition of the present invention may preferably satisfy the feature relating to at least for the frozen section A1 at any cut plane A1, more preferably at least for both the frozen section A1 at any cut plane A1 and the frozen section A2 at a cut plane A2 that is orthogonal to the cut plane A1. The cut plane A1 may preferably be a cut plane orthogonal to the longitudinal axis of the composition. In this case, the cut plane A2 may be any cut plane as long as it is orthogonal to the cut plane A1, which is orthogonal to the longitudinal axis of the composition, although the cut plane A2 may preferably be a cut plane parallel to the longitudinal axis of the composition. Thus, the characteristics of the entire composition can be evaluated more accurately by evaluating both the frozen section A1 at the cut plane A1 of the composition and the frozen section A2 at the cut plane A2, which is orthogonal to the cut plane A1. When there are multiple longitudinal axes of the composition, any cut plane can be used as the cut plane A1 and its orthogonal cut plane can be used as the cut plane A2. The "longitudinal axis" of a frozen section of a composition herein refers to a longitudinal direction of a hypothetical rectangle with a minimum volume inscribed in the composition, while the "transverse axis" of a frozen section of a composition herein refers to a line perpendicular to the longitudinal axis. In cases where there are multiple longitudinal directions of the composition, any direction can be adopted.

The swollen composition of the present invention may preferably satisfy each of the above provisions regarding porosity, etc. of the aforementioned composition frozen section A at least for the frozen section A1 at any cut plane A1, more preferably at least for both the frozen section A1 at any cut plane A1 and the frozen section A2 at a cut plane A2 that is orthogonal to the cut plane A1. The cut plane A1 may preferably be a cut plane orthogonal to the longitudinal axis of the composition. In this case, the cut plane A2 may be any cut plane as long as it is orthogonal to the cut plane A1, which is orthogonal to the longitudinal axis of the composition, although the cut plane A2 may preferably be a cut plane parallel to the longitudinal axis of the composition. Thus, the characteristics of the entire composition can be evaluated more accurately by evaluating both the frozen section A1 at the cut plane A1 of the composition and the frozen section A2 at the cut plane A2, which is orthogonal to the cut plane A1. When there are multiple longitudinal axes of the composition, any cut plane can be used as the cut plane A1 and its orthogonal cut plane can be used as the cut plane A2.

[Organic acid content]

The swollen composition of the present invention may preferably be characterized in that its organic acid content is within a predetermined range. Specifically, the content of organic acids in the swollen composition of the present invention may preferably be within the range of 0.01 mass % or more, while the upper limit is not particularly limited, but may be 5 % or less. When the organic acid content is within the predetermined range, the resulting composition may preferably be eligible for long-term storage (e.g., at 20°C for one week or more). More specifically, its lower limit is not limited, but may preferably be 0.01 mass % or more, or 0.03 mass % or more, or 0.05 mass % or more, or 0.08 mass % or more, or 0.1 mass % or more, or 0.2 % or more, or 0.3 % or more. Its upper limit is not limited, but may be 5 mass % or less, or 4 mass % or less, or 3 mass % or less. When the organic acid content of the swollen composition is within the range, it may be possible to make the swollen composition to exhibit the effects of the present invention, such as improved swelling and enhanced viscoelasticity (pull) characteristic of starch network. The organic acid content in a composition can be measured by the following method.

Method for measuring the content of organic acids: a sample is extracted with hot water and centrifuged to obtain a supernatant, which is filtered through a 0.45 micro filter to prepare a sample for measurement, which is then subjected to measurement for organic acid content by HPLC. The conditions for HPLC are as follows.

Column: GL-C610H-S (Hitachi High-Tech Corporation)
Column temperature: 56°C
Eluent :3mM perchloric acid
Flow rate :0.5mL/min
Reaction solution: 0.21% disodium hydrogen phosphate
0.00938% Bromochimol blue
Flow rate: 0.5mL/min
Detection: UV 430nm

[Degree of gelatinization of starch]

The swollen composition of the present invention may preferably be characterized in that the degree of gelatinization of starch in the composition is within a predetermined range. Specifically, the degree of gelatinization of starch in the swollen composition of the present invention may be within the range of 50 mass % or more but 100 mass % or less. More specifically, its lower limit may preferably be typically 50 mass % or more, more preferably 55 mass % or more, or 60 mass % or more, or 65 mass % or more, or 70 mass % or more, or 75 mass % or more, or 80 mass % or more, or 85 mass % or more, or 90 mass % or more. On the other hand, its upper limit is not particularly limited, but may be typically 100 mass % or less, or 99 mass % or less. The degree of gelatinization of a composition is measured as the ratio of the gelatinized starch content to the total starch content using the glucoamylase second method, which is a partial modification of the Central Analytical Laboratory of Customs (following the method by Japan Food Research Laboratories: https://www.jfrl.or.jp/storage/file/221.pdf).

[Absorbance with iodine staining]

The swollen composition of the present invention may preferably be characterized by the following feature. The composition is subjected to the [Procedure d] above and the resulting product is subjected to separation under the [Condition D] above. A sample is then prepared from a separated fraction with molecular weight logarithms of 5.0 or more but less than 6.5 by adjusting the pH of the fraction to 7.0 and staining one mass part of the fraction with 9 mass parts of iodine solution (0.25mM). The resulting sample is then measured for an absorbance at 660 nm, and the measured value is then calibrated by subtracting it from the absorbance at 660 nm of a blank 0.25 mM iodine solution (which contains no sample), the resulting value (also referred to as "$ABS_{5.0\text{-}6.5}$") may preferably be within a predetermined range. Specifically, the $ABS_{5.0\text{-}6.5}$ of the swollen composition of the present invention may be within the range of 0.10 or more but 3.50 or less. More specifically, the lower limit may preferably be typically 0.10 or more, particularly 0.15 or more, or 0.20 or more, or 0.25 or more, or 0.30 or more, or 0.35 or more, or 0.40 or more, or 0.45 or more, or 0.50 or more, or 0.55 or more, or 0.60 or more, or 0.65 or more, or 0.70 or more, or 0.75 or more, or 0.80 or more. On the other hand, the upper limit may preferably be, although not particularly limited to, typically 3.50 or less, or 3.00 or less, or 2.50 or less.

The detailed measurement method for the aforementioned $ABS_{5.0-6.5}$ values is as follows. The composition is put into 40 times the volume of water, and then immediately (i.e., without carrying out isothermal treatment at 90°C for 15 minutes) treated according to the [Procedure d] above to obtain a purified and starch-concentrated ingredient. The purified and starch-concentrated ingredient is then separated under the [Condition D] above, and a separated fraction with molecular weight logarithms of 5.0 or more but less than 6.5 is collected. The details of the [Procedure d] and [Condition D] above have been described in detail above. The resulting separated fraction is then adjusted to pH 7.0 to prepare a sample, and one mass of the sample is put into 9 parts of 0.25 mM iodine solution at room temperature (20°C) for 3 minutes, and then subjected to absorbance measurement, which is performed as follows. Both an iodine solution before addition of the sample (control) and an iodine solution after addition of the sample are each measured for an absorbance (660 nm) with a conventional spectrophotometer (e.g., UV-1800 manufactured by Shimadzu Corp.) using a square cell with a 10 mm optical path length. The absorbance difference (i.e., {absorbance of iodine solution after addition of sample} minus {absorbance of iodine solution before addition of the sample}) is calculated and determined as $ABS_{5.0-6.5}$.

The swollen composition of the present invention may preferably be characterized in that the separated fraction with molecular weight logarithms of 5.0 or more but less than 6.5 mentioned above has high iodine stainability compared to a separated fraction with molecular weight logarithms of 6.5 or more but less than 8.0, which has relatively higher molecular weights. Specifically, the composition is put into 40 times the volume of water, and then immediately (i.e., without carrying out isothermal treatment at 90°C for 15 minutes) treated according to the [Procedure d] above to obtain purified starch. The purified starch is then separated under the [Condition D] above, and a separated fraction with molecular weight logarithms of 6.5 or more but less than 8.0 is obtained. The resulting separated fraction is then adjusted to pH 7.0 to prepare a sample, and one mass of the sample is put into 9 parts of 0.25 mM iodine solution for staining. The resulting sample is then measured for an absorbance at 660nm, and the measured value is then calibrated by subtracting it from the absorbance at 660 nm of a blank 0.25 mM iodine solution (which contains no sample) to thereby obtain a calibrated value (also referred to as "$ABS_{6.5-8.0}$"). The ratio of the $ABS_{6.5-8.0}$ to the $ABS_{5.0.6.5}$ ($ABS_{6.5-8.0}/ABS_{5.0-6.5}$) may preferably be a predetermined value or more.

The swollen composition of the present invention may preferably be characterized in that the $ABS_{6.5-8.0}/ABS_{5.0-6.5}$ value obtained in accordance with the procedure mentioned above is within the range of more than 1.0 but 10.0 or less. More specifically, the lower limit may preferably be typically more than 1.0, particularly more than 1.1, or more than 1.2, or more than 1.3, or more than 1.4, or more than 1.5, or more than 1.6, or more than 1.7, or more than 1.8, or more than 1.9, particularly more than 2.0. On the other hand, the upper limit of this parameter may be, although not particularly limited to, typically 10.0 or less, or 8.0 or less. The principle is unknown, but it is estimated that the ratio of the content of starch thermally decomposed becomes relatively large compared to the starch before decomposition, thereby increasing the ratio and finally resulting in a composition of good quality.

The details of the measurement method for $ABS_{6.5-8.0}$ are the same as those for $ABS_{5.0-6.5}$ described above, except that the separation fraction with molecular weight logarithms of 6.5 or more but less than 8.0 is used.

The term "iodine solution" used herein refers to a dilute solution of potassium iodide solution containing 0.05 mol/L of iodine (also simply referred to as "0.05 mol/L iodine solution" or "0.05 mol/L iodine solution). Unless otherwise specified, a mixed potassium iodide solution containing 93.7 mass % water, 0.24 mol/L (4.0% by mass) potassium iodide, and 0.05 mol/L (1.3% by mass) iodine (0.05 mol/L iodine solution (product code 091-00475) manufactured by FUJIFILM Wako Pure Chemicals Co.) is used after dilution. The "0.05 mol/L iodine solution" can be diluted 200 times with water to obtain a "0.25 mM iodine solution."

[Particle diameter $d_{50}$ after starch and protein digestion treatment followed by ultrasonication]

The swollen composition of the present invention may preferably be characterized in that when the composition is subjected to starch and protein digestion treatment defined in [Procedure e] below followed by ultrasonication, and then subjected to measurement for particle diameter distribution, the features below are satisfied.

[Procedure e] 6 mass % aqueous suspension of the composition is treated with 0.4 volume % of protease and 0.02 mass % of $\alpha$-amylase at 20 °C for 3 days.

Specifically, the swollen composition of the present invention may preferably be characterized in that when the composition is subjected to starch and protein digestion treatment defined in [Procedure e], and then subjected to measurement for particle diameter distribution, the resulting particle diameter $d_{50}$ is within a predetermined range. This is desirable because it makes it easier to feel the unique texture of the swollen food, and the composition has reduced shrinkage over time after swelling. Although the principle behind this is unknown, it is estimated that these components reinforce the starch-based support structure of the composition of the present invention, resulting in a composition that exhibits a unique swollen-food texture. On the other hand, these components may preferably have a certain size or less, since it is estimated that if these components have more than a certain size, they will penetrate the starch-based support structure and will not retain their swollen state after heat treatment. Specifically, the swollen composition of the present invention may preferably be characterized in that the particle diameter $d_{50}$ on the particle diameter distribution is within the range of 1 μm or more but less than 450μm. More specifically, the upper limit may more preferably be typically less than 450μm, particularly 410 μm or less, or 350 μm or less, or 300 μm or less, or 260 μm or less, or 200 μm or less, or 150 μm or less, or 100 μm or less, or 80 μm or less, or 60 μm or less, particularly 50 μm or less. On the other hand, the lower limit of the particle diameter $d_{50}$ may preferably be, although not particularly limited to, typically 1 μm or more, more preferably 3 μm or more, or 5 μm or more.

Such particle size distribution is considered to reflect the particle size distribution of non-amylase-degradable and non-protease-degradable components, such as insoluble dietary fiber and polysaccharides (such as polysaccharides derived from psyllium seeds, specifically mainly cellulose, xylan, and pectin) in the composition. Therefore, in order to adjust said particle size in the composition, it is preferable to use insoluble dietary fiber or polysaccharide size in the raw material beforehand. Specifically, it is preferable to use raw materials containing these components that have been adjusted to be within a specified range, by physical crushing treatment or enzymatic treatment such as cellulase or pectinase or xylanase.

The particle diameter distribution of a composition after ultrasonication can be measured under the following conditions, after disturbing the dispersion of the dough composition. Ethanol is used as a solvent for measurement, because it is unlikely to affect the structure in the composition. Specifically, 1 g of the sample is immersed in 50 g of ethanol, allowed to stand for about 5 minutes, then stirred and suspended with a spatula, and measured using a solution (2 mass% ethanol dispersion) that has passed through an 8-mesh mesh with a 2.36 mm aperture and 1.0 mm wire diameter (which corresponds to "No. 8" defined in "Alternative" of Nominal Dimensions, Permissible Variation for Wire Cloth of Standard Testing Sieves (U.S.A.) according to U.S.A. Standard Testing Sieves ASTM Specifications E 11-04). More specifically, 100 g of the suspension (20°C) is spread evenly on a sieve, and then subjected to vibration with a load that does not change the composition size until the fractional mass on the sieve is constant. After the processing, the solution that has passed the sieve is dispersed in ethanol at 2 mass% and used for the measurement. The laser diffraction particle size analyzer used for the measurement may be a laser diffraction particle size analyzer with a measurement range of at least 0.02 μm to 2000 μm by laser diffraction scattering, an example being Microtrac MT3300 EXII system marketed by Microtrac Bell Inc. The measurement application software used for the measurement is not limited, an example being DMS2 (Data Management System version 2, Microtrac Bell Inc.). When the device and the application software mentioned above are used, the measurement can be carried out by: carrying out cleaning by pressing the Wash button of the software; carrying out calibration by pressing the Set Zero button of the software; and directly loading the sample via the Sample Loading feature until the sample concentration is within the proper range. Specifically, in order for a sample before disturbance (i.e., without ultrasonication) to be measured, the concentration of a sample is adjusted to within the appropriate range using the Sample Loading feature, the sample is promptly laser diffracted at a flow rate of 60% with a measurement time of 10 seconds, and the result is used as the measurement value. On the other hand, in order for a sample after disturbance (i.e., with ultrasonication) to be measured, a sample that has not been subjected to ultrasonication is put into the measurement solvent (ethanol) circulating in the measurement system, the concentration is adjusted to within the appropriate range using the Sample Loading feature, and then the ultrasonic treatment (treatment with ultrasonic waves of 40 kHz frequency at 40 W output for 3 minutes) is performed by pressing the Ultrasonic Treatment button of the software. Then, after three times of defoaming, the sample loading can be carried out again to adjust the concentration to within the appropriate range. Thereafter, the sample is promptly laser diffracted at a flow rate of 60% with a measurement time of 10 seconds, and the result is used as the measurement value. The parameters for the measurement may be, e.g., Distribution indication: Volume; Particle refractive index: 1.60; Solvent refractive index: 1.36; Upper limit of measurement: 2,000.00 μm; Lower limit of measurement: 0.021 μm.

The term "particle size $d_{50}$" (or the term "particle size $d_{90}$") herein refers to, when the particle size distribution of the object is measured on a volume basis and divided into two parts at a certain particle size, the particle size at which the ratio between the cumulative value of the particle frequency % on the larger side to that on the smaller side are 50:50 (or 10:90). The "ultrasonic treatment" herein refers to treating a measurement object, which is dispersed in a measurement solvent and placed in a laser diffraction particle size analyzer as described above, with ultrasonic waves of 40 kHz frequency at an output of 40 W for 3 minutes, unless otherwise specified. All particle size distributions, including but not limited to this provision, are measured on a volume basis.

When determining specific surface areas per unit volume of various particles of a composition after disturbance (e.g., ultrasonication) in the present invention, it is preferable to measure the particle size distribution in terms of channels (CH), and then use the particle diameter for each measurement channel listed in Table A below as a standard. Specifically, according to Table A below, the frequency of particles that are smaller than the particle diameter specified for each channel and larger than the particle diameter specified for the channel with one number larger (for the largest channel in the measurement range, the particle diameter of the lower limit) is measured for each channel in Table A below, and the total frequency for all channels in the measurement range is used as the denominator to obtain the particle frequency % for each channel (also referred to as "particle frequency % for XX channel"). For example, the particle frequency % of channel 1 represents the frequency % of particles of 2000.00 μm or smaller but larger than 1826.00 μm.

The specific surface area per unit volume [$m^2$/mL] herein refers to a specific surface area of particles per unit volume (1 mL) measured with a laser diffraction particle size distribution analyzer, assuming that the particles are spherical. The specific surface area of particles per unit volume assuming that the particles are spherical is a value based on a different mechanism from, e.g., those of values reflecting the constitution of particles and surface structures of particles (specific surface area per volume and per mass determined by, e.g., permeation and gas adsorption methods). The specific surface area of particles per unit volume assuming that the particles are spherical can be calculated as 6 x Σ (ai)/Σ(ai*di) particle where ai represents a surface area per particle and di represents a particle diameter.

[Table A]

| Channel | Particle size (μm) | Channel | Particle size (μm) | Channel | Particle size (μm) | Channel | Particle size (μm) |
|---|---|---|---|---|---|---|---|
| 1 | 2000.000 | 37 | 88.000 | 73 | 3.889 | 109 | 0.172 |
| 2 | 1826.000 | 38 | 80.700 | 74 | 3.566 | 110 | 0.158 |
| 3 | 1674.000 | 39 | 74.000 | 75 | 3.270 | 111 | 0.145 |
| 4 | 1535.000 | 40 | 67.860 | 76 | 2.999 | 112 | 0.133 |
| 5 | 1408.000 | 41 | 62.230 | 77 | 2.750 | 113 | 0.122 |
| 6 | 1291.000 | 42 | 57.060 | 78 | 2.522 | 114 | 0.111 |
| 7 | 1184.000 | 43 | 52.330 | 79 | 2.312 | 115 | 0.102 |
| 8 | 1086.000 | 44 | 47.980 | 80 | 2.121 | 116 | 0.094 |
| 9 | 995.600 | 45 | 44.000 | 81 | 1.945 | 117 | 0.086 |
| 10 | 913.000 | 46 | 40.350 | 82 | 1.783 | 118 | 0.079 |
| 11 | 837.200 | 47 | 37.000 | 83 | 1.635 | 119 | 0.072 |
| 12 | 767.700 | 48 | 33.930 | 84 | 1.499 | 120 | 0.066 |
| 13 | 704.000 | 49 | 31.110 | 85 | 1.375 | 121 | 0.061 |
| 14 | 645.600 | 50 | 28.530 | 86 | 1.261 | 122 | 0.056 |
| 15 | 592.000 | 51 | 26.160 | 87 | 1.156 | 123 | 0.051 |
| 16 | 542.900 | 52 | 23.990 | 88 | 1.060 | 124 | 0.047 |
| 17 | 497.800 | 53 | 22.000 | 89 | 0.972 | 125 | 0.043 |
| 18 | 456.500 | 54 | 20.170 | 90 | 0.892 | 126 | 0.039 |
| 19 | 418.600 | 55 | 18.500 | 91 | 0.818 | 127 | 0.036 |
| 20 | 383.900 | 56 | 16.960 | 92 | 0.750 | 128 | 0.033 |
| 21 | 352.000 | 57 | 15.560 | 93 | 0.688 | 129 | 0.030 |
| 22 | 322.800 | 58 | 14.270 | 94 | 0.630 | 130 | 0.028 |
| 23 | 296.000 | 59 | 13.080 | 95 | 0.578 | 131 | 0.026 |
| 24 | 271.400 | 60 | 12.000 | 96 | 0.530 | 132 | 0.023 |
| 25 | 248.900 | 61 | 11.000 | 97 | 0.486 | | |
| 26 | 228.200 | 62 | 10.090 | 98 | 0.446 | | |
| 27 | 209.300 | 63 | 9.250 | 99 | 0.409 | | |
| 28 | 191.900 | 64 | 8.482 | 100 | 0.375 | | |
| 29 | 176.000 | 65 | 7.778 | 101 | 0.344 | | |
| 30 | 161.400 | 66 | 7.133 | 102 | 0.315 | | |
| 31 | 148.000 | 67 | 6.541 | 103 | 0.289 | | |

(continued)

| Channel | Particle size (μm) | Channel | Particle size (μm) | Channel | Particle size (μm) | Channel | Particle size (μm) |
|---|---|---|---|---|---|---|---|
| 32 | 135.700 | 68 | 5.998 | 104 | 0.265 | | |
| 33 | 124.500 | 69 | 5.500 | 105 | 0.243 | | |
| 34 | 114.100 | 70 | 5.044 | 106 | 0.223 | | |
| 35 | 104.700 | 71 | 4.625 | 107 | 0.204 | | |
| 36 | 95.960 | 72 | 4.241 | 108 | 0.187 | | |

A more specific procedure for measuring the particle size distribution of dietary fiber (e.g., insoluble dietary fiber) or polysaccharides in a composition is as follows. 300 mg of the composition is placed in a plastic tube with 5 mL of water, allowed to swell at 20°C for about 1 hour, and then processed using a small Hiscotron (Microtech Nichion homogenizer NS-310E3) until a porridge-like consistency is obtained (about 15 seconds at 1000 rpm) to prepare a 6 mass % water suspension of the composition. 2.5 mL of the treated sample is then divided and combined with 10 μL of protease (Proteinase K, Takara Bio) and 0.5 mg of α-amylase (α-Amylase from Bacillus subtilis, Sigma), and allowed to react at 20°C for 3 days. After the reaction, the resulting protease- and amylase-treated composition is subjected to sonication, and then to measurement for particle size distribution.

<u>[Dietary fiber-localized part]</u>

The swollen composition of the present invention may preferably contain part of pulse and/or cereal in which dietary fiber (i.e., both soluble dietary fiber and insoluble dietary fiber) is localized. Specifically, the ratio of dietary fiber-localized part of pulse and/or cereal to the total mass of the swollen composition in terms of wet mass basis may preferably be within the range of 0.1 mass % or more but 20 mass % or less. More specifically, its lower limit may preferably be typically 0.1 mass % or more, more preferably 0.2 mass % or more, or 0.3 mass % or more, or 0.4 mass % or more, or 0.5 mass % or more, or 1.0 mass % or more, or 1.5 mass % or more. On the other hand, the upper limit may preferably be, although not limited to, typically 20 mass % or less, or 15 mass % or less, or 10 mass % or less, or 7.5 mass % or less, or 5.0 mass % or less.

The swollen composition of the present invention may preferably contain both edible part of pulse and/or cereal (preferably edible part of pulse) and dietary fiber-localized part of edible plant (preferably dietary fiber-localized part of pulse and/or cereal, more preferably dietary fiber-localized part of pulse). The total content ratio of edible part of pulse and/or cereal (preferably edible part of pulse) and dietary fiber-localized part of edible plant (preferably dietary fiber-localized part of pulse and/or cereal, more preferably dietary fiber-localized part of pulse) in the swollen composition of the present invention in terms of wet mass basis may preferably be within the range of 1 mass % or more but 100 mass % or less. More specifically, its lower limit may preferably be 1 mass % or more, or 3 mass % or more, or 5 mass % or more, or 8 mass % or more, or 10 mass % or more, or 15 mass % or more, or 20 mass % or more, or 25 mass % or more, or 30 mass % or more, or 35 mass % or more, or 40 mass % or more, particularly 50 mass % or more. On the other hand, the upper limit of the content ratio is not particularly limited, but may be 100 mass % or less, or 97 mass % or less, or 95 mass % or less, or 93 mass % or less, or 90 mass % or less.

The total content ratio of edible part of pulse and dietary fiber-localized part of pulse in the swollen composition of the present invention in terms of wet mass basis may preferably be within the range of 1 mass % or more but 100 mass % or less. More specifically, its lower limit may preferably be 1 mass % or more, more preferably 3 mass % or more, or 5 mass % or more, or 8 mass % or more, or 10 mass % or more, or 15 mass % or more, or 20 mass % or more, or 25 mass % or more, or 30 mass % or more, or 35 mass % or more, or 40 mass % or more, particularly 50 mass % or more. On the other hand, the upper limit of the content ratio is not particularly limited, but may be typically 100 mass % or less, or 97 mass % or less, or 95 mass % or less, or 93 mass % or less, or 90 mass % or less.

The total content ratio of edible part of cereal and dietary fiber-localized part of cereal in the swollen composition of the present invention in terms of wet mass basis may preferably be within the range of 1 mass % or more but 100 mass % or less. More specifically, its lower limit may preferably be 1 mass % or more, more preferably 3 mass % or more, or 5 mass % or more, or 8 mass % or more, or 10 mass % or more, or, or 15 mass % or more, or 20 mass % or more, or 25 mass % or more, or 30 mass % or more, or 35 mass % or more, or 40 mass % or more, particularly 50 mass % or more. On the other hand, the upper limit of the content ratio is not particularly limited, but may be typically 100 mass % or less, or 97 mass % or less, or 95 mass % or less, or 93 mass % or less, or 90 mass % or less.

The swollen composition of the present invention may more preferably contain both edible part of pulse and/or cereal and dietary fiber-localized part of edible plant in the form of micronized pulse (e.g., a micronized product of pulse with seed skin such as pea either micronized as such or once divided into edible part and seed skin, micronized separately, and then mixed together, or a micronized product of edible part of pulse and a micronized product of seed skin of pulse processed separately and then mixed together) and/or micronized cereal (e.g., a micronized product of cereal with bran such as oat either micronized as such or once divided into edible part and bran, micronized separately, and then mixed together, or a micronized product of edible part of cereal and a micronized product of bran of cereal processed separately and then mixed together) micronized together.

The swollen composition of the present invention may preferably contain seed skin of pulse, cereal, or wild plant as dietary fiber-localized part of edible plant. Specifically, in addition to dietary fiber-localized part of edible plant, the swollen composition may preferably contain one or more of seed skin of pulse, seed skin of psyllium, and bran of cereal at a predetermined ratio along with edible part thereof, more preferably both the edible part and the dietary fiber-localized part belonging to the same species of food (e.g., an edible part of pulse and seed skin of the pulse as its dietary fiber-localized part, or an edible part of cereal and bran of the cereal as its dietary fiber-localized part). Dietary fiber-localized part of pulse and/or cereal may be incorporated into the swollen composition either by using pulse and/or cereal containing dietary fiber-localized part as such or by using dietary fiber-localized part isolated from pulse and/or cereal. The dietary fiber-localized part may be insoluble dietary fiber-localized part, and the total content ratio of edible part of pulse and/or cereal and insoluble dietary fiber-localized part of edible plant may preferably satisfy the above ratio. The content ratio in terms of wet mass basis may preferably be within the range of 10 mass % or more but 100 mass % or less. More specifically, its lower limit may preferably be, 10 mass % or more, preferably 15 mass % or more, or 20 mass % or more, or 25 mass % or more, or 30 mass % or more, or 35 mass % or more, or 40 mass % or more, particularly 50 mass % or more. On the other hand, the upper limit of the content ratio is not particularly limited, but may be typically 100 mass % or less, or 97 mass % or less, or 95 mass % or less, or 93 mass % or less, preferably 90 mass % or less.

The dietary fiber-localized parts may be insoluble dietary fiber-localized parts satisfying the above requirements. The dietary fiber-localized parts may include at least psyllium husk, and may have undergone the enzyme treatment (e.g., xylanase treatment and/or pectinase treatment) explained above.

The swollen composition of the present invention may preferably contain both edible part and dietary fiber-localized part of the same pulse and/or cereal. The swollen composition of the present invention may preferably contain both edible part and dietary fiber-localized part of the same pulse (e.g., pulse with seed skin such as pea used as such or once divided into edible part and seed skin of pulse processed separately and then mixed together) and/or both edible part and dietary fiber-localized part of the same cereal (e.g., cereal with bran such as oat used as such or once divided into edible part and bran of cereal processed separately and then mixed together).

When dietary fiber-localized part is incorporated in the swollen composition of the present invention, it may preferably be used as a micronization-processed product. This will be explained in the section concerning the production method of the present invention below.

[Enzyme treatment]

The swollen composition of the present invention may preferably contain, as dietary fiber-localized part of pulse and/or cereal, dietary fiber-localized part having undergone enzyme treatment. Examples of enzyme treatments may include, although are not limited to, treatments of dietary fiber-localized part with one or more enzymes selected from cellulase, pectinase, and xylanase, preferably at least pectinase and/or xylanase. When treatment is carried out using pectinase, it may be preferable to also use cellulase in combination with pectinase for treating dietary fiber-localized part.

Specifically, any enzyme that has cellulolytic enzyme activity can be used as a cellulase. Examples of cellulases that can be used include Cellulase T "Amano" 4, which is manufactured by Amano Enzyme Inc., and Cellulase A "Amano" 3, which is manufactured by Amano Enzyme Inc. Any enzyme that has pectinolytic enzyme activity can be used as a pectinase. Examples of pectinases that can be used include Pectinase G "Amano" ("Pectinase" in Table 3 below), which is manufactured by Amano Enzyme Inc. Any enzyme that has xylan degradative enzyme activity can be used as xylanase, for example, hemicellulase "Amano" 90 (xylanase) ("Xylanase" in Table 3 below), which is manufactured by Amano Enzyme Inc. However, cellulase, pectinase, and xylanase are not limited to these specific examples, and any other enzymes with desired substrate degradation characteristics can be used. When degrading two or more substrates, a mixture of two or more enzymes with activity to degrade each of those substrates may be used, or an enzyme with activity to degrade two or more of those substrates may be used.

In fermented and swollen compositions (e.g., breads or bread-like foods) that undergo microbial fermentation (especially yeast fermentation), enzyme treatment may be performed in parallel with the fermentation process by adding enzymes such as cellulase, pectinase or xylanase to the dough before fermentation, or dietary fiber-containing materials (especially materials containing insoluble dietary fiber) that have been previously enzyme treated may be used as ingredients. In particular, it is preferable to use an enzyme-treated product of the seed coat of edible wild plant psyllium (also referred to as psyllium husk or psyllium seed coat), which is a dietary fiber-localized part of psyllium, since this makes it possible to obtain a good swollen product. In addition to the enzyme-treated seed coat of psyllium, it is preferable to use one or more of the dietary fiber-localized parts of pulse (more specifically, the seed coat of pulse, especially the seed coat of pea) or the fiber-localized parts of cereal (e.g., oats or kibi (common millet), more specifically the bran, especially the bran of kibi (common millet)), since the texture of the resulting swollen composition is improved. Furthermore, it is even more desirable to include both the enzyme-treated seed coat of psyllium and the enzyme-treated, dietary fiber-localized portion of cereal (more specifically, the bran portion, especially the bran portion in the enzyme-treated state described above), since this will result in a fermented swollen composition which exhibit the desired effects of the present invention. Enzymatic treatment of the seed coat of psyllium and the fiber-localized portion of pulse or cereal may be carried out either at different steps separately or at one step simultaneously. For example, the enzyme treatment may be carried out simultaneously at step (i) and/or at step (ii), or mainly at step (ii), by adding the enzyme in the dough composition.

[Dietary fiber-localized part of psyllium ]

The swollen composition of the present invention may preferably contain, as dietary fiber-localized part, dietary fiber-localized part of psyllium, which is a typically edible wild plant, or seed skin of psyllium (psyllium seed skin or psyllium husk). Specifically, the content ratio of seed skin of psyllium (psyllium husk) as dietary fiber-localized part in the swollen composition of the present invention in terms of wet mass basis may preferably be within the range of 0.1 mass % or more but 20 mass % or less. More specifically, its lower limit may preferably be 0.1 mass % or more, more preferably 0.2 mass % or more, or 0.3 mass % or more, or 0.4 mass % or more, or 0.5 mass % or more, or 1.0 mass % or more, or 1.5 mass % or more, or 1.8 mass % or more, or 2.0 mass % or more, or 2.5 mass % or more, or 3.0 mass % or more. On the other hand, its upper limit may preferably be, although is not limited to, 20 mass % or less, more preferably 15 mass % or less, or 10 mass % or less, or 7.5 mass % or less, or 5.0 mass % or less. The swollen composition of the present invention may preferably contain seed skin of psyllium (psyllium seed skin or psyllium husk) as dietary fiber-localized part (more specifically soluble dietary fiber and insoluble dietary fiber-localized part) at the ratio mentioned above, especially in the case of a fermented swollen composition (e.g., bread or bread-like food), since the effects of the present invention is more likely to be exhibited.

When the swollen composition of the present invention contains dietary fiber-localized part of psyllium (preferably seed skin of psyllium), the dietary fiber-localized part of psyllium (preferably seed skin of psyllium) may preferably be dietary fiber-localized part (preferably seed skin) of psyllium that has undergone treatment with an enzyme (preferably treatment with cellulase and/or pectinase and/or xylanase, more preferably treatment with pectinase and/or xylanase). The swollen composition of the present invention may preferably contain both dietary fiber-localized part of pulse and/or cereal and seed skin of psyllium (especially seed skin of psyllium that has undergone enzyme treatment), and the total content thereof may preferably satisfy the ratio mentioned above. The swollen composition of the present invention may more preferably contain, in addition to seed skin of psyllium, one or more of dietary fiber-localized part of pulse (more specifically seed skin of pulse, especially seed skin of pea) and dietary fiber-localized part (more specifically bran, especially bran that has undergone enzyme treatment) of cereal (e.g., oat), since the resulting swollen composition is likely to exhibit improved food texture. The swollen composition of the present invention may still more preferably contain both seed skin of psyllium and dietary fiber-localized part (more specifically bran, especially bran that has undergone enzyme treatment) of cereal, since the resulting composition (especially fermented swollen composition) is likely to exhibit the effects of the present invention favorably.

[Density (bulk density)]

The swollen composition of the present invention may preferably be characterized in that its density (hereinafter also referred to as "bulk density" or "density specific gravity") is below a predetermined value due to its swelling. Specifically, the density (bulk density) of the swollen composition of the present invention may preferably be within the range of more than 0.10g/$cm^3$ but less than 1.0g/$cm^3$. More specifically, its upper limit may preferably be typically less than 1.0g/$cm^3$, or less than 0.90g/$cm^3$, or less than 0.80g/$cm^3$, or less than 0.70g/$cm^3$, or less than 0.60g/$cm^3$. On the other hand, its lower limit may preferably be, although is not limited to, typically more than 0.10g/$cm^3$, or more than 0.15g/$cm^3$, or more than 0.20g/$cm^3$, or more than 0.25g/$cm^3$, or more than 0.30g/$cm^3$.

The density (bulk density) of the swollen composition of the present invention is a value obtained by dividing the mass of the composition by the apparent volume of the composition (the total of "the volume of the composition itself," "the volume of pores on the surface of the composition that are connected to the outside," and "the volume of internal pores"). An example of the method for measuring the density of a composition is to measure the apparent volume (Vf) of about 100 g of the composition (m) and calculate the composition density (g/mL) using m/Vf. Since the value of density is almost equal to the value of "specific gravity (the ratio of the density of a substance to the density of water at 4°C under atmospheric pressure, 0.999972 g/$cm^3$)," the value in the above specification may be specified by specific gravity with no unit number.

[Protein content]

The swollen composition of the present invention may preferably be characterized in that the protein content in the composition is within a predetermined range. When the protein content is adjusted to be a predetermined ratio or more, the swollen composition of the present invention may preferably impart the viscoelasticity (pull) characteristic of the starch network while imparting a texture that is easy to chew through, whereby the effects of the present invention may easily be obtained. Although the principle behind this is unknown, there is a possibility that starch and protein in the swollen composition form aggregate structures which, through their interaction with dietary fiber (preferably insoluble dietary fiber), develop to have desirable shapes and sizes that are completely different from previously known protein networks such as gluten, resulting in the effects of the present invention. Specifically, the protein content in the swollen composition of the present invention in terms of wet mass basis, may preferably be within the range of typically 0.1 mass % or more but 40 mass % or less. More specifically, its lower limit may preferably be 0.1 mass % or more, or 0.5 mass % or more, or 1.0 mass % or more, or 2.0 mass % or more, or 3.0 mass % or more, or 4.0 mass % or more, or 5.0 mass % or more, or 6.0 mass % or more, or 7.0 mass % or more, or 8.0 mass % or more, or 9.0 mass % or more, or 10 mass % or more, or 11 mass % or more, or 12 mass % or more, or 13 mass % or more, or 14 mass % or more, or 15 mass % or more, or 16 mass % or more, or 17 mass % or more, or 18 mass % or more. On the other hand, its upper limit is not particularly limited, but may be typically 40 mass % or less, or 30 mass % or less, or 25 mass % or less, or 20 mass % or less.

The origin of the protein in the swollen composition of the present invention is not particularly restricted. Examples include those derived from plants and those derived from animals, among which pulse and/or cereal-derived proteins are preferred. Specifically, the ratio of the total content of pulse-derived and/or cereal-derived proteins (preferably the content of pulse-derived proteins) to the total protein content in the composition may preferably be within the range of typically 10 mass % or more but typically 100 mass % or less. More specifically, its lower limit may preferably be 10 mass % or more, or 20 mass % or more, or 30 mass % or more, or 40 mass % or more, or 50 mass % or more, or 60 mass % or more, or 70 mass % or more, or 80 mass % or more, or 90 mass % or more, while the upper limit is not particularly limited, but may be typically 100 mass %, or 100 mass % or less. Pulse-derived proteins may preferably be those derived from mung bean or those derived from pea, most preferably be yellow pea-derived protein. Cereal-derived protein may preferably be oat-derived protein or quinua-derived protein, or most preferably kibi (common millet)-derived protein. In the present invention, the pulse-derived protein content may satisfy the above range for the protein content, or the cereal-derived protein content may satisfy the above range for the protein content, but the total content of the pulse-derived protein and cereal-derived protein may preferably satisfy the above requirement.

The protein incorporated in the swollen composition of the present invention may be in the form of an isolated pure product or, preferably, may be present in the state of being contained in pulse and/or cereal. Specifically, the ratio of the total content of protein contained in pulse and/or cereal protein (preferably the content of protein contained in pulse) in the whole composition total protein content may preferably be within the range of typically 10 mass % or more and 100 mass % or less. More specifically, the lower limit may preferably be typically 10 mass % or more, particularly 20 mass % or more, or 30 mass % or more, or 40 mass % or more, or 50 mass % or more, or 60 mass % or more, or 70 mass % or more, or 80 mass % or more, or 90 mass % or more. On the other hand, the upper limit may preferably be, although not particularly limited to, typically 100 mass %, or 100 mass % or less. With respect to the total protein content in the composition, the ratio of the content of protein contained in pulse may satisfy the above range, or the ratio of the content of protein contained in cereal may satisfy the above range, or the ratio of the total content of protein contained in pulse and protein contained in cereal may satisfy the above range.

The protein content in a composition herein can be measured by, e.g., quantifying the total amount of nitrogen according to the combustion method (improved Dumas method) specified in the Food Labeling Law ("About Food Labeling Standards" (Consumer Food Indication No. 139 dated March 30, 2015))," and then multiplying the total amount of nitrogen with the "nitrogen-protein conversion factor."

[PDI of protein]

The swollen composition of the present invention may preferably be characterized in that it contains a protein with low solubility, since it may provide the composition with viscoelasticity (pull) characteristic of starch network, with maintaining a texture that is easy to chew through. Although the principle behind this is unknown, it is deemed that the insolubilized protein affects the texture of starch. Specifically, the PDI (protein dispersibility index) value of the swollen composition of the present invention may preferably be 0 mass % or more but less than 55 mass %. Specifically, the upper limit for the PDI value may preferably be typically less than 55 mass %, or less than 50 mass %, or less than 45 mass %, or less than 40 mass %, or less than 35 mass %, or less than 30 mass %, or less than 25 mass %, or less than 20 mass %, or less than 15 mass %, or less than 10 mass %. On the other hand, the lower limit for the PDI value is not particularly limited, but may be typically 0 mass % or more, or 1 mass % or more, or 2 mass % or more.

The protein dispersibility index (PDI) value herein refers to an index of protein solubility, and can be obtained as the percentage of the soluble nitrogen content to the total nitrogen content in the composition {(soluble nitrogen content in the composition)/(total nitrogen content in the composition) x 100 (%)} according to the standard method. Specifically, a sample to be measured is mixed with 20 times the volume of water and then crushed (using a Microtech Nichion NS-310E3 homogenizer at 8500 rpm for 10 minutes), and the total nitrogen content of the resulting crushed liquid is multiplied by 20 to determine the total nitrogen content of the entire composition. The crushing solution is then centrifuged (3000G for 10 minutes), and the total nitrogen content of the supernatant obtained is then multiplied by 20 to determine the water soluble nitrogen content, whereby the PDI value in the composition can be determined. The total nitrogen content is measured using the combustion method (improved Dumas method) specified in the Food Labeling Law ("About Food Labeling Standards" (March 30, 2015, Shokuhin Table No. 139)).

The protein contained in the swollen composition of the present invention may preferably be a protein that has undergone any processing treatment (e.g., ultrasonication treatment, shear kneading treatment, or heating treatment) (processed protein) rather than a naturally-occurring protein. The use of a processed protein may provide the swollen composition of the present invention with viscoelasticity (pull) characteristic of starch network and a texture that is easy to chew, and may also make it easier to obtain the effects of the present invention. The processed protein may preferably be a protein that has been processed until some or all of the protein is in a denatured state. Denaturing treatments include heat treatment and electrical treatment. Specifically, the processed protein may preferably be a protein that has been heated (e.g., heated at a temperature of 60°C or higher, or 70°C or higher, or 80°C or higher) until the protein is thermally denatured. Although the principle behind this is unknown, such a processed protein may cross-link starch and other components and contribute to the development of the aggregate structure, which is thought to be composed of starch and protein in the swollen composition, to have a desirable shape and size. Although not limitative, such a processed protein may be prepared by isolating protein from pulse and/or cereal as a pure product before being processed and incorporated in the composition, or alternatively, it may be prepared by processing pulse and/or cereal containing protein without isolation before being incorporated in the composition.

In addition, while starch may preferably have undergone less processing to the extent that a certain ratio or more of starch grains remain as will be explained below, protein, may preferably have undergone a certain degree of processing (e.g., thermal denaturation at temperatures of 60 °C or more, or 70 °C or more, or 80 °C or more). Specifically, the ratio of the total content of processed proteins derived from pulse and/or cereal (preferably processed proteins derived from pulse) to the total protein content in the composition may preferably be within the range of typically 0 mass % or more, preferably 10 mass % or more, but typically 100 mass % or less. More specifically, its lower limit may preferably be typically 0 mass % or more, preferably 10 mass % or more, or 20 mass % or more, or 30 mass % or more, or 40 mass % or more, or 50 mass % or more, or 60 mass % or more, or 70 mass % or more, or 80 mass % or more, or 90 mass % or more, while the upper limit is not particularly limited, but may be typically 100 mass %, or 100 mass % or less.

When the swollen composition of the present invention contains a processed protein, such a processed protein may have undergone some processing treatment while contained in pulse and/or cereal (preferably in pulse). Specifically, the ratio of the total content of processed proteins contained in pulse and/or cereal (preferably processed proteins contained in pulse) to the total protein content in the composition may preferably be within the range of typically 0 mass % or more, preferably 10 mass % or more, and typically 100 mass % or less. More specifically, its lower limit may preferably be typically 0 mass % or more, preferably 10 mass % or more, or 20 mass % or more, or 30 mass % or more, or 40 mass % or more, or 50 mass % or more, or 60 mass % or more, or 70 mass % or more, or 80 mass % or more, or 90 mass % or more, while the upper limit is not particularly limited, but may be typically 100 mass %, or 100 mass % or less. When the swollen composition of the present invention contains a processed protein, the total content of processed proteins derived from pulse and/or cereal may satisfy the above range, and the total content of processed proteins contained in pulse and/or cereal may satisfy the above range.

When processing protein (preferably by heat treatment), an isolated pure product may be processed, or a food ingredient containing protein may be processed. However, since starch may preferably have undergone less processing to the extent that a certain ratio or more of starch grains remain as will be explained below, an isolated pure product of protein may preferably be processed alone. Examples of the methods for processing treatment include: isolating protein from pulse, processing it, and then mixing it with edible plant that has been separately subjected to micronization.

[Total oil and fat content]

The swollen composition of the present invention may preferably have a total oil and fat content of within a predetermined range. Specifically, total oil and fat content in the swollen composition of the present invention in terms of dry mass basis may preferably be within the range of 1.0 mass % or more but 70 mass % or less. More specifically, the lower limit may preferably be typically 1.0 mass % or more, more preferably 2.0 mass % or more preferably, particularly 3.0 mass % or more, or 4.0 mass % or more, or 5.0 mass % or more, or 6.0 mass % or more, or 7.0 mass % or more, or 8.0 mass % or more, or 9.0 mass % or more, particularly 10.0 mass % or more. On the other hand, the upper limit may preferably be, although not particularly limited to, typically 70 mass % or less, or 65 mass % or less, or 60 mass % or less, or 55 mass % or less, or 50 mass % or less, or 45 mass % or less, or 40 mass % or less, or 35 mass % or less, or 30 mass % or less.

The origin of the oil and fat content in the swollen composition of the present invention is not particularly restricted. Examples include plant-derived oils and fats and animal-derived oils and fats, of which plant-derived oils and fats are preferred. Specifically, the ratio of the content of plant-derived oils and fats in the whole composition may preferably be within the range of 50 mass % or more 100 mass % or less. More specifically, the lower limit may preferably be typically 50 mass % or more, particularly 60 mass % or more, or 70 mass % or more, or 80 mass % or more, or 90 mass % or more. On the other hand, the upper limit may preferably be, although not particularly limited to, typically 100 mass %, or 100 mass % or less. Examples of plant-derived oil and fat content include those derived from general cereals (particularly from specific cereals), those derived from pulse (beans), those derived from potatoes, those derived from vegetables, those derived from nuts, and those derived from fruits, among which olive-derived oil and fat are preferred.

The oil and fat content incorporated in the swollen composition of the present invention may be in the form of an isolated pure product or may be present in the state of being contained in edible plant (particularly pulse and/or cereal, preferably pulse), although the ratio of the oil and fat content present in the state of being contained in edible plant is law. Specifically, the ratio of the oil and fat content incorporated in pulse to the total protein content of the composition may preferably be within the range of 0 mass % or more but less than 65 mass %. More specifically, the upper limit may preferably be typically less than 65 mass %, particularly less than 60 mass %, or less than 50 mass %, or less than 40 mass %, or less than 30 mass %. On the other hand, the lower limit may preferably be, although not particularly limited to, typically 0 mass %, or 0 mass % or more.

The swollen composition of the present invention may preferably be characterized in that the ratio of the liquid oil and fat content to the total oil and fat content is within a predetermined range. Specifically, the ratio of the liquid oil and fat content to the total oil and fat content in the swollen composition of the present invention may preferably be within the range of 20 mass % or more 100 mass % or less. More specifically, the lower limit may preferably be typically 20 mass % or more preferably, particularly 30 mass % or more, or 40 mass % or more, or 50 mass % or more, or 60 mass % or more, or 70 mass % or more, or 80 mass % or more, or 90 mass % or more. On the other hand, the upper limit may preferably be, although not particularly limited to, typically 100 mass %, or 100 mass % or less. The liquid oil and fat herein refers to oil and fat that are in the state of liquid at ordinary temperature (20 °C).

(Raw materials)

The raw materials for the swollen compositions of the present invention are not particularly restricted, as long as the various ingredient compositions and properties specified in the present invention can be achieved. However, it is preferable to use one or more edible plants as raw materials, and it is more preferable to use pulse and/or cereal as edible plants, still more preferably at least one species of pulse. Examples of edible plants than can be used include plant ingredients classified under the food groups in the Japan Standard Tables for Food Composition 2015 (7th revised edition) (e.g., vegetables, potatoes, mushrooms, fruits, algae, cereals, nuts, etc.), as well as wild plants normally used for dietary purpose as vegetables (e.g., psyllium (obako or plantain), warabi (common bracken or eagle fern), fuki (butterbur or sweet-coltsfoot), yomogi (Japanese mugwort or first wormwood), etc.). The dry mass basis moisture content of an edible plant to be used for the composition of the present invention may preferably be within the range of 0 mass % or more but less than 15 mass %. More specifically, the upper limit may preferably be typically less than 15 mass %, particularly less than 13 mass %, or less than 11 mass %, or less than 10 mass %. On the other hand, the lower limit of the dry mass basis moisture content may be, although not particularly limited to, typically 0 mass % or more, or 0.01 mass % or more.

*Pulse:

When pulse is used as edible plant in the swollen composition of the present invention, preferable examples of pulse species that can be used include, although not limited to, one or more selected from Pisum, Phaseolus, Cajanus, Vigna, Vicia, Cicer, Glycine, and Lens species, more preferably from Pisum, Phaseolus, Cajanus, Vigna, Vicia, Cicer, and Lens species. Specific examples of pulse species include, although not limited to: peas (in particular, yellow peas, white peas, and green peas, which are immature seeds), kidney beans, red kidney beans, white kidney beans, black beans, pinto beans, toramame (a variation of kidney beans: concord paul), lima beans, scarlet runner beans, pigeon peas, mung beans, cowpeas, azuki beans, broad beans (vicia faba), soybeans (especially edamame, which are immature seeds of soybeans harvested with their pods in their immature state and characterized by the green appearance of the beans), chickpeas, lentils, blue peas, scarlet runner beans, peanuts, lupin beans, glass peas, locust beans (carob), twisted cluster beans, African locust beans, coffee beans, cacao beans, and Mexican jumping beans. Other classifications of foodstuffs not exemplified can be naturally understood by those skilled in the art who deal with the foodstuffs or processed products of the foodstuffs. Specifically, this can be clearly understood by referring to the food group classifications (p. 249, Table 1) in the Japan Standard Tables for Food Composition 2015 (7th revised edition), which are also widely used in everyday aspects of life in the general household. These pulse species may be used either any one singly or in any combination of two or more.

The pulse to be used for the swollen composition of the present invention may preferably have a starch content of a predetermined value or more. Specifically, the starch content in the pulse may preferably be within the range of 3 mass % or more but 80 mass % or less in terms of wet mass basis. More specifically, the lower limit may preferably be typically 3.0 mass % or more, or 5.0 mass % or more, or 10.0 mass % or more, or 15.0 mass % or more, or 20.0 mass % or more, or 25.0 mass % or more, or 30.0 mass % or more, or 35 mass % or more, or 40.0 mass % or more. On the other hand, the upper limit of the starch content in the pulse may be, although not particularly limited to, typically 80 mass % or less, or 75.0 mass % or less, or 70.0 mass % or less, or 65.0 mass % or less, or 60.0 mass % or less.

When pulse is used for the swollen composition of the present invention, it is preferable to use mature pulse rather than immature pulse seeds (e.g. green peas, which are immature pea seeds, or edamame, which are immature soybean seeds), because the proportion of the intermediate molecular weight fraction (molecular weight log 6.5 to 8.0) of starch in the composition increases. For the same reason, it is preferable to use pulse which is in a state where the dry mass basis moisture content is a predetermined value or less as they mature. Specifically, the dry mass basis moisture content in the pulse to be used for the composition of the present invention may preferably be within the range of 0 mass % or more but less than 15 mass %. More specifically, the upper limit may preferably be typically less than 15 mass %, particularly less than 13 mass %, or less than 11 mass %, or less than 10 mass %. On the other hand, the lower limit of the dry mass basis moisture content of the pulse may be, although not particularly limited to, typically 0 mass % or more, or 0.01 mass % or more.

*Cereal:

The term "cereal" used herein refers to general cereal species but excluding rice, wheat and barley, which are main cereal species, and the concept of cereal includes so-called pseudo-cereals other than those belonging to Poaceae family (Acanthaceae, Ascomycota). When cereal is used in the composition of the present invention, preferable examples of pulse species that can be used include, although not limited to, one or more selected from Poaceae, Chenopodiaceae, and Amaranthaceae species, more preferably from Poaceae species. Specific examples include, although not limited to, awa (foxtail millet), hie (Japanese millet), kibi (common millet), sorghum, rye, oats, hatomugi (job's tear), corn, buckwheat, amaranthus, and quinoa. It is particularly desirable to use one or more of oats, amaranthus and quinoa, more preferably oats, which contain high levels of soluble dietary fiber. Cereal may preferably be substantially gluten-free (specifically, with a gluten content of less than 10 ppm by mass), more preferably gluten-free.

The cereal to be used for the swollen composition of the present invention may preferably have a starch content of a predetermined value or more. Specifically, the starch content in the cereal may preferably be within the range of 10.0 mass % or more but 80 mass % or less in terms of wet mass basis. More specifically, the lower limit may preferably be typically 10.0 mass % or more, or 15.0 mass % or more, or 20.0 mass % or more, or 25.0 mass % or more, or 30.0 mass % or more, or 35.0 mass % or more, or 40.0 mass % or more. On the other hand, the upper limit of the starch content in the cereal may be, although not particularly limited to, typically 80 mass % or less, or 75.0 mass % or less, or 70.0 mass % or less, or 65.0 mass % or less, or 60.0 mass % or less.

When cereal is used for the swollen composition of the present invention, it is preferable to use dried cereal, because the proportion of the intermediate molecular weight fraction (molecular weight log 6.5 to 8.0) of cereal in the composition increases. For the same reason, it is preferable to use cereal which is in a state where the dry mass basis moisture content is a predetermined value or less as they mature. Specifically, the dry mass basis moisture content in the cereal to be used for the swollen composition of the present invention may preferably be within the range of 0 mass % or more but less than 15 mass %. More specifically, the upper limit may preferably be typically less than 15 mass %, particularly less than 13 mass %, or less than 11 mass %, or less than 10 mass %. On the other hand, the lower limit of the dry mass basis moisture content of the cereal may be, although not particularly limited to, typically 0 mass % or more, or 0.01 mass % or more.

*Contents and particle diameters of pulse and/or cereal:

When pulse is used for the swollen composition of the present invention, the pulse content in the composition of the present invention may preferably be within the range of, although not limited to, 1 mass % or more but 100 mass % or less, in terms of wet mass basis. More specifically, the lower limit may preferably be typically 1 mass % or more, or 3 mass % or more, or 5 mass % or more, or 8 mass % or more, or 10 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, or 85 mass % or more, or 90 mass % or more, or 95 mass % or more. On the other hand, the upper limit may preferably be, although not particularly limited to, typically 100 mass %, or 100 mass % or less.

When cereal is used for the swollen composition of the present invention, the cereal content in the composition of the present invention may preferably be within the range of, although not limited to, 1 mass % or more but 100 mass % or less, in terms of wet mass basis. More specifically, the lower limit may preferably be typically 1 mass % or more, or 3 mass % or more, or 5 mass % or more, or 8 mass % or more, or 10 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, or 85 mass % or more, or 90 mass % or more, or 95 mass % or more. On the other hand, the upper limit may preferably be, although not particularly limited to, typically 100 mass %, or 100 mass % or less.

When pulse and/or cereal is used for the composition of the present invention, the total content of pulse and/or cereal in the composition of the present invention may preferably be within the range of, although not limited to, 1 mass % or more but 100 mass % or less, in terms of wet mass basis. More specifically, the lower limit may preferably be typically 1 mass % or more, or 3 mass % or more, or 5 mass % or more, or 8 mass % or more, or 10 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more, or 65 mass % or more, or 70 mass % or more, or 75 mass % or more, or 80 mass % or more, or 85 mass % or more, or 90 mass % or more, or 95 mass % or more. On the other hand, the upper limit may preferably be, although not particularly limited to, typically 100 mass %, or 100 mass % or less.

When pulse and/or cereal is used for the swollen composition of the present invention, it is preferable to use pulse and/or cereal in the form of powder. Specifically, it is preferred to use pulse and/or cereal powder which, when measured using a laser diffraction particle size analyzer after ultrasonication, has a particle diameter $d_{90}$ and/or $d_{50}$ which each satisfy a predetermined upper limit or less.

Specifically, the particle diameter $d_{90}$ of the pulse powder after ultrasonication may preferably be within the range of 0.3 μm or more but less than 500 μm. More specifically, the upper limit may preferably be typically less than 500μm, more preferably 450 μm or less, particularly 400 μm or less, or 350 μm or less, or 300 μm or less, or 275 μm or less, or 250 μm or less, or 225 μm or less, or 200 μm or less, or 175 μm or less, or 150 μm or less, or 125 μm or less, or 100 μm or less, or 90 μm or less, or 80 μm or less, or 70 μm or less, or 60 μm or less, or 50 μm or less. On the other hand, the lower limit may preferably be, although not particularly limited to, typically 0.3 μm or more, or 1 μm or more, or 5 μm or more, or 8 μm or more, or 10 μm or more, or 15 μm or more.

Likewise, the particle diameter $d_{50}$ of the pulse powder after ultrasonication may preferably be within the range of 0.3 μm or more but less than 500 μm. More specifically, the upper limit may preferably be typically less than 500μm, more preferably 450 μm or less, particularly 400 μm or less, or 350 μm or less, or 300 μm or less, or 250 μm or less, or 200 μm or less, or 150 μm or less, or 100 μm or less, or 90 μm or less, or 80 μm or less, or 70 μm or less, or 60 μm or less, or 50 μm or less. On the other hand, the lower limit may preferably be, although not particularly limited to, typically 0.3 μm or more, or 1 μm or more, or 5 μm or more, or 8 μm or more, or 10 μm or more.

Especially if the above size of the composition is a certain upper limit or more, the composition surface may become non-uniform. Therefore, it is preferable to use powdered pulse and/or cereal, preferably pulse, with a size of the above-mentioned upper limit or less. When the aforementioned powdered pulse and/or powdered cereal is used, the powdered pulse and/or powdered cereal may be bound together in the resulting swollen composition while retaining their shape, or the pulse and/or cereal powder may be melted and blended together in the resulting swollen composition during processing.

*Other food materials:*

The swollen composition of the present invention may further contain any one or more food ingredients. Examples of such food ingredients include plant ingredients (edible plants other than pulse and/or cereal, specifically vegetables, potatoes, mushrooms, fruits, algae, grains, seeds, etc.), animal ingredients (seafood, meat, eggs, milk, etc.), and microbial food products. Wild plants normally used for dietary purpose as vegetables (psyllium, warabi (common bracken or eagle fern), fuki (butterbur or sweet-coltsfoot), yomogi (Japanese mugwort or first wormwood) 等) can also be used. The amount of these food ingredients can be set appropriately as long as they do not undermine the purpose of the present invention.

*Seasonings and food additives:*

The swollen composition of the present invention may contain any one or more seasonings, food additives, etc., or the contents of these seasonings may be limited as explained above. Examples of seasonings and food additives include: soy sauce, miso (Japanese fermented soybean paste), alcohols, sugars (e.g., glucose, sucrose, fructose, glucose-fructose liquid sugar, glucose-fructose liquid sugar, etc.), sugar alcohols (e.g., xylitol, erythritol, maltitol, etc.), artificial sweeteners (e.g., sucralose, aspartame, saccharin, acesulfame K, etc.), minerals (e.g., calcium, potassium, sodium, iron, zinc, magnesium, etc., and their salts), flavoring agents, pH adjusters (e.g., sodium hydroxide, potassium hydroxide, lactic acid, citric acid, tartaric acid, malic acid and acetic acid), cyclodextrins, antioxidants (e.g., vitamin E, vitamin C, tea extract, green coffee bean extract, chlorogenic acid, spice extract, caffeic acid, rosemary extract, vitamin C palmitate, rutin, quercetin, peach extract, sesame extract, etc.), emulsifiers (e.g., glycerin fatty acid esters, acetic acid monoglycerides, lactic acid monoglycerides, citric acid monoglycerides, diacetyl tartaric acid monoglycerides, succinic acid monoglycerides, polyglycerin fatty acid esters, polyglycerin condensed linosylate esters, chiraya extracts, soybean saponins, chia seed saponins, sucrose fatty acid esters, lecithin, etc.), colorants, thickening stabilizers, etc.

In addition, it may be desirable for the swollen compositions of the present invention (especially the fermented swollen compositions) to separately add sugars (e.g., glucose, sucrose, fructose, glucose-fructose liquid sugar, glucose-fructose liquid sugar, etc.). For example, in the fermented swollen composition, which is an embodiment of the present invention, it may be preferable to separately include sugars other than those in the state contained in pulse and/or cereal, since this may serve to increase the fermentation efficiency. The content of sugars (preferably monosaccharides and/or disaccharides) in terms of wet mass basis may be, although is not limited to, 1 mass % or more but 10 mass % or less. Specifically, its lower limit may preferably be 1 mass % or more, or 2 mass % or more, or 3 mass % or more. Its upper limit may preferably be 10 mass % or less, or 9 mass % or less, or 8 mass % or less. The addition of sugars may be carried out in, although not limited to, step (i) and/or step (ii) below.

However, in view of the recent increase in nature consciousness, the swollen composition of the present invention may preferably be characterized in that the content of at least one type of additives selected from the so-called emulsifiers, colorants, and thickening stabilizer (e.g., those listed in the "Table of food additive substance names for labeling" section of the "Pocket Book of Food Additives Labeling (2011 edition)" as "colorants," "thickening stabilizers," and "emulsifiers") is typically 1.0 mass % or less, particularly 0.5 mass % or less, or 0.1 mass % or less, particularly substantially zero (specifically, it represents a content of less than 1 ppm, which is the lower limit of the general measurement method), or zero. It is more preferred that the content of each of at least two types of additives selected from the so-called emulsifiers, colorants, and thickening stabilizer is typically 1.0 mass % or less, particularly 0.5 mass % or less, or 0.1 mass % or less, particularly substantially zero (specifically, it represents a content of less than 1 ppm, which is the lower limit of the general measurement method), or zero. It is still more preferred that the content of each of the so-called emulsifiers, colorants, and thickening stabilizer is typically 1.0 mass % or less, particularly 0.5 mass % or less, or 0.1 mass % or less, particularly substantially zero (specifically, it represents a content of less than 1 ppm, which is the lower limit of the general measurement method), or zero.

[Wheat and gluten]

The swollen composition of the present invention may preferably be characterized in that the wheat content in the composition is within a predetermined rang. Specifically, the wheat content in the swollen composition of the present invention may preferably be within the range of 0 mass % or more but 50 mass % or less, in terms of wet mass basis. More specifically, the upper limit may preferably be typically 50 mass % or less, particularly 40 mass % or less, or 30 mass % or less, or 20 mass % or less, or 10 mass % or less, particularly substantially zero (specifically, it represents a content of less than 1 ppm, which is the lower limit of the general measurement method), or zero. The swollen composition of the present invention is especially useful since it can sufficiently swell and also exhibit viscoelasticity (pull) characteristic of starch network even when its wheat content ratio is equal to these upper limits or less. It is also useful because it softens the hardening of the resulting composition due to cooling and prevents it from shrinking even after cooling. On the other hand, the lower limit of the ratio may be, although not particularly limited to, typically 0 mass %, or 0 mass % or more.

The swollen composition of the present invention may preferably be characterized in that the content ratio of wheat-derived protein to the total protein content in the composition is within a predetermined range. Specifically, the content ratio of wheat-derived protein to the total protein content in the composition may preferably be within the range of 0 mass % or more 50 mass % or less. More specifically, the upper limit may preferably be typically 50 mass % or less, particularly 40 mass % or less, or 30 mass % or less, or 20 mass % or less, or 10 mass % or less, particularly substantially zero (specifically, it represents a content of less than 1 ppm, which is the lower limit of the general measurement method), or zero. The swollen composition of the present invention is especially useful when the content ratio of wheat-derived protein to the total protein content is equal to these upper limits or less since it can sufficiently swell and also exhibit viscoelasticity (pull) characteristic of starch network even when its wheat content is relatively law. It is also useful because it softens the hardening of the resulting composition due to cooling and prevents it from shrinking even after cooling. On the other hand, the lower limit of the ratio may be, although not particularly limited to, typically 0 mass %, or 0 mass % or more.

The swollen composition of the present invention may preferably be characterized in that it is substantially gluten-free (specifically, it represents a content of less than 1 ppm, which is the lower limit of the general measurement method), or gluten-free. The swollen composition of the present invention is especially useful since it can sufficiently swell and also exhibit viscoelasticity (pull) characteristic of starch network even when it is substantially gluten-free. It is also useful because it softens the hardening of the resulting composition due to cooling and prevents it from shrinking even after cooling.

Conventional solid paste compositions for heat cooking (especially those containing gluten in a network structure) retain compositional viscoelasticity by containing sodium chloride, but have problems in terms of affecting the taste and resulting in excessive salt intake. These challenges were particularly pronounced in compositions in the dry state (e.g. dried udon noodles, dried hiyamugi noodles, etc.), where more than 3 mass% sodium chloride is usually used to maintain compositional viscoelasticity. On the other hand, the composition of the present invention is preferable because it exhibits reduced viscoelasticity loss and has a good quality even with a very limited amount of, or without the addition of, sodium chloride. The invention is also preferred for specific types of solid paste compositions for heat cooking such as pasta, udon noodles and bread, which normally have adhesion and elasticity due to the network structure gluten and sodium chloride, as the invention can be applied to produce a composition of good quality without the addition of sodium chloride.

Specifically, the sodium chloride content in the swollen composition of the present invention may preferably be within the range of 0 mass % or more 3 mass % or less in terms of dry mass basis. More specifically, the upper limit may preferably be typically 3 mass % or less, particularly 2 mass % or less, or 1 mass % or less, or 0.7 mass % or less, particularly 0.5 mass % or less. The lower limit of the sodium chloride content in the swollen composition of the present invention is not particularly restricted, and may be 0 mass %. In the present invention, the sodium chloride content in a solid paste composition may be determined, for example, according to the "Salt equivalent" section in the Japan Standard Tables for Food Composition 2015 (7th revised edition), by measuring the amount of sodium using the atomic absorption method and multiplying the measured amount by 2.54.

[Swollen food]

The swollen composition of the present invention is typically a swollen food. The term "swollen food" used herein refers to a food consisting of a swollen composition or a food prepared using a swollen composition as a main ingredient. More specifically, it refers to a food product produced by increasing the volume of a dough composition by swelling it through a heat treatment. Examples include: bread or similar lumpy-swollen composition foods (also referred to as bread-like foods); puff-like compositions, which are special types of lumpy lumpy-swollen composition foods, especially those swollen by rapid decompression of dough that has been heat-treated under pressurized conditions; and crackers or similar foods (also referred to as cracker-like foods), which are special types of lumpy lumpy-swollen composition foods which have a plate-like shape with a smaller thickness.

The swollen composition of the present invention may preferably be characterized by having a unique swollen-food texture. The term "unique swollen-food texture" used herein refers to a texture that is derived from porous structure inside a swollen food composition and is perceived due to the difference in strength between solid structure and pores in the composition. Specific examples of such unique swollen-food texture include fluffiness of bread. Even once formed, such unique swollen-food texture is less likely to be felt if the composition becomes hard and its structure is difficult to break down, or if the composition is unable to retain its swollen state and shrivels up, reducing the internal pores.

[Storage]

The method for storing the swollen composition of the present invention is not limited, and may be either storage at ordinary temperature or refrigerated storage. It is particularly desirable to provide the composition as a dry grocery product that can be distributed at room temperature and stored for a long period of time (which refers herein to more than one week, more preferably more than one month), as it is less likely to deteriorate in quality. It is particularly desirable to make long-life storage swellings with a shelf life longer than one week (more preferably one month) at ordinary temperature. Although the principle behind this is unknown, it is deemed that the difference between plant polysaccharides with relatively small molecular weight sizes (especially seed skin of psyllium) and plant polysaccharides with relatively large molecular weight sizes is increased (i.e., 2ndMP/1stMP is decreased), and a specific viscosity property defined by [Value $\beta$] / [Value $\alpha$] is added, which makes a starch-based support structure stronger and allows for the retention of bubbles of sufficient size in the composition even after long-term storage.

Any container can be used for filling the swollen composition of the present invention. Examples include: containers for long-term storage at ordinary temperature with a shelf life longer than one month from manufacture; containers partially or wholly made of resin; multiple-use containers that can be used multiple times by sealing the container opening once opened; resealable containers with a mechanism such as a cap or stopper that can be resealed to the extent that the contents do not leak out; and even other containers that are susceptible to deterioration of the composition inside.

[Production method of starch-containing swollen composition]

The swollen composition of the present invention is obtainable by a specific method including steps (i) and (ii) below (hereinafter also referred to as "the production method of the present invention").

(i) The step of preparing a dough composition containing starch derived from pulse and/or cereal and satisfying the requirements (1) to (5) below.

(1) The starch content in terms of wet mass basis is 3 mass % or more.
(2) The dry mass basis moisture content is more than 60 mass %.
(3) The dietary fiber content in terms of wet mass basis is 3.0 mass % or more.
(4) The plant polysaccharide content in terms of wet mass basis is 0.1 mass % or more.
(5) When the composition is subjected to measurement according to <Method a>, the ratio of [Value $\beta$] / [Value $\alpha$] as defined below is 100 or less.

[Value $\alpha$]: A breakdown viscosity (cP) during temperature increasing step (a1).
[Value $\beta$]: A peak viscosity (cP) during temperature decreasing step (a2).

(ii) The step of swelling the dough composition from step (i) via heating treatment step such that the requirements (6) and optionally (7) below are satisfied.

(6) The dry mass basis moisture content of the composition decreases by 5 mass % or more during the heating treatment.
(7) When the dough composition is subjected to [Procedure b] below and the resulting product is subjected to measurement under [Condition B] below to obtain a molecular weight distribution curve in an interval with molecular weight logarithms of 3.0 or more but less than 6.0 ($MWDC_{3.0-6.0}$), the ratio of the molecular weight logarithm at the peak apex of 2ndMP to the molecular weight logarithm at the peak apex of 1stMP (2ndMP/1stMP) decreases by 1 % or more during the heating treatment.

The production method of the present invention includes, in addition to steps (i) and (ii) above, step (iii) below. (iii) The step of subjecting the swollen composition from step (ii) to treatment under reduced pressure.
Steps (i), (ii), and (iii) of the production method of the present invention are explained in detail below.

*Step (i): Preparation of the dough composition:

In this step (i), a food ingredient as a raw material for the composition of the present invention, e.g., pulse and/or cereal, may be mixed with other food ingredients optionally used along with water to prepare a dough composition which is a basis for the swollen composition of the present invention. The dough composition (or dough) may be in any form as long as the food ingredients are partly or wholly integrated with water, and it may be in liquid, sol, gel or solid form. For example, it may be in a plasticized form, such as bread dough, or it may be in a non-plasticized form, such as a minced form. The method for preparing the dough composition is not particularly restricted, but may be a method in which a food ingredient as a raw material for the composition of the present invention (preferably at least one or more pulse and/or cereal, optionally in combination with one or more other edible plants) is simply mixed with other food ingredient, seasoning, and other ingredients optionally used to prepare the dough composition.
Raw materials for the dough composition in step (i) are not particularly restricted, as long as they can achieve various ingredients, contents, and properties required for the present invention. However, it is desirable to use one or more edible plants as a raw material, and also preferable to use, as an edible plant, pulse and/or cereal, more preferably at least pulse. Examples of edible plants that can be used in the present invention include plant food materials described in the Japan Standard Tables for Food Composition 2015 (7th revised edition) (e.g., edible plants other than pulse and/or cereal, specifically vegetables, potatoes, mushrooms, fruits, algae, grains, seeds, etc.), as well as wild plants normally used for dietary purpose as vegetables (e.g., psyllium, warabi (common bracken or eagle fern), fuki (butterbur or sweet-coltsfoot), and yomogi (Japanese mugwort or first wormwood)). The dry mass basis moisture content of edible plant in the swollen composition of the present invention may preferably be within the range of 0 mass % or more but less than 15 mass %. More specifically, its upper limit may preferably be typically less than 15 mass %, or less than 13 mass %, or less than 11 mass %, or less than 10 mass %. On the other hand, the lower limit of the dry mass basis moisture content is not particularly limited, but may preferably be typically 0 mass % or more, or 0.01 mass % or more.
The dough composition in step (i) may preferably be prepared to satisfy the following various conditions.
The dough composition in step (i) has a starch content which is a predetermined value or more. Specifically, the starch content of the dough composition in terms of wet mass basis may preferably be within the range of 3.0 mass % or more, while the upper limit is not particularly limited, but may be 60 mass % or less. More specifically, its lower limit may preferably be typically 3.0 mass % or more, or 5.0 mass % or more, or 8.0 mass % or more, or 9.0 mass % or more, or 10.0 mass % or more, or 12.0 mass % or more, or 13.0 mass % or more, or 14.0 mass % or more, or 15.0 mass % or more, or 18.0 mass % or more, or 20.0 mass % or more. The upper limit is not particularly limited, but may be typically 60 mass % or less, or 55.0 mass % or less, or 50.0 mass % or less, or 45.0 mass % or less, or 40.0 mass % or less, or 35.0 mass % or less, or 30.0 mass % or less.

The dough composition in step (i) may preferably be characterized in that the dry mass basis moisture content of the composition exceeds a predetermined value. Its technical significance is that if the dry mass basis moisture content is a predetermined value or less, it may be difficult for the enzyme reaction to proceed, so that it may be preferable to maintain the period in the heating treatment of step (ii) during which the dry mass basis moisture content exceeds a predetermined value for a certain period of time for more, thereby facilitating the enzyme reaction to decrease 2ndMP/1stMP (accordingly, the 2ndMP/1stMP value of the swollen composition of the present invention is different from the value in the raw materials before the heating treatment or from the values in compositions with different factors that have a significant effect on the degradative enzyme reaction (e.g., dough enzyme activity, dough addition conditions, heat treatment conditions, etc.)). Specifically, the dry mass basis moisture content of the dough composition may preferably be within the range of more than 60 mass %, while the upper limit is not particularly limited, but may be 300 mass % or less. More specifically, its lower limit may preferably be typically more than 60 mass %, or more than 65 mass %, or more than 70 mass %, or more than 80 mass %, or more than 90 mass %, or more than 99 mass %, especially more than 100 mass %. The upper limit is not particularly limited, but may be typically 300 mass % or less, or 275 mass % or less, or 250 mass % or less, or 225 mass % or less.

The dry mass basis moisture content in the dough composition may preferably be maintained to be higher than a predetermined value for a predetermined time or more. The period of time during which the dry mass basis moisture content is maintained to be higher than a predetermined value may be adjusted as appropriate, taking into consideration the reaction rate, which is determined based on, e.g., enzyme activity, reaction temperature, and dry mass basis moisture content, and also taking into consideration the change ratios of the various parameters mentioned above. Specifically, the period of time may preferably be within the range of 1 minute or more but 24 hours or less. More specifically, its lower limit may preferably be typically 1 minute or more, or 2 minutes or more, or 3 minutes or more. On the other hand, its upper limit is not particularly limited, but may be typically 24 hours or less, or 16 hours or less. The reaction temperature of the dough composition may also be set based on, e.g., the change ratios of the various parameter of the swollen composition, but may preferably be within the range of 30 °C or more but 300 °C or less. More specifically, its lower limit may preferably be typically 30 °C or more, or 40 °C or more, or 50 °C or more, or 60 °C or more, or 70 °C or more, or 80 °C or more, or 90 °C or more, or 100 °C or more, or 110 °C or more, especially 120 °C or more. On the other hand, its upper limit is not particularly limited, but may be typically 300 °C or less, or 260 °C or less, or 230 °C or less. The step of maintaining the dry mass basis moisture content in the dough composition to be higher than the predetermined limit for a predetermined amount of time or more may be carried out after the preparation of the dough composition at step (i) and before the heating at step (ii), or at least a part or all of this step may be achieved during the heating at step (ii).

In addition, while maintaining the dry mass basis moisture content in the dough composition to be higher than the predetermined limit for a predetermined amount of time or more, it is possible to produce the swollen composition of the present invention by carrying out the fermentation step described below, or by carrying out an enzyme treatment in the dough composition and then swelling the treated dough composition by heat treatment. Specifically, the swollen composition of the present invention can be produced by yeast fermentation using yeast incorporated in the dough composition, or by carrying out an enzymatic treatment reaction with a starch degradative enzyme incorporated in the dough composition or carrying out an enzymatic treatment reaction of psyllium husk (preferably with cellulase and/or pectinase and/or xylanase, more preferably at least with pectinase and/or xylanase), which is incorporated in the dough composition, and then swelling the treated dough composition by heat treatment. In such cases, the statement "before heat treatment" refers to the state of the dough composition before the fermentation and enzyme treatments (i.e. immediately after preparation), while the statement "after heat treatment" refers to the state of the swollen composition after the dough composition has undergone fermentation and enzyme treatments and have swollen.

The dietary fiber content (the total content of soluble dietary fiber and insoluble dietary fiber) in the dough composition prepared in step (i) may preferably be equal to or more than a predetermined limit. Specifically, the dietary fiber content (especially the insoluble dietary fiber content) in the dough composition in terms of wet mass basis may be within the range of 3.0 mass % or more, while the upper limit is not particularly limited, but may be 30 mass % or less. More specifically, its lower limit may preferably be typically 3.0 mass % or more, or 3.5 mass % or more, or 4.0 mass % or more, or 4.5 mass % or more, or 5.0 mass % or more, or 6.0 mass % or more, or 7.0 mass % or more. The upper limit is not particularly limited, but may be typically 30 mass % or less, or 25 mass % or less, or 20 mass % or less.

The content of plant viscous components (especially plant polysaccharides) in the dough composition in step (i) may preferably be a predetermined value or more. Specifically, the plant polysaccharides content in terms of wet mass basis in the dough composition may preferably be within the range of 0.1 mass % or more, while the upper limit is not particularly limited, but may be 40 mass % or less. More specifically, its lower limit may preferably be typically 0.1 mass % or more, or 0.2 mass % or more, or 0.3 mass % or more, or 0.4 mass % or more, or 0.5 mass % or more, or 0.8 mass % or more, or 1.0 mass % or more, or 1.5 mass % or more, or 1.8 mass % or more, or 2.0 mass % or more, or 3.0 mass % or more. The upper limit is not particularly limited, but may be typically 40 mass % or less, or 30 mass % or less, or 20 mass % or less.

The dough composition in step (i) may preferably be characterized in that the ratio of the peak viscosity during temperature decreasing step (a2) [Value $\beta$] to the breakdown viscosity during temperature increasing step (a1) [Value $\alpha$] ([Value $\beta$] / [Value $\alpha$]) is within a predetermined range. Specifically, the [Value $\beta$] / [Value $\alpha$] ratio of the dough composition may be within the range of typically 100 or less, while its lower limit is not particularly limited, but may be 0. More specifically, its upper limit may preferably be typically 100 or less, preferably 90 or less, or 80 or less, or 70 or less, or 50 or less, or 40 or less, or 30 or less, or 20 or less. If this value exceeds the upper limit, the swollen composition may not swell sufficiently or may not be provided with sufficient viscoelasticity (pull) characteristic of starch network. If the viscosity of the composition is so high that [value $\beta$] cannot be measured and the ratio of [Value $\beta$] / [Value $\alpha$] cannot be calculated, the ratio of [value $\beta$]/[value $\alpha$] shall be considered to exceed the aforementioned limits and be therefore unsuitable. On the other hand, its lower limit is not particularly limited, but may be 0, or 0 or more, or 0.5 or more.

The starch degradative enzyme activity in the dough composition prepared in step (i) may preferably be equal to or more than a predetermined limit. Specifically, the starch degradative enzyme activity in the dough composition in terms of dry mass basis may preferably be within the range of 0.2 U/g or more but 100.0 U/g or less. More specifically, the lower limit may preferably be typically 0.2 U/g or more, particularly 0.4 U/g or more, or 0.6 U/g or more, or 0.8 U/g or more, or 1.0 U/g or more, or 2.0 U/g or more, or 3.0 U/g or more, especially 4.0 U/g or more. On the other hand, the upper limit of the ratio may be, although not particularly limited to, typically 100.0 U/g or less, or 50.0 U/g or less, or 30.0 U/g or less, or 10.0 U/g or less, or 7.0 U/g or less.

As the raw material for the dough composition in step (i), it is preferable to use edible plant (e.g., pulse and/or cereal, especially pulse) with high starch degradative enzyme activity. Specifically, the starch degradative enzyme activity of the raw material in terms of dry mass basis may preferably be within the range of 0.2 U/g or more but 100.0 U/g or less. More specifically, its lower limit may preferably be typically 0.2 U/g or more, or 0.4 U/g or more, or 0.6 U/g or more, or 0.8 U/g or more, or 1.0 U/g or more, or 2.0 U/g or more, or 3.0 U/g or more, or 4.0 U/g or more. On the other hand, the upper limit of the ratio is not particularly limited, but may preferably be typically 100.0 U/g or less, or 50.0 U/g or less, or 30.0 U/g or less, or 10.0 U/g or less, or 7.0 U/g or less.

In order to prevent the inactivation of starch degradative enzymes in edible plant (e.g., pulse and/or cereal, especially pulse), edible plant to be used as a raw material may preferably be pre-treated so as to have a high starch degradative enzyme activity, e.g., by carrying out heat treatment under a circumstance with a dry mass basis moisture content at a predetermined ratio or less (e.g., typically 70 mass % or less, or 60 mass % or less, or 50 mass % or less, or 40 mass % or less, or 30 mass % or less, especially 20 mass % or less). The temperature of the heat treatment may preferably be within the range of 60 °C or higher but 300 °C or lower. More specifically, the upper limit may preferably be typically 300 °C or lower, or 260 °C or lower, or 220 °C or lower, or 200 °C or lower. On the other hand, since carrying out heat treatment at a temperature of a predetermined value or higher in advance may serve to remove undesirable scents in the raw material, the treatment temperature may preferably be at a predetermined temperature or more. Specifically, the temperature may preferably be typically 60 °C or higher, particularly 70 °C or higher, or 80 °C or higher, or 90 °C or higher, especially 100 °C or higher. The duration of the heat treatment may be set as appropriate as long as the starch degradative enzyme activity is adjusted to a predetermined limit, but may preferably be within the range of 0.1 minutes or more but 60 minutes or less. More specifically, the lower limit may preferably be typically 0.1 minutes or more, or 1 minute or more. On the other hand, the upper limit is not particularly restricted, but may be typically 60 minutes or less.

The enzyme activity unit (U/g) can be determined as follows. A measurement sample is subjected to the enzyme reaction for 30 minutes, and the absorbance reduction rate C (%) at a wavelength of 660 nm measured with a spectrophotometer before and after the reaction was determined as the absorbance reduction rate of the enzyme reaction zone (absorbance A) relative to the comparison zone (absorbance B), i.e., {(absorbance B) - (absorbance A) / (absorbance B)} x 100 (%). The enzyme activity that reduces absorbance by 10% per 10 minutes is determined as one unit (U), and the enzyme activity per gram of the sample measured is determined from the absorbance reduction rate C (%) when the enzyme reaction is conducted with 0.25 mL of the enzyme solution (sample content: 0.025 g) for 30 minutes, using the following formula.

[Formula 2]

$$\text{Enzyme activity unit (U/g)} = \{C \times (10/30) \times (1/10)\}/0.025$$

Specific examples of starch degradative enzymes to be incorporated in the dough composition include amylase. The enzyme may be either derived from edible plant (e.g., pulse and/or cereal, especially pulse) as the raw material of the dough composition or may be added to the dough composition externally. However, a predetermined ratio or more of the starch degradative enzyme activity in the dough composition may preferably be derived from edible plant as the raw material of the dough composition, preferably from pulse and/or cereal, more preferably from pulse. Specifically, the ratio of the starch degradative enzyme activity derived from edible plant (e.g., pulse and/or cereal, especially pulse) as the raw material to the starch degradative enzyme activity in the dough composition may preferably be within the range of 30 % or more 100 % or less. More specifically, the lower limit may preferably be typically 30 % or more, particularly 40 % or more, or 50 % or more, or 60 % or more, or 70 % or more, or 80 % or more, or 90 % or more. On the other hand, the upper limit is not particularly restricted, but may be typically 100 % or less.

In addition, a predetermined ratio or more of the starch degradative enzyme activity in the dough composition may preferably be derived from endogenous degradative enzyme contained in edible plant as the raw material of the dough composition, preferably from endogenous degradative enzyme contained in pulse and/or cereal, more preferably from endogenous degradative enzyme contained in pulse. In this case, the endogenous starch degradative enzyme may preferably be amylase. In this regard, since starch derived from edible plant is considered to be easily degradable by the endogenous degradative enzyme contained in the same plant, the starch degradative enzyme (especially the endogenous degradative enzyme contained in edible plant) may preferably be derived from the same plant as the plant from which the starch contained in the composition is derived. Specifically, the ratio of the starch degradative enzyme activity resulting from the endogenous degradative enzyme contained in edible plant (especially pulse and/or cereal, preferably pulse) as a raw material to the total starch degradative enzyme activity contained in the dough composition may preferably be within the range of 30 % or more and 100 % or less. More specifically, the lower limit may preferably be typically 30 % or more, particularly 40 % or more, or 50 % or more, or 60 % or more, or 70 % or more, or 80 % or more, or 90 % or more. The upper limit is not particularly restricted, but may be typically 100 % or less.

The dough composition in step (i) may preferably be characterized in that when the composition is subjected to starch and protein digestion treatment defined in [Procedure e], and then subjected to measurement for particle diameter distribution, the resulting particle diameter $d_{50}$ is equal to or higher than a predetermined value. Specifically, the particle diameter $d_{50}$ may preferably be within the range of 1 μm or more less than 450 μm. More specifically, its upper limit may preferably be typically less than 450 μm, or 400 μm or less, or 350 μm or less, or 300 μm or less, or 250 μm or less, or 200 μm or less, or 150 μm or less, or 100 μm or less. The lower limit is not particularly limited, but may preferably be typically 1 μm or more, or 5 μm or more, or 7 μm or more. Although the principle behind this is unknown, it is deemed that in the composition of the present invention, which has a starch-based support structure, these components reinforce the support structure, thereby improving swelling during heat treatment and imparting a unique texture to the swollen food. On the other hand, if these components are larger than a certain size, they will penetrate the starch-based support structure and will not retain their swollen state after heat treatment.

The dough composition in step (i) may preferably be characterized in that according to the molecular weight distribution curve $MWDC_{3.0\text{-}6.0}$, the ratio of the molecular weight logarithm value of the peak apex at 2ndMP to the molecular weight logarithm value of the peak apex at 1stMP ("2ndMP/1stMP") is within a predetermined range. Specifically, the 2ndMP/1stMP value of the dough composition may be within the range of 96 % or less, while its lower limit is not particularly limited, but may be 50 % or more. More specifically, its upper limit may preferably be 96 % or less, or 95 % or less, or 94 % or less, or 93 % or less, or 90 % or less, or 88 % or less, or 87 % or less, or 86 % or less. or 85 % or less. If this value exceeds the upper limit, it may be difficult for the swollen composition to swell, or it may be difficult to impart the viscoelasticity (pull) characteristic of the starch network. On the other hand, its lower limit is not particularly limited, but may be typically 50 % or more, or 60 % or more, or 65 % or more.

The degree of gelatinization in the dough composition in step (i) as measured by the method mentioned above may preferably be within a predetermined range. Specifically, the degree of gelatinization in the dough composition in step (i) may be within the range of 0.1 mass % or more but less than 70 mass %. More specifically, its upper limit may preferably be typically less than 70 mass %, or 60 mass % or less, or 50 mass % or less, or 45 mass % or less, or 40 mass % or less, or 35 mass % or less. On the other hand, its lower limit may preferably be, although is not limited to, typically 0.1 mass % or more or, 0.5 mass % or more, or 1 mass % or more. Although the principle behind this is unknown, it is deemed that when the degree of gelatinization in the dough composition is within a predetermined range, the increase ratio in the degree of gelatinization of the composition during baking tends to be high, thereby increasing the size of the bubbles in the resulting composition while retaining the gas generated.

The dough composition in step (i) may preferably be prepared so as to contain pulse and/or cereal, preferably pulse. Its content is not restricted, but may preferably be within the range of 5 mass % or more but 90 mass % or less in terms of wet mass basis. More specifically, its lower limit may preferably be typically 5 mass % or more, or 10 mass % or more, or 15 mass % or more, or 20 mass % or more, or 25 mass % or more, or 30 mass % or more, or 35 mass % or more. The upper limit is not particularly limited, but may preferably be typically 90 mass % or less, or 80 mass % or less, or 70 mass % or less.

The pulse and/or cereal to be used may either have or have not undergone the heat treatment explained below, or may be the combination of a heat-treated one and a non-treated one. The pulse and/or cereal to be used may preferably be in the powder form.

The pulse and/or cereal to be used as a raw material at step (i) of the present invention may also have been mildly heated as warming treatment beforehand in such a manner that the decrement difference of the peak temperature of gelatinization at the temperature increasing step (a1) as measured under the conditions defined in <Method a> above is in a predetermined temperature range. Using such a raw material is desirable because it serves to remove unwanted components in the raw material while maintaining starch grains in the material, which act to aid the swelling of the composition and allow the effects of the present invention to be well achieved. On the other hand, if the decrement difference of the peak temperature of gelatinization is too large, then in the swelling treatment process at step (ii), the starch grains may be completely destroyed to the extent that they do not exhibit RVA peaks, or even if they are not destroyed, they may lose their heat resistance, making it difficult for the effects of the present invention to be realized. Specifically, the decrement difference in the peak temperature of gelatinization before and after the treatment may preferably be within the range of 0 °C or higher 50 °C or lower. More specifically, the upper limit of the decrement difference in temperature may preferably be typically 50 °C or lower, or 45 °C or lower, or 40 °C or lower, or 35 °C or lower, or 30 °C or lower. On the other hand, the lower limit of the decrement difference in temperature is not particularly restricted, but it may be preferable to carry out the treatment in such a manner that the peak temperature of gelatinization decreases by 0 °C or higher, particularly 1 °C or higher, or 2 °C or higher, or 3 °C or higher, or 4 °C or higher, or 5 °C or higher.

The term "peak temperature of gelatinization" used herein represents the temperature (°C) at which the viscosity shows the highest value (cP) within a given temperature range and then turns to a decreasing trend during the temperature increasing step (a1) in the measuring procedure of <Method a>, and is an index reflecting the heat resistance of starch grains. For example, in the case of a composition whose viscosity reaches the highest value at the 50°C holding stage immediately after the start of measurement and then decreases thereafter, then the peak temperature of gelatinization in the composition is 50°C. In the case of a composition whose viscosity reaches the highest value at any temperature T°C ($50 \leq T \leq 140$°C) during the temperature increase step from 50°C to 140°C at the increasing rate of 12.5 °C/min and then decreases after T°C during the temperature increase step, then the peak temperature of gelatinization in the composition is T°C. In the case of a composition whose viscosity reaches the highest value during the 140°C holding step, then the peak temperature of gelatinization in the composition is 140°C.

The pulse and/or cereal to be used as a raw material at step (i) of the present invention may also have been mildly heated as warming treatment beforehand in such a manner that when measured according to <Method a>, the ratio of the peak viscosity (cP) measured during the temperature increasing step (a1) ("Value $\gamma$") to the breakdown viscosity (cP) measured during the temperature increasing step (a1) ("Value $\alpha$") ([Value $\gamma$] / [Value $\alpha$]) is within a predetermined temperature range. Using such a raw material is desirable because it serves to remove unwanted components in the raw material while maintaining starch grains in the material, which act to aid the swelling of the composition and allow the effects of the present invention to be well achieved. On the other hand, if the decrement difference of the peak temperature of gelatinization is too large, then in the swelling treatment process at step (ii), the starch grains may be completely destroyed to the extent that they do not exhibit RVA peaks, or even if they are not destroyed, they may lose their heat resistance, making it difficult for the effects of the present invention to be realized. Specifically, the [Value $\gamma$] / [Value $\alpha$] value may preferably be within the range of 0.1 or more but 1.0 or less. More specifically, the upper limit of the decrement difference in temperature may preferably be typically 0.1 or more, or 0.2 or more, or 0.3 or more. On the other hand, the lower limit of the [Value $\gamma$] / [Value $\alpha$] value is not particularly restricted, but it may preferably be typically 1.0 or less, or 0.9 or less. Pulse and/or cereal raw material (especially raw material powder) that has undergone warming treatment so as to satisfy the above requirement is also included in the subject matter of the present invention.

The term "peak viscosity (cp)" ("Value $\gamma$") as used herein refers to, when the differential value of viscosity transition as measured by RVA first increases and then decreases and then increases again during the temperature increasing step (a1), in which the temperature of the measurement sample is increased from 50 °C to 140 °C at an increasing rate 12 °C/min and then maintained for 3 minutes, the viscosity (cP) at which the differential value changes from increasing to decreasing, and typically refers to, when the viscosity as measured by RVA first increases and then decreases and then increases again during the temperature increase phase a1, the viscosity (cP) at which the viscosity changes from increasing to decreasing. For example, if the viscosity first shows an increasing trend, then remains constant but not decreases, and then increases again, the peak viscosity is the viscosity at the point when the differential value of viscosity transition changes from increasing to decreasing, that is, when the viscosity changes from increasing to remaining constant.

Pulse and/or cereal to be used for the present invention may preferably be characterized in that its degree of gelatinization is within a predetermined range. Specifically, the starch the degree of gelatinization in the pulse and/or cereal to be used for the present invention may be within the range of 0.1 mass % or more but less than 50 mass %. More specifically, its upper limit may preferably be typically 50 mass % or less, or 45 mass % or less, or 40 mass % or less, or 35 mass % or less. On the other hand, its lower limit may preferably be, although is not limited to, typically 0.1 mass % or more, or 0.5 mass % or more, or 1 mass % or more. Pulse and/or cereal raw material (especially raw material powder) that has undergone such warming treatment so as to adjust degree of gelatinization as mentioned above is also included in the subject matter of the present invention. The method of measuring the degree of gelatinization as a characteristic of the beans and/or cereals used in this invention is the same as the method of measuring the degree of gelatinization as a characteristic of the swollen composition of the present invention, and is described separately above in detail.

Pulse and/or cereal to be used for the present invention may be subjected to warming treatment such that when 6% suspension of its crushed product is observed, the number of starch grain structures may preferably be within a predetermined range. Specifically, the number of starch grain structures in the pulse and/or cereal raw material (especially raw material powder) having undergone such warming treatment may preferably be, although is not limited to, within the range of 10/mm$^2$ or more but 100000/mm$^2$ or less. Specifically, the lower limit of the number of starch grain structures may preferably be typically 10/mm$^2$ or more, or 20/mm$^2$ or more, or 30/mm$^2$ or more, or 40/mm$^2$ or more, or 60/mm$^2$ or more, or 80/mm$^2$ or more, or 100/mm$^2$ or more, or 150/mm$^2$ or more, or 200/mm$^2$ or more, or 250/mm$^2$ or more, or more than 300/mm$^2$. On the other hand, the upper limit may preferably be, although is not particularly limited to, 100000/mm$^2$ or less, or 50000/mm$^2$ or less, or 10000/mm$^2$ or less. Pulse and/or cereal raw material (especially raw material powder) that has undergone such warming treatment so as to adjust the number of starch grain structures to within the aforementioned range is also included in the subject matter of the present invention.

When pulse and/or cereal raw material (especially raw material powder) to be used for step (i) of the production method of the present invention is subjected to the measurement for peak temperature of gelatinization in accordance with the method explained above, then the decrement difference in temperature may preferably satisfy the predetermined limit or less (i.e., within the range of 0 °C or higher but 50 °C or lower and more specifically, typically 50 °C or lower, or 45 °C or lower, or 40 °C or lower, or 35 °C or lower, or 30 °C or lower, while the lower limit of the decrement difference in temperature is not particularly restricted, but may be 0 °C or higher, particularly 1 °C or higher, or 2 °C or higher, or 3 °C or higher, or 4 °C or higher, or 5 °C or higher). In this connection, pulse and/or cereal raw material (especially raw material powder) that has been subjected to warming treatment so as to satisfy this requirement is also included in the subject of the present invention. The pulse and/or cereal raw material (especially raw material powder) that has been subjected to warming treatment may preferably satisfy the requirement(s) (c-3) and/or (d-3) mentioned below.

(c-3) When 6% suspension of a crushed product of the dough composition is observed, the number of starch grain structures is 40/mm$^2$ or more, or 60/mm$^2$ or more, or 80/mm$^2$ or more, or 100/mm$^2$ or more, or 150/mm$^2$ or more, or 200/mm$^2$ or more, or 250/mm$^2$ or more, or more than 300/mm$^2$, while the upper limit is not restricted, but may be 100000/mm$^2$ or less, or 50000/mm$^2$ or less, or 10000/mm$^2$ or less.

(d-3) When 32g of 22 mass % aqueous slurry of a crushed product of the dough composition is subjected to measurement using a rapid visco-analyzer with carrying out the temperature increasing step (a1) and the temperature decreasing step (a2), the gelatinization peak temperature during the temperature increasing step (a1) is more than 95°C, or 100 °C or more, or 105 °C or more, or 110 °C or more, while the upper limit is not restricted, but may be 140 °C or less, or 135 °C or less, or 130 °C or less.

Pulse and/or cereal to be used for the present invention may preferably be characterized in that its starch content is a predetermined value or more. Specifically, the starch content in the dough composition in terms of wet mass basis may be within the range of 3 mass % or more but 80 mass % or less. More specifically, the starch content in terms of wet mass basis may be typically 3 mass % or more, preferably 5 mass % or more, or 10 mass % or more, or 12 mass % or more, or 15 mass % or more, or 18 mass % or more, or 20 mass % or more. The upper limit is not particularly limited, but may preferably be typically 80 mass % or less, or 75 mass % or less, or 70 mass % or less.

Pulse and/or cereal to be used for the present invention may preferably be characterized in that its dry mass basis moisture content is a predetermined value or less. Specifically, the dry mass basis moisture content may preferably be within the range of 0 mass % or more but less than 25 mass %. More specifically, its upper limit may preferably be typically less than 25 mass %, or 20 mass % or less, or 15 mass % or less, or 10 mass % or less. Its lower limit is not particularly limited, but may preferably be typically 0 mass %, 0 mass % or more.

Pulse and/or cereal to be used for the present invention may preferably be characterized in that its dietary fiber content is within a predetermined range. Specifically, the dietary fiber content in terms of wet mass basis may preferably be typically 3.0 mass % or more. or 3.5 mass % or more, or 4.0 mass % or more, or 4.5 mass % or more, or 5.0 mass % or more, or 6.0 mass % or more, or 7.0 mass % or more, or 8.0 mass % or more, or 9.0 mass % or more, or 10.0 mass % or more, or 11.0 mass % or more, or 12.0 mass % or more. On the other hand, its upper limit in terms of wet mass basis may be, although is not particularly limited to, typically 40 mass % or less, or 35 mass % or less, or 30 mass % or less.

Pulse and/or cereal to be used for the present invention may preferably be characterized in that its specific surface area per unit volume after ultrasonication is a predetermined value or more. Specifically, when 2 mass% ethanol dispersion of the measurement object as described below is measured using the laser diffraction scattering method, the specific surface area per unit volume after ultrasonic treatment may preferably be a predetermined value or more. Specifically, the specific surface area per unit volume after ultrasonication may be within the range of typically 0.10m$^2$/mL or more, while the upper limit may preferably be, although is not limited to, 2.5m$^2$/mL. More specifically, its lower limit may preferably be typically 0.10m$^2$/mL or more, more preferably 0.15m$^2$/mL or more, or 0.20m$^2$/mL or more, or 0.25m$^2$/mL or more, especially 0.30m$^2$/mL or more. The specific surface area per unit volume after ultrasonication can be adjusted to a predetermined value or more by, e.g., edible plant such as pulse and/or cereal may be micronized as appropriate via a pulverizing treatment in advance. Its upper limit is not particularly limited, but may preferably be typically 2.5m$^2$/mL or less, or 2.2m$^2$/mL or less, or 2.0m$^2$/mL or less.

An enzyme-treated product of psyllium seed skin (psyllium husk), which has been treated with an enzyme (preferably cellulase and/or pectinase and/or xylanase, more preferably at least xylanase and/or pectinase) for use in the preparation of the dough composition in step (i), is also included in the subject matter of the present invention.

The temperature and the duration of time of the warming treatment may be adjusted as appropriate so as to adjust the [Value $\gamma$] / [Value $\alpha$] ratio and/or the number of starch grain structures to within a predetermined range, from the viewpoint of removing undesirable components in raw materials while preventing damage to starch grains. The heating method can also be selected as appropriate, such as heating the powder directly using a solid (e.g., metal parts in equipment) as a medium (e.g. extruder) or using a gas medium (e.g., saturated steam heating, air dry heating, etc.). The composition temperature during the processing may preferably be within the range of 60 °C or more but 300 °C or less. More specifically, the upper limit may preferably be typically 300 °C or less, or 280 °C or less, or 250 °C or less, or 210 °C or less, or 150 °C or less. The lower limit of the temperature is not particularly restricted, but may be 60 °C or more, or 70 °C or more, or 80 °C or more, or 90 °C or more, or 100 °C or more. The duration of processing at the temperature may preferably be typically 30 minutes or less, or 25 minutes or less, while the lower limit is not particularly restricted, but may preferably be 0.1 minutes or more.

The dry mass basis moisture content during the warming treatment may preferably be a predetermined limit or lower. If the dry mass basis moisture content during the warming treatment is too high, the starch grains may be completely destroyed, or even if they are not destroyed, they may lose their heat resistance, making it difficult for the effects of the present invention to be realized. Specifically, the upper limit of the dry mass basis moisture content moisture content may preferably be within the range of 0 mass % or more 80 mass % or less. More specifically, the upper limit may preferably be typically 80 mass % or less, or 70 mass % or less, or 60 mass % or less, or 50 mass % or less, or 40 mass % or less, or 35 mass % or less, or 30 mass % or less, or 25 mass % or less, or 20 mass % or less, or 15 mass % or less. The lower limit of the dry mass basis moisture content during the warming treatment is not particularly restricted, but may be 0 mass % or more, or 1 mass % or more, or 2 mass % or more.

(Starch grain structures)

While the swollen composition of the present invention after baking may preferably have disrupted starch grain structures as mentioned above, since this helps exhibit the effects of the present invention, the dough composition in step (i) of the production method of the present invention may preferably retain intact (i.e., undisrupted) starch grain structures. Although the principle behind this is unknown, when a dough composition retaining starch grain structures is swollen via heating treatment, starch grains may preferably protect inner pores and help form pores having specific shapes to support a desired swollen state.

Specifically, the dough composition in step (i) of the production method of the present invention may preferably be characterized in that the number of starch grain structures observed under the above conditions is within the range of 40/mm$^2$ or more but 100000/mm$^2$ or less. More specifically, its lower limit may preferably be typically 40/mm$^2$ or more, or 60/mm$^2$ or more, or 80/mm$^2$ or more, or 100/mm$^2$ or more, or 150/mm$^2$ or more, or 200/mm$^2$ or more, or 250/mm$^2$ or more, or more than 300/mm$^2$. On the other hand, the upper limit of the number of starch grain structures in the dough composition is not restricted, but may be typically 100000/mm$^2$ or less, or 50000/mm$^2$ or less, or 10000/mm$^2$ or less.

The number of starch grain structures in the dough composition in step (i) may preferably be equal to or higher than the number of starch grain structures in the swollen composition of the present invention after baking, more preferably higher than the number of starch grain structures in the swollen composition of the present invention after baking. Specifically, the number of starch grain structures in the composition may preferably decrease during the heating treatment of step (ii) by a predetermined ratio or more (i.e., a decremental difference defined by "(the number of starch grain structures in the dough composition before heating treatment) - (the number of starch grain structures in the dough composition after heating treatment)" may preferably be a certain value or more). Specifically, the decrease ratio before and after the heating treatment of step (ii) may preferably be within the range of 10/mm$^2$ or more but 100000/mm$^2$ or less. More specifically, the lower limit of the decrease ratio may preferably be typically 10/mm$^2$ or more, or 20/mm$^2$ or more, or 30/mm$^2$ or more, or 40/mm$^2$ or more, or 50/mm$^2$ or more, or 100/mm$^2$ or more, or 150/mm$^2$, or 200/mm$^2$ or more, or 250/mm$^2$ or more, or 300/mm$^2$ or more. On the other hand, the upper limit of the decrease ratio is not particularly limited, but may preferably be typically 100000/mm$^2$ or less, or 50000/mm$^2$ or less, or 10000/mm$^2$ or less.

As explained above, pulse and/or cereal raw material (especially raw material powder) to be used for the preparation of the dough composition in step (i) may have undergone warming treatment under mild conditions. In this connection, protein contained in the pulse and/or cereal raw material (especially raw material powder) may preferably have undergone any type of processing treatment (e.g., ultrasonication, shear kneading treatment, heating treatment, etc.) (i.e., processed protein). When pulse and/or cereal raw material (especially raw material powder) containing such processed protein is used, the swollen composition of the present invention is likely to have improved elasticity and/or extensibility and exhibit the effects of the present invention. Specifically, pulse and/or cereal raw material (especially raw material powder) may preferably have been processed until some or all of the protein contained therein is denatured. Examples of denaturation treatment include heat treatment and electrical treatment. Specifically, the protein contained in pulse and/or cereal raw material (especially raw material powder) may preferably be heat-treated (at., e.g., 60 °C or more, or 70 °C or more, or 80 °C or more) until denatured. Although the principle behind this is unknown, processed protein may cross-link starch and other components and contribute to the development of an aggregate structures in the swollen composition, which is thought to be composed of starch and protein, to have desirable shapes and sizes. Such processed protein to be added to the composition may be, but is not particularly limited to, either an isolated pure product having undergone processing or, more preferably, a processed product of pulse and/or cereal containing protein. While, as mentioned above, starch may preferably have undergone a low degree of processing such that a certain ratio or more of starch grains remain, protein may preferably have undergone a certain degree or more of processing (e.g., heat denaturation at 60 °C or more, or 70 °C or more, or 80 °C or more).

*Dietary fiber-localized part

The dough composition in step (i) may preferably contain a part of edible plant in which dietary fiber (which includes both soluble dietary fiber and insoluble dietary fiber) is localized. Specifically, the ratio of dietary fiber-localized part (e.g., seed skin of psyllium) to the total mass of the dough composition in terms of wet mass basis may preferably be 0.1 mass % or more but 20 mass % or less. More specifically, its lower limit may preferably be typically 0.1 mass % or more, more preferably 0.2 mass % or more, or 0.3 mass % or more, or 0.4 mass % or more, or 0.5 mass % or more, or 1.0 mass % or more, or 1.5 mass % or more. On the other hand, the upper limit may preferably be, although not limited to, typically 20 mass % or less, or 15 mass % or less, or 10 mass % or less, or 7.5 mass % or less, or 5.0 mass % or less. The dietary fiber-localized part may be insoluble dietary fiber-localized part satisfying the above requirement. The dietary fiber-localized part may at least include seed skin of psyllium, which may have undergone enzyme treatment (e.g., cellulase treatment and/or xylanase treatment and/or pectinase treatment).

The dough composition may also preferably contain pulse seed skin as dietary fiber-localized parts (more specifically insoluble dietary fiber-localized parts) at the ratios explained above, especially when the production process does not include the fermentation step, since the resulting dough composition may exhibit improved spreadability upon addition of water and results in a physical property that facilitates swelling in step (ii).

The dough composition may also preferably contain the seed skin of edible wild plant psyllium (also referred to as psyllium seed skin or psyllium husk) as a dietary fiber-localized part (more specifically, a localized part in which soluble dietary fiber and insoluble dietary fiber are localized) at the ratio mentioned above, especially when the production process includes the step of fermentation the dough composition, since the swelling of the dough composition at step (ii) is promoted. Specifically, the dough composition may preferably contain psyllium seed skin which has undergone enzyme treatment (preferably with cellulase and/or pectinase and/or xylanase, especially with at least pectinase or xylanase) at the ratio mentioned above. The dough composition may more preferably contain both pulse seed skin and psyllium seed skin (especially enzyme-treated psyllium seed skin). In this case, the total content of pulse seed skin and psyllium seed skin may preferably satisfy the ratio mentioned above.

When the dough composition in step (i) contains seed skin of psyllium (also referred to as psyllium seed skin or psyllium husk), the seed skin of psyllium and other raw materials may be blended together at once, or they may be blended separately and sequentially in any order. Specifically, it is preferable to mix water and psyllium seed skin first and then blend the other raw materials, and it is even more preferable to mix water and part of psyllium seed skin first and then blend the other raw materials and additional psyllium seed skin.

The dough composition in step (i) may contain dietary fiber-localized part either in the form of an isolated pure product or in the form of dietary fiber-containing food material including dietary fiber-localized part, but it may preferably contain dietary fiber-localized part and other part of the same species of food material, more preferably dietary fiber-localized part and other part of the same individual of food material. When the dough composition contains dietary fiber-localized part of the same species or the same individual of food material, the dietary fiber-localized part and the other part of the food material may be incorporated into the dough composition either separately or in the form of the food material containing both parts. The dietary fiber-localized part may be insoluble dietary fiber-localized part that satisfies the above requirement.

The dietary fiber-localized part herein refers to a part of a food ingredient (edible plant) which has a relatively higher content ratio of dietary fiber compared to the edible part of the same food ingredient. For example, the dietary fiber-localized part may have a content ratio of dietary fiber in a drying state which is typically 1.1 times or more, or 1.2 times or more, or 1.3 times or more, or 1.4 times or more, or 1.5 times or more, or 1.6 times or more, or 1.7 times or more, or 1.8 times or more, or 1.9 times or more, or 2.0 times or more of that of the edible part. For example, a dietary fiber-localized part (more specifically, insoluble dietary fiber-localized part) of pulse is its seed skin, which has a relatively higher content ratio of dietary fiber than the dietary fiber content ratio than its edible part (cotyledon). A dietary fiber-localized part (more specifically, insoluble dietary fiber-localized part) of cereal is its bran, which has a relatively higher content ratio of dietary fiber than the dietary fiber content ratio than its edible part. A dietary fiber-localized part (more specifically, soluble dietary fiber- and insoluble dietary fiber-localized part) of edible wild plant psyllium is its seed skin (psyllium seed skin or psyllium husk). Among them, psyllium seed skin is particularly favorable from a nutritional point of view, since it contains soluble dietary fiber in addition to insoluble dietary fiber.

The dietary fiber-localized part or insoluble dietary fiber-localized part used in the present invention may be either a part of an "edible part" of a food ingredient (e.g., one or more selected from seeds or skin of cereals, pulses, nuts, vegetables (especially pulse seed skin), the seed skin of psyllium, and bran of cereals) or a "non-edible part" of a food ingredient (e.g., corn cores and bean pods), but may preferably be a part of an "edible part" of a food ingredient, more preferably at least one of pulse seed skin, psyllium seed skin, and cereal bran, more preferably either pulse seed skin or psyllium seed skin, most preferably both pulse seed skin and psyllium seed skin.

Examples of dietary fiber-localized parts include "discarded parts" of various food ingredients described in the Japan Standard Tables for Food Composition 2015 (7th revised edition) (examples are shown in Table B). However, other than these "non-edible parts," dietary fiber-localized parts can also be found in "edible parts," such as seeds or skin of cereals, pulses, nuts, vegetables, and particularly hard and thick parts of the stem and leaf parts of vegetables.

The term "non-edible part" of a food ingredient herein refers to a part of a food ingredient which is normally not suitable for eating or drinking or which is discarded under normal eating practices, and the term "edible part" herein refers to a part of a food ingredient other than the discarded parts (non-edible parts). Specific non-edible parts and their ratios in food ingredient used in the present invention, i.e., food ingredients containing dietary fiber and/or other food ingredients (which do not contain dietary fiber) are naturally understood by those skilled in the art who deal with these food ingredients or processed products of these food ingredients. For example, reference can be made to the "discarded parts" and "discarded ratios" the Japan Standard Tables for Food Composition 2015 (7th revised edition), and these can be treated as the parts and percentages of inedible parts respectively. The parts and ratios of inedible parts in food ingredients can also provide information about the parts and ratios of edible parts.

[Table B]

| Edible plants | Position of non-edible portion (refused portion) | Ratio of non-edible portion (refuse) |
|---|---|---|
| Vegetables/Edamame/Raw | Pod | 45% |
| Vegetables/(Corns)/Sweet corn/ Immature seeds, raw | Bract, pistil, and cob | 50% |
| Vegetables/(Pumpkins)/ Japanese pumpkin/Fruit, raw | Pulp, seeds, and ends | 9% |
| Vegetables/(Peppers)/Red pepper/ Fruit, raw(Paprika) | Hull, core, and seeds | 10% |
| Vegetables/Beet/Root, raw | Root tip, peel, and petiole | 10% |
| Vegetables/Broccoli/ Inflorescence, raw | Foliage | 50% |
| Vegetables/(Tomates)/Tomato/ Fruit, raw | Hull | 3% |
| Vegetables/(Cabbages)/Cabbage/ Heading leaves, raw | Core | 15% |
| Vegetables/Spinach/Leaves, raw | Rootstock | 10% |
| Vegetables/Kale/Leaves, raw | Petiole base | 3% |
| Vegetables/(Peas)/Green peas/Raw | Pod | 55% |
| Vegetables/Broad bean/ Immature bean/Raw | Coat and pod | 80% |
| Vegetables/(Carrots)/ Root, unpeeled, raw | Root tip and petiole base | 3% |

The dietary fiber content in a dietary fiber-localized part in terms of dry mass basis may preferably be within the range of more than 8 mass % but 50 mass % or less. More specifically, the lower limit may preferably be typically more than 8 mass %, or more than 9 mass %, or more than 10 mass %, or more than 11 mass %, or more than 12 mass %, or more than 13 mass %, or more than 14 mass %, or more than 15 mass %, or more than 16 mass %, or more than 17 mass %, or more than 18 mass %, or more than 19 mass %, or more than 20 mass %. The upper limit is not particularly restricted, but may be typically 50 mass % or less, or 40 mass % or less, or 30 mass % or less. Some of the requirements relating to the composition of the present invention in terms of dry mass basis, such as the requirements relating to the raw material contents and nutritional ingredients, may also be satisfied by the dough composition at step (i) and/or step (ii), since these parameters may not change depending on the presence or absence of moisture or before or after any treatment.

When a dietary fiber-localized part is incorporated in the dough composition, it may preferably be made into the form of micronized product. Micronization of a dietary fiber-localized part may be carried out on an isolated product of the dietary fiber-localized part or on a dietary fiber-containing food ingredient containing the dietary fiber-localized part, although it is convenient to separate the dietary fiber-localized part from the other parts before micronization, since dietary fiber-localized parts are normally difficult to micronize. Examples of such embodiments include: an embodiment including separating the seed skin of pulse from other edible parts, micronizing the separated pulse seed skin, and mixing the micronized pulse seed skin with the edible part of pulse which has been micronized separately; an embodiment including separating the bran of cereal from other edible parts, micronizing the separated cereal bran, and mixing the micronized cereal bran with the edible part of cereal which has been micronized separately; and an embodiment including separating the seed skin of psyllium (psyllium husk) from other edible parts, micronizing the separated psyllium husk, and mixing the micronized psyllium husk with the edible part of psyllium which has been micronized separately. It is also preferred that the above requirement is satisfied when the dietary fiber-localized part is an insoluble dietary fiber-localized part that contains hard tissue.

On the other hand, if powerful micronization method can be employed, it may be advantageous from the industrial viewpoint to micronize a dietary fiber-localized part (especially insoluble dietary fiber-localized part) in the form of a dietary fiber-containing food ingredient containing the dietary fiber-localized part without separation, because the step of separating the food ingredient into parts can be omitted. Examples of such embodiments include subjecting pulse with seed skin or cereal with bran to micronization without any separation.

The dough composition may preferably contain both a micronized product of a dietary fiber-localized part (especially insoluble dietary fiber-localized part) and a micronized product of a different part of the same kind of food ingredient. In this case, the micronized dietary fiber-localized part may be once separated from the food ingredient before being micronized, or may be micronized in the form of a dietary fiber-containing food ingredient containing the dietary fiber-localized part.

The means of pulverization to be used as conditions for micronization in the present invention is not particularly limited. Specifically, the temperature during pulverization is not particularly limited, and may be high-temperature pulverization, normal-temperature pulverization, or low-temperature pulverization. Examples of devices for the micronization process include, but are not limited to, blenders, mixers, mills, kneaders, crushers, disintegrators, and grinders. Specific examples that can be used include, for example, media stirring mills such as dry bead mills ball mills (rolling, vibrating, etc.), jet mills, high-speed rotating impact mills (pin mills, etc.), roll mills, hammer mills, etc.

Micronization of a dietary fiber-localized part (especially insoluble dietary fiber-localized part) may preferably be carried out such that the particle diameter $d_{50}$ of the microparticle complexes after disturbance (e.g., ultrasonication) is adjusted to within a predetermined range. Specifically, the particle diameter $d_{50}$ after disturbance may preferably be within the range of 1 μm or more 450 μm or less. More specifically, the upper limit may preferably be typically 450 μm or less, particularly 400 μm or less, or 350 μm or less, or 300 μm or less, or 250 μm or less, or 200 μm or less, or 150 μm or less, or 100 μm or less. On the other hand, the lower limit is not particularly restricted, but may be 1 μm or more, particularly 5 μm or more, or 7 μm or more.

Micronization of a dietary fiber-localized part (especially insoluble dietary fiber-localized part) may preferably be carried out such that the particle diameter $d_{90}$ of the microparticle complexes after disturbance (e.g., ultrasonication) is adjusted to within a predetermined range. Specifically, the particle diameter $d_{90}$ after disturbance may preferably be within the range of 1 μm or more but 500 μm or less. More specifically, the upper limit may preferably be typically 500 μm or less, or 450 μm or less, particularly 400 μm or less, or 350 μm or less, or 300 μm or less, or 250 μm or less, or 200 μm or less, or 150 μm or less, or 100 μm or less. On the other hand, the lower limit is not particularly restricted, but may be 1 μm or more, particularly 5 μm or more, or 7 μm or more.

Micronization of a dietary fiber-localized part (especially an insoluble dietary fiber-localized part) may preferably be carried out such that the specific surface area per unit volume of (microparticles and microparticle complexes) in a crushed product of the dietary fiber-localized part after disturbance (e.g., ultrasonication) may preferably be within the range of 0.01 [$m^2$/mL] or more 1.50 [$m^2$/mL] or less. More specifically, the upper limit may preferably be typically 0.01 [$m^2$/mL] or more, particularly 0.02 [$m^2$/mL] or more, or 0.03 [$m^2$/mL] or more may preferably be. On the other hand, the upper limit is not particularly restricted, but may preferably be typically 1.50 [$m^2$/mL] or less, particularly 1.00[$m^2$/mL] or less, or 0.90 [$m^2$/mL] or less, or 0.80 [$m^2$/mL] or less. This requirement may preferably be satisfied by the pulse and/or cereal to be used in the present invention. The pulse and/or cereal raw material (especially raw material powder) to be used in the present invention that has undergone warming treatment such that the specific surface area per unit volume is adjusted to be within the range mentioned above is also included in the subject matter of the present invention.

The specific surface area per unit volume [$m^2$/mL] herein refers to a specific surface area of particles per unit volume (1 mL) measured with a laser diffraction particle size distribution analyzer, assuming that the particles are spherical. The specific surface area of particles per unit volume assuming that the particles are spherical is a value based on a different mechanism from, e.g., those of values reflecting the constitution of particles and surface structures of particles (specific surface area per volume and per mass determined by, e.g., permeation and gas adsorption methods). The specific surface area of particles per unit volume assuming that the particles are spherical can be calculated as 6 x Σ(ai)/Σ(ai*di) particle where ai represents a surface area per particle and di represents a particle diameter.

The pulse and/or cereal contained in the dough composition prepared in step (i) may preferably be in the form of pulse powder and/or cereal powder which has a particle diameter $d_{90}$ of a predetermined limit or lower after ultrasonication. Specifically, the particle diameter $d_{90}$ of the pulse and/or cereal after ultrasonication may preferably be within the range of 1 μm or more less than 500 μm. More specifically, the upper limit may preferably be typically less than 500 μm, particularly 450 μm or less, or 400 μm or less, or 350 μm or less, or 300 μm or less, or 250 μm or less, or 200 μm or less, or 150 μm or less, or 100 μm or less. On the other hand, the lower limit is not particularly restricted, but may be 1 μm or more, particularly 5 μm or more, or 7 μm or more, or 10 μm or more.

*Step (ii): Swelling of the dough composition via heating treatment:

Step (ii) is to swell the dough composition by heating. This heating process usually promotes the enzymatic treatment mentioned above (e.g., cellulase and/or xylanase and/or pectinase treatment) at this step, whereby the starch in the dough composition is broken down by the degradative enzyme while the composition is swollen. In this regard, when the aforementioned enzyme treatment is carried out, a raw material treated with enzyme in advance may be used, enzyme treatment may be performed in step (i), enzyme treatment may be performed in step (ii), or a combination of both methods may be used. Specifically, the enzyme treatment may be carried out in step (i) and/or in step (ii).

The duration of heating at step (ii) may be determined as appropriate, based on the reaction rate determined from enzyme activity, reaction temperature and moisture content on a dry mass basis in the dough composition, as well as the change ratios of various parameters mentioned above. For example, the duration of heating at step (ii) may preferably be typically 1 minute or more but 24 hours or less. Specifically, its lower limit may preferably be typically 1 minute or more, or 2 minutes or more, or 3 minutes or more. The upper limit is not particularly limited, but may preferably be typically 24 hours or less, or 16 hours or less.

The heating temperature at step (ii) may also be determined as appropriate, based on, e.g., the change ratios of various parameters mentioned above, but may preferably be within the range of 30 °C or higher and 300 °C or lower. More specifically, the upper limit may preferably be typically 30 °C or higher, particularly 40 °C or higher, or 50 °C or higher, or 60 °C or higher, or 70 °C or higher, or 80 °C or higher, or 90 °C or higher, or 95 °C or higher, or 100 °C or higher, or 105 °C or higher, or 110 °C or higher, or 115 °C or higher, especially 120 °C or higher. On the other hand, the upper limit is not particularly restricted, but may be typically 300 °C or lower, particularly 290 °C or lower, or 280 °C or lower, or 270 °C or lower, or 260 °C or lower, or 250 °C or lower, or 240 °C or lower, or 230 °C or lower, or 220 °C or lower.

The pressure during heating at step (ii) is not limited and may be determined unless inhibiting the swelling of the composition, but may be typically normal procedure.

More specifically, when the swollen composition of the present invention is a fermented swollen composition, the production method of the fermented swollen composition explained below can be employed. In this case, with regard to the requirements for step (ii) (specifically, the requirements relating to the state before and after the heat treatment at step (ii)) in the production method of the fermented swollen composition, it is sufficient if the "after treatment" requirement is satisfied at the completion of the heating and kneading step (ii-a) and the baking step (ii-b), which are described below, but the requirement may be satisfied at the completion of the heating and kneading step (ii-a). In addition, if the composition of the present invention is a non-fermented swollen composition, it is possible to adopt the production method of the non-fermented swollen composition explained below. In this case, with regard to the requirements for step (ii) (specifically, the requirements relating to the state before and after the heat treatment at step (ii)) in the production method of the non-fermented swollen composition 1, it is sufficient if the "after treatment" requirement is satisfied at the completion of the heating and kneading step (ii-2a) and the baking step (ii-2b), which are described below, but the requirement may be satisfied at the completion of the heating and kneading step (ii-2a).

(Production method of the fermented swollen composition)

Step (ii) includes:

(ii-a) yeast-fermenting the dough composition from step (i); and
(ii-b) baking the yeast-fermented composition from step (ii-a).

(Production method of the non-fermented swollen composition)

Step (ii) includes:

(ii-2a) mixing the dough composition from step (i) with air bubbles and/or an expansion agent; and
(ii-2b) subjecting the mixed composition from step (ii-2a) to heating treatment.

The swelling of the dough composition by heating treatment in step (ii) may preferably be carried out so as to satisfy the following conditions.

The dry mass basis moisture content in the composition may preferably be decreased before and after the heat treatment at step (ii) by a predetermined ratio or more (i.e., the decremental ratio calculated as "{ (the ratio in the dough composition before the heat treatment) - (the ratio in the dough composition after the heat treatment)}/ (the ratio in the dough composition before the heat treatment)" may preferably be a predetermined value or higher). Specifically, the decremental ratio before and after the heat treatment at step (ii) may preferably be within the range of 5 mass % or more, while the upper limit is not restricted, but may be 100 mass % or less. More specifically, the lower limit of the decremental ratio may preferably be typically 5 mass % or more, particularly 9 mass % or more, or 15 mass % or more, or 20 mass % or more, or 25 mass % or more, or 30 mass % or more, or 35 mass % or more, or 40 mass % or more, or 45 mass % or more, or 50 mass % or more, or 55 mass % or more, or 60 mass % or more. The reason for this is not clear, but it is estimated that when this ratio is high, the degradation of starch and plant polysaccharides (seed skin of psyllium) in the dough composition during the heating process is accelerated and the composition is preferably swollen. On the other hand, the upper limit of the decremental ratio is not particularly restricted, but may be typically 100 mass % or less, or 98 mass % or less, or 96 mass % or less, or 94 mass % or less, or 92 mass % or less, or 90 mass % or less, or 80 mass % or less, or 70 mass % or less.

In the case of fermented swollen compositions prepared via the production process including a fermentation step (e.g., breads or bread-like foods), the dry mass basis moisture content decrease ratio before and after the heat treatment at step (ii) may preferably be relatively low (i.e., the decremental ratio calculated as "{(the ratio in the dough composition before the fermentation and the heat treatment) - (the ratio in the dough composition after the fermentation and the heat treatment)}/ (the ratio in the dough composition before the fermentation and the heat treatment)" may preferably be within a predetermined range). Specifically, the decrease ratio before and after the heat treatment at step (ii) may preferably be within the range of 5 mass % or more 80 mass % or less. More specifically, the lower limit of the decrease ratio may be typically 5 mass % or more, or 9 mass % or more, or 15 mass % or more. On the other hand, the upper limit of the decrease ratio is not particularly restricted, but may be typically less than 80 mass %, particularly less than 70 mass %, or less than 60 mass % from the viewpoint of industrial production efficiency.

Unless otherwise specified in the present invention, the statement "before the heat treatment" herein refers to the state of the dough composition immediately after preparation at step (i) and the statement "after the heat treatment" herein refers to the state of the swollen composition after step (ii) has been completed.

During the heating treatment of step (ii), according to the molecular weight distribution curve $MWDC_{3.0\text{-}6.0}$ of the composition, the ratio of the molecular weight logarithm value of the peak apex at 2ndMP to the molecular weight logarithm value of the peak apex at 1stMP ("2ndMP/1stMP") may preferably decrease by a predetermined value or more (i.e., the decrease ratio defined by "{(the ratio in the composition after the heating treatment) - (the ratio in the dough composition before the heating treatment)} / (the ratio in the dough composition before the heating treatment)" is equal to or higher than a certain value). Specifically, the decrease rate of 2ndMP/1stMP may be within the range of 1 % or more, while its upper limit is not particularly limited, but may be 70 % or less. More specifically, the lower limit of the decrease rate of 2ndMP/1stMP may preferably be typically 1 % or more, or 1.5 % or more, or 2 % or more, or 3 % or more, or 4 % or more, or 7 % or more, or 8 % or more, or 10 % or more. When this value is below the lower limit, it may be difficult for the swollen composition to swell sufficiently or to exhibit sufficient viscoelasticity (pull) characteristic of starch network. On the other hand, the upper limit of the decrease rate of 2ndMP/1stMP is not particularly limited, but may be 70 % or less, or 60 % or less, or 50 % or less.

The swollen composition of the present invention may preferably be characterized in that during the heating treatment in step (ii), the total porosity increases by a predetermined ratio or more (i.e., the increase ratio defined by "{(the ratio in the composition after the heating treatment) - (the ratio in the dough composition before the heating treatment)} / (the ratio in the dough composition before the heating treatment)" is equal to or higher than a certain value). Specifically, the increase ratio of this value may be within the range of 1 % or more but 10000 % or less. More specifically, the lower limit of the increase ratio may preferably be typically 1 % or more, or 2 % or more, or 3 % or more, or 4 % or more, or 5 % or more, or 6 % or more, or 7 % or more, or 8 % or more, or 9 % or more, or 10 % or more, or 15 % or more, or 20 % or more, or 30 % or more, or 40 % or more, especially 50 % or more. Although the reason for this is unknown, it is deemed that air bubbles in the dough composition may rapidly expand. On the other hand, the upper limit of the increase ratio is not particularly limited, but may be typically 10000 % or less, or 8000 % or less, or 6000 % or less, or 4000 % or less, or 2000 % or less, or 1000 % or less, or 500 % or less, or 300 % or less, or 200 % or less, or 150 % or less.

The swollen composition of the present invention may preferably be characterized in that during the heating treatment of step (ii), the composition volume increases by 1 % or more (i.e., the increase ratio defined by "{(the volume in the composition after the heating treatment) - (the volume in the dough composition before the heating treatment)} / (the volume in the dough composition before the heating treatment)" is equal to or higher than a certain value). Specifically, the increase ratio may preferably be within the range of 1 % or more but 2000 % or less. More specifically, the lower limit of the increase ratio may preferably be typically 1 % or more, or 2 % or more, or 3 % or more, or 4 % or more, or 5 % or more, or 6 % or more, or 7 % or more, or 8 % or more, or 9 % or more, or 10 % or more, or 15 % or more, or 20 % or more, or 30 % or more, or 40 % or more, or 50 % or more. Although the reason for this is unknown, it is deemed that air bubbles in the composition may expand to increase the composition volume. On the other hand, the upper limit of the increase ratio is not particularly limited, but may preferably be typically 2000 % or less, or 1500%, or 1000%, or 800%, or 600 % or less, or 400 % or less, or 300 % or less, or 200 % or less, or 150 % or less.

The swollen composition of the present invention may preferably retain its swollen state even after the heating treatment of step (ii). Specifically, when the composition after the heating treatment of step (ii) is cooled to ordinary temperature (20°C), the decrease ratio of the total porosity of the composition is equal to or lower than a predetermined value (i.e., the decrease ratio defined by "{(the ratio of the composition after step (ii) (maximum value)) - (the ratio of the composition after cooling at ordinary temperature (maximum value))} / (the ratio of the composition after step (ii) (maximum value))" is equal to or higher than a certain value). Specifically, the decrease ratio may preferably be within the range of 0 % or more but 50 % or less. More specifically, the upper limit of the decrease ratio may preferably be typically 50 % or less, or 45 % or less, or 40 % or less, or 35 % or less, or 30 % or less, or 25 % or less, or 20 % or less. Although the reason for this is unknown, it is deemed that compositions having small values for this ratio cannot retain their swollen states and tend to rapidly shrink after the heating treatment. On the other hand, the lower limit of the decrease ratio is not particularly limited, but may preferably be typically 0 % or more, or 5 % or more.

The swollen composition of the present invention may preferably be characterized in that when the composition after the heating treatment of step (ii) is cooled to ordinary temperature (20°C), the decrease ratio of the volume of the composition is equal to or lower than a predetermined value (i.e., the decrease ratio defined by "{(the ratio of the composition after step (ii) (maximum value)) - (the ratio of the composition after cooling at ordinary temperature (maximum value))} / (the ratio of the composition after step (ii) (maximum value))" is equal to or higher than a certain value). Specifically, the decrease ratio may preferably be within the range of 0 % or more but 50 % or less. More specifically, the upper limit of the decrease ratio may preferably be typically 50 % or less, or 45 % or less, or 40 % or less, or 35 % or less, or 30 % or less, or 25 % or less, or 20 % or less. Although the reason for this is unknown, it is deemed that compositions having large values for this ratio cannot retain their swollen states and tend to rapidly shrink after the heating treatment. On the other hand, the lower limit of the decrease ratio is not particularly limited, but may preferably be typically 0 % or more, or 5 % or more.

<u>*Preferred treatment in Step (i) and/or Step (ii):</u>

The production method of the present invention may preferably include carrying out enzyme treatment in step (i) and/or step (ii). The types of enzymes and treatment conditions are as described separately.

The production method of the present invention may preferably include adding enzyme-treated plant viscous components (especially plant polysaccharides, preferably seed skin of psyllium) to the composition in step (i) and/or step (ii). The types of plant polysaccharides, the types of enzymes, and treatment conditions are as described separately.

The production method of the present invention may preferably include adding enzyme-treated plant viscous components (especially plant polysaccharides, preferably seed skin of psyllium) that satisfy the requirements (8) and/or (9) below to the composition in step (i) and/or step (ii).

The plant viscous component (especially plant polysaccharides) to be used in step (i) and/or step (ii) may preferably be characterized in that (8) when the plant polysaccharide is subjected to measurement in accordance with <Method a>, the ratio of [Value β] / [Value α] as defined below is equal to or lower than a predetermined value.

> [Value α]: A breakdown viscosity (cP) during temperature increasing step (a1).
> [Value β]: A peak viscosity (cP) during temperature decreasing step (a2).
> <Method a> 32g of 22 mass % aqueous slurry of a crushed product the plant polysaccharides is prepared as a measurement sample, and subjected to measurement using a rapid visco-analyzer with carrying out steps (a1) and (a2) below.
> (a1) Temperature increasing step, in which the temperature of the measurement sample is increased from 50 °C to 140 °C at an increasing rate 12 °C/min and then maintained for 3 minutes.
> (a2) Temperature decreasing step, in which the temperature is decreased from 140 °C to 50 °C at a decreasing rate of 12 °C/min.

The details of [Value α] and [Value β] as features of the plant polysaccharides and <Method a> as a measurement method for [Value α] and [Value β] are the same as those of [Value α] and [Value β] and <Method a> for the swollen composition of the present invention, which are as explained above separately.

Specifically, the [Value β] / [Value α] ratio of the plant polysaccharides to be used in step (i) and/or step (ii) may preferably be within the range of 100 or less, while its lower limit is not particularly limited, but may be 0. Specifically, the upper limit of the [Value β] / [Value α] ratio of the plant polysaccharides may preferably be typically 100 or less, or 90 or less, or 80 or less, or 70 or less, or 65 or less, or 60 or less, or 50 or less, or 40 or less, or 30 or less, or 20 or less. On the other hand, the lower limit of [Value β] / [Value α] of plant polysaccharides is not particularly limited, but may be 0, or 0 or more, or 0.5 or more.

The plant viscous component (especially plant polysaccharides) to be used in step (i) and/or step (ii) may also preferably be characterized in that (9) when the plant polysaccharide is subjected to treatment according to [Procedure b] and the resulting product is subjected to measurement under [Condition B] below to obtain a molecular weight distribution curve in an interval with molecular weight logarithms of 3.0 or more but less than 6.0 ($MWDC_{3.0-6.0}$), the ratio of the molecular weight logarithm at the peak apex of 2ndMP to the molecular weight logarithm at the peak apex of 1stMP (2ndMP/1stMP), where "1stMP" refers to the peak with the highest molecular weight logarithm and "2ndMP" refers to the peak with the second highest molecular weight logarithm, is equal to or lower than a predetermined value.

[Procedure b] 5 mass % aqueous suspension of a crushed product of the plant polysaccharide is treated with α-amylase and glucoamylase, an ethanol-insoluble and dimethyl sulfoxide-soluble component is obtained.
[Condition B] When the plant polysaccharide is subjected to treatment according to [Procedure b] and the resulting product is dissolved into 1M aqueous solution of sodium hydroxide at a concentration of 0.30 mass % and allowed to stand at 37 °C for 30 minutes, then combined with an equal volume of water and an equal volume of eluent and subjected to filtration with a 5-μm filter, and 5mL of the filtrate is then subjected to gel filtration chromatography to thereby obtain a molecular weight distribution.

The details of molecular weight distribution curve $MWDC_{3.0-6.0}$ as a feature of the plant polysaccharides and [Procedure b] and [Condition B] as measurement conditions for $MWDC_{3.0-6.0}$ are the same as those of $MWDC_{3.0-6.0}$ and [Procedure b] and [Condition B] for the swollen composition of the present invention, which are as explained above separately.

Specifically, the plant viscous component (especially plant polysaccharides) to be used in step (i) and/or step (ii) may preferably be characterized in that the 2ndMP/1stMP is 95 % or less, while its lower limit is not particularly limited, but may be 50 % or more. Specifically, the upper limit of 2ndMP/1stMP of the plant polysaccharides may preferably be typically 95 % or less, or 94 % or less, or 93 % or less, or 92 % or less, or 90 % or less, or 88 % or less, or 87 % or less, or 86 % or less, or 85 % or less. On the other hand, the lower limit of 2ndMP/1stMP of the plant polysaccharides is not particularly limited, but may be typically 50 % or more, or 60 % or more, or 65 % or more.

The production method of the present invention may also preferably be characterized in that step (i) and/or step (ii) further include adding to the composition pulse and/or cereal with a PDI value lower than a predetermined value. The details of the PDI value of pulse and/or cereal are as explained above separately.

Specifically, the PDI value of the pulse and/or cereal raw material (especially raw material powder) to be used in step (i) and/or step (ii) may be within the range of less than 55 mass %, while the lower limit may preferably be, although is not particularly limited to, 0 % or more. Specifically, the upper limit of the PDI value of pulse and/or cereal may preferably be typically less than 55 mass %, or less than 50 mass %, or less than 45 mass %, or less than 40 mass %, or less than 35 mass %, or less than 30 mass %, or less than 25 mass %, or less than 20 mass %, or less than 15 mass %, or less than 10 mass %. On the other hand, the lower limit of the PDI value of pulse and/or cereal is not particularly limited, but may preferably be typically 0 mass % or more, or 1 mass % or more, or 2 mass % or more.

<u>*Step (iii):</u>

The production method of the present invention includes at least step (i) and (ii), but may preferably include, in addition to steps (i) and (ii), the step of subjecting the swollen composition from step (ii) to treatment under reduced pressure (step (iii)). Providing this step (iii) of subjecting the swollen composition from step (ii) to treatment under reduced pressure may be preferable because this may help prevent the swollen composition from shrinking and also adjust the pores in the composition to desired sizes. It is also desirable because it may be easier to perceive favorable aromas derived from raw materials (e.g., pulse and/or cereal). Although the principle behind this is unknown, it is deemed that the reduced pressure step may remove unpleasant odors derived from the raw materials of the swollen composition and facilitates the perception of favorable aromas retained in the pores. The reduced pressure treatment step (iii) may be carried out by using, although is not limited to, using a known vacuum cooler. The pressure condition of the reduced pressure treatment may be, although is not limited to, within the range of 0.01 bar or more but 0.9 bar or less. Specifically, the lower limit of the pressure may preferably be typically 0.01 bar or more, or 0.03 bar or more, or 0.05 bar or more, or 0.07 bar or more, or 0.08 bar or more, or 0.09 bar or more, or 0.1 bar or more. On the other hand, the upper limit is not particularly limited, but may preferably be typically 0.9 bar or less, or 0.8 bar Pa or less, or 0.7 bar or less, or 0.6 bar or less. The temperature condition of the reduced pressure treatment in step (iii) may be, although is not limited to, within the range of 0 °C or more but 60 °C or less. Specifically, the lower limit of the temperature may preferably be, although is not limited to, 0 °C or more, or 5 °C or more, or 10 °C or more, or 15 °C or more, or 20 °C or more. On the other hand, the upper limit of the temperature may preferably be, although is not limited to, 60 °C or less, or 55 °C or less, or 50 °C or less. The time duration of the reduced pressure treatment in step (iii) may be, although is not limited to, within the range of 0.1 minute or more but 60 minutes or less. Specifically, the lower limit of the duration may preferably be, although is not limited to, 0.1 minute or more, or 0.5 minute or more, or 1 minute or more, or 1.5 minutes or more, or 2 minutes or more. On the other hand, the upper limit of the duration may preferably be, although is not limited to, 60 minutes or less, or 40 minutes or less, or 20 minutes or less, or 5 minutes or less.

*Intermediate processing and/or Post-processing:

The swollen composition of the invention can be obtained by carrying out at least the steps (i) and (ii) explained above, but additional intermediate treatments and/or post-treatments may be added. Additional intermediate treatments and/or post-treatments include fermentation, molding, drying, and isothermal treatments.

Fermentation treatment may typically be carried out between step (i) and step (ii). The method and form of fermentation are not restricted, and may be carried out under any conditions using methods known in the art. For example, fermentation may typically be carried out by mixing the dough composition with yeast and holding it at a predetermined temperature for a predetermined time. The yeast for fermentation is not particularly restricted. Examples include sake yeast, bakery yeast, beer yeast, and wine yeast. The temperature during fermentation is also not restricted, but may preferably be within the range of 0 °C or higher but 60 °C or lower. More specifically, the lower limit may preferably be typically 0 °C or higher, particularly 4 °C or higher, still particularly 10 °C or higher. The upper limit is also not particularly restricted, but may be typically 60 °C or lower, particularly 50 °C or lower. The duration of fermentation is also not restricted, but may be typically 30 minutes or more, particularly 60 minutes or more, and typically 36 hours or less, particularly 24 hours or less. For example, fermentation may preferably be carried out at a temperature of 0 °C or higher but 40 °C or lower (more preferably 35 °C or lower, or 30 °C or lower, or 25 °C or lower, or 20 °C or lower) for 10 hours or more but 36 hours or less, since this may result in a fragrant composition.

Molding treatment may typically be carried out between step (i) and step (ii) and/or after step (ii). The method and form of molding are not restricted, and may be carried out into any shape using methods known in the art. For example, in order to produce compositions in elongated shapes such as pasta, Chinese noodles, or other noodles, the composition can be extruded into elongated forms using an extruder or other devices described above. On the other hand, in order to produce compositions in flat plate shapes, the composition may be molded into flat plate shapes. Furthermore, the composition can be made into any shape such as elongated, granular, or flaky shapes, by, e.g., press-molding the composition or cutting or die-cutting the flat-plate shaped composition.

Drying treatment may typically be carried out after step (ii). Drying treatment can be carried out by using any method generally used for drying foods. Examples include solar drying, drying in the shade, freeze drying, air drying (e.g., hot air drying, fluidized bed drying, spray drying, drum drying, low temperature drying, etc.), pressurized drying, decompressed drying, microwave drying, and oil heat drying. Preferable among these are air-drying (e.g., hot air drying, fluidized bed drying, spray drying, drum drying, low-temperature drying, etc.) and freeze-drying, since the degree of change in the color tone and flavor inherent in the food materials is small, and non-food aroma (e.g., burnt smell) can be controlled.

Isothermal treatment may typically be carried out between step (i) and step (ii). For example, the composition prepared at step (i) may be subjected to isothermal treatment at a predetermined temperature or higher with maintaining a dry mass basis moisture content of a predetermined value or higher, since this may serve to improve swellability. The treatment temperature is not restricted, but may preferably be within the range of 60 °C or higher but 300 °C or lower. More specifically, the lower limit may preferably be typically 60 °C or higher, particularly 70 °C or higher, or 90 °C or higher, or 100 °C or higher. The upper limit is not particularly restricted, but may be typically 300 °C or lower, or 250 °C or lower. The duration of isothermal treatment may be typically 15 minutes or more, particularly 30 minutes or more, and typically 10 hours or less, particularly 5 hours or less. The dry mass basis moisture content in the composition during isothermal treatment is not particularly restricted, but may preferably be within the range of more than 30 mass % but 200 mass % or less. More specifically, the lower limit may preferably be typically more than 30 mass %, particularly more than 40 mass %, or more than 50 mass %, or more than 60 mass %, or more than 70 mass %, or more than 80 mass %, and typically 200 mass % or less, particularly 175 mass % or less, or 150 mass % or less.

**EXAMPLES**

The present invention will now be described in further detail by way of Examples. These examples are shown merely for convenience of the description, and should not be construed as limitations to the present invention in any sense. The figures in each table are rounded to the nearest tenth of a digit.

[Preparation and parameter measurement of dough compositions]

The dough composition of each of the Test Examples and Comparative Examples was prepared by using a dried pulse powder (prepared using a matured pulse with a dry mass basis moisture content of less than 15 mass % as a raw material) or a dried cereal powder (prepared using a matured cereal with a dry mass basis moisture content of less than 15 mass % as a raw material) indicated in Table 1 below, mixing the raw material and water at ratios indicated in Table 2 below, so as to satisfy the values indicated in Tables 3 and 4 below. The peas used as a pulse contained a dietary fiber-localized part, i.e., "seed skin," and the oats used as a cereal contained a dietary fiber-localized part, i.e., "bran." Each dried pulse powder or cereal powder in Table 1 is obtained by powdering the raw pulses and/or cereals shown in Table 1 in an extruder at a dry mass basis moisture content of 10 mass% on a dry weight basis, a heating temperature of 260°C, and a processing time of 30 seconds, and then naturally drying the resulting powders. For the samples indicated as "Baked at 200°C for 15 minutes" in the baking conditions, the dough composition was baked using Panasonic’s NE-MS264. For the samples indicated as "Conditions (enzyme)" in the plant polysaccharides origin other than pulse and cereal, the processing was carried out in combination with the treatment in step (ii) (fermentation (but in Test Example 37, expansion by swelling agent) and baking) using HDC-7S1TA, manufactured by HOSHIZAKI Co. For the samples indicated as "Reduced pressure treatment" in step (iii), a CMJ-20QE manufactured by Miura Kogyo was used.

[Table 1-1]

| Table 1 | | Step (i) Dough Composition | | | | | |
|---|---|---|---|---|---|---|---|
| | | Raw Material | | | | | |
| | | Pulse Raw Material | | Cereal Raw Material | | Edible Plant Raw Material (other than pulse and cereal) | |
| | | Species | Content (wet mass basis) | Species | Content (wet mass basis) | Species | Content (wet mass basis) |
| | | | mass % | | mass % | | mass % |
| Comparative Example | 1 | Yellow Pea (with seed skin) | 49.5 | — | — | — | — |
| Test Example | 2 | Yellow Pea (with seed skin) | 49.4 | — | — | — | — |
| Test Example | 3 | Yellow Pea (with seed skin) | 49.2 | — | — | — | — |
| Test Example | 4 | Yellow Pea (with seed skin) | 49 | — | — | — | — |
| Test Example | 5 | Yellow Pea (with seed skin) | 48.7 | — | — | — | — |
| Test Example | 6 | Yellow Pea (with seed skin) | 47.7 | — | — | — | — |
| Test Example | 7 | Yellow Pea (with seed skin) | 46.5 | — | — | — | — |
| Test Example | 8 | Yellow Pea (with seed skin) | 46.5 | — | — | — | — |
| Test Example | 9 | Yellow Pea (with seed skin) | 46.5 | — | — | — | — |
| Test Example | 10 | Yellow Pea (with seed skin) 75%, Mung Bean (with seed skin) 25% | 36.5 | — | — | — | — |
| Test Example | 11 | Yellow Pea (with seed skin) | 46.5 | — | — | — | — |
| Test Example | 12 | Yellow Pea (with seed skin) | 14.9 | Kibi (common millet) | 14.9 | — | — |
| Test Example | 13 | Yellow Pea (with seed skin) | 46.5 | — | — | — | — |

[Table 1-2]

| Table 1 | | Step (i) Dough Composition | | | | | |
|---|---|---|---|---|---|---|---|
| | | Raw Material | | | | | |
| | | Pulse Raw Material | | Cereal Raw Material | | Edible Plant Raw Material (other than pulse and cereal) | |
| | | Species | Content (wet mass basis) | Species | Content (wet mass basis) | Species | Content (wet mass basis) |
| | | | mass % | | mass % | | mass % |
| Comparative Example | 14 | Yellow Pea (with seed skin) | 46.5 | — | — | — | — |
| Test Example | 15 | Yellow Pea (with seed skin) | 16.0 | — | — | Rice | 30.5 |
| Test Example | 16 | Yellow Pea (with seed skin) | 47.0 | — | — | — | — |
| Test Example | 17 | — | — | Kibi (common millet) | 46.5 | — | — |
| Test Example | 18 | Mung Bean (with seed skin) | 46.5 | — | — | — | — |
| Test Example | 19 | Mung Bean (with seed skin) | 46.5 | — | — | — | — |
| Test Example | 20 | Yellow Pea (with seed skin) 75%, Mung Bean (with seed skin) 25% | 36.5 | — | — | — | — |
| Test Example | 21 | Yellow Pea (with seed skin) | 46.5 | — | — | — | — |
| Test Example | 22 | Yellow Pea (with seed skin) | 46.5 | — | — | — | — |
| Test Example | 23 | Yellow Pea (with seed skin) | 46.5 | — | — | — | — |
| Test Example | 24 | Yellow Pea (with seed skin) | 43.5 | — | — | — | — |
| Comparative Example | 25 | Yellow Pea (with seed skin) | 37.5 | — | — | — | — |

The dough compositions of the Test Examples and Comparative Examples obtained by the above procedure were subjected to measurement of various parameters using the methods described in the [DESCRIPTION OF EMBODIMENTS] section above. The results of the dough compositions of the Test Examples and Comparative Examples are shown in Tables 2 and 3 below. The "Starch degrading enzyme activity" was 0.2 U/g or higher in all Test Examples. The content of vegetable polysaccharides can be regarded as equivalent to the "Content" of "Plant polysaccharides origin other than pulse and cereal." In all Test Examples, aqueous solutions containing 4 mass % of enzyme-treated "Plant polysaccharides origin other than pulse and cereal" were prepared, and the viscosity was measured with a B-type viscometer (rotor No. 4) at 4°C, 60 rpm, pH 4, and the results were over 200 cp for all Test Examples. The "PDI value" shown in the dough composition is the PDI value derived from the edible plant used as the raw material. The pectinase used was Pectinase G "Amano" manufactured by Amano Enzyme Inc., and the xylanase used was Hemicellulase "Amano" 90 (Xylanase) manufactured by Amano Enzyme Inc.

[Table 2-1]

| Table 2 | | Step (i) Dough Composition | | | | | | | |
|---|---|---|---|---|---|---|---|---|---|
| | | Starch | | | | | Protein | Yeast | Dry Mass Basis Moisture Content |
| | | Starch Content (wet mass basis) | Ratio of Starch Contained in Pulse to Total Starch Content | Ratio of Starch Contained in Cereal to Total Starch Content | Starch Grains | Degree of Gelatinization | PDI Value | Content (wet mass basis) | |
| | | mass % | % | % | /mm2 | mass % | mass % | mass % | mass % |
| Comparative Example | 1 | 24.8 | 100% | 0% | 1734 | 15 | 15% | 0.5 | 100 |
| Test Example | 2 | 24.7 | 100% | 0% | 1734 | 15 | 15% | 0.5 | 100 |
| Test Example | 3 | 24.6 | 100% | 0% | 1734 | 15 | 15% | 0.5 | 100 |
| Test Example | 4 | 24.5 | 100% | 0% | 1734 | 15 | 15% | 0.5 | 100 |
| Test Example | 5 | 24.4 | 100% | 0% | 1734 | 15 | 15% | 0.5 | 100 |
| Test Example | 6 | 23.9 | 100% | 0% | 1734 | 15 | 15% | 0.5 | 100 |
| Test Example | 7 | 23.3 | 100% | 0% | 1734 | 15 | 15% | 0.5 | 100 |
| Test Example | 8 | 23.3 | 100% | 0% | 1734 | 15 | 15% | 0.5 | 100 |
| Test Example | 9 | 23.3 | 100% | 0% | 1734 | 15 | 15% | 0.5 | 100 |
| Test Example | 10 | 18.3 | 100% | 0% | 1530 | 20 | 11% | 0.5 | 150 |
| Test Example | 11 | 23.3 | 100% | 0% | 1734 | 15 | 15% | 0.5 | 100 |
| Test Example | 12 | 14.9 | 50% | 50% | 1402 | 13 | 14% | 0.5 | 200 |
| Test Example | 13 | 23.3 | 100% | 0% | 1734 | 15 | 15% | 0.5 | 100 |

[Table 2-2]

| Table 2 | | Step (i) Dough Composition | | | | | | | |
|---|---|---|---|---|---|---|---|---|---|
| | | Starch | | | | | Protein | Yeast | Dry Mass Basis Moisture Content |
| | | Starch Content (wet mass basis) | Ratio of Starch Contained in Pulse to Total Starch Content | Ratio of Starch Contained in Cereal to Total Starch Content | Starch Grains | Degree of Gelatinization | PDI Value | Content (wet mass basis) | |
| | | mass % | % | % | /mm2 | mass % | mass % | mass % | mass % |
| Comparative Example | 14 | 23.3 | 100% | 0% | 1734 | 15 | 15% | 0.5 | 100 |
| Test Example | 15 | 31.0 | 34% | 0% | 1255 | 11 | 11% | 0.5 | 100 |
| Test Example | 16 | 23.5 | 100% | 0% | 1622 | 15 | 15% | — | 100 |
| Test Example | 17 | 23.3 | 0% | 100% | 1197 | 12 | 23% | 0.5 | 100 |
| Test Example | 18 | 23.3 | 100% | 0% | 1855 | 18 | 10% | 0.5 | 100 |
| Test Example | 19 | 23.3 | 100% | 0% | 1855 | 18 | 10% | 0.5 | 100 |
| Test Example | 20 | 18.3 | 100% | 0% | 1530 | 20 | 11% | 0.5 | 150 |
| Test Example | 21 | 23.3 | 100% | 0% | 1648 | 15 | 15% | 0.5 | 100 |
| Test Example | 22 | 23.3 | 100% | 0% | 1734 | 15 | 15% | 0.5 | 100 |
| Test Example | 23 | 23.3 | 100% | 0% | 2018 | 4 | 85% | 0.5 | 100 |
| Test Example | 24 | 21.8 | 100% | 0% | 1734 | 15 | 15% | 0.5 | 100 |
| Comparative Example | 25 | 18.8 | 100% | 0% | 1734 | 15 | 15% | 0.5 | 100 |

[Table 3-1]

| Table 3 | | Step (i) Dough Composition | | | | | | | | | | |
|---|---|---|---|---|---|---|---|---|---|---|---|---|
| | | Dietary Fiber | | | | | | | | | | |
| | | Pulse Raw Material | | Cereal Raw Material | | Edible Plant Raw Material (other than pulse and cereal) | | | | | Dietary Fiber Content in Composition (wet mass basis) | Soluble Dietary Fiber Content in Composition (wet mass basis) |
| | | Species | Dietary Fiber Content (wet mass basis) | Species | Dietary Fiber Content (wet mass basis) | Species | Content (wet mass basis) | Dietary Fiber Content (wet mass basis) | Treatment Method | Enzyme Content (wet mass basis) | | |
| | | | mass % | | mass % | | | mass % | | U/Dough 100g (wet mass) | mass % | mass % |
| Comparative Example | 1 | Yellow Pea (with seed skin) | 7.5 | — | — | — | — | — | Pectinase | 0.01 | 7.5 | 0.64 |
| Test Example | 2 | Yellow Pea (with seed skin) | 7.5 | — | — | Psyllium Seed Skin | 0.1 | 0.09 | Pectinase | 0.01 | 7.5 | 0.66 |
| Test Example | 3 | Yellow Pea (with seed skin) | 7.4 | — | — | Psyllium Seed Skin | 0.3 | 0.27 | Pectinase | 0.01 | 7.7 | 0.7 |
| Test Example | 4 | Yellow Pea (with seed skin) | 7.4 | — | — | Psyllium Seed Skin | 0.5 | 0.45 | Pectinase | 0.01 | 7.8 | 0.7 |
| Test Example | 5 | Yellow Pea (with seed skin) | 7.4 | — | — | Psyllium Seed Skin | 0.8 | 0.72 | Pectinase | 0.01 | 8.1 | 0.8 |
| Test Example | 6 | Yellow Pea (with seed skin) | 7.2 | — | — | Psyllium Seed Skin | 1.8 | 1.62 | Pectinase | 0.01 | 8.8 | 0.9 |
| Test Example | 7 | Yellow Pea (with seed skin) | 7.0 | — | — | Psyllium Seed Skin | 3 | 2.7 | Pectinase | 0.001 | 9.7 | 1.1 |
| Test Example | 8 | Yellow Pea (with seed skin) | 7.0 | — | — | Psyllium Seed Skin | 3 | 2.7 | Pectinase | 0.001 | 9.7 | 1.1 |
| Test Example | 9 | Yellow Pea (with seed skin) | 7.0 | — | — | Psyllium Seed Skin | 3 | 2.7 | Pectinase | 0.001 | 9.7 | 1.1 |
| Test Example | 10 | Yellow Pea (with seed skin) 75%, Mung Bean (with seed skin) 25% | 5.5 | — | — | Psyllium Seed Skin | 3 | 2.7 | Pectinase | 0.001 | 8.2 | 1.0 |
| Test Example | 11 | Yellow Pea (with seed skin) | 7.0 | — | — | Psyllium Seed Skin | 3 | 2.7 | Pectinase | 0.001 | 9.7 | 1.1 |
| Test Example | 12 | Yellow Pea (with seed skin) | 2.3 | Kibi (common millet) | 1.4 | Psyllium Seed Skin | 3 | 2.7 | Pectinase | 0.001 | 6.4 | 0.9 |

[Table 3-2]

| Table 3 | | Step (i) Dough Composition | | | | | | | | | | |
|---|---|---|---|---|---|---|---|---|---|---|---|---|
| | | Dietary Fiber | | | | | | | | | | |
| | | Pulse Raw Material | | Cereal Raw Material | | Edible Plant Raw Material (other than pulse and cereal) | | | | | Dietary Fiber Content in Composition (wet mass basis) | Soluble Dietary Fiber Content in Composition (wet mass basis) |
| | | Species | Dietary Fiber Content (wet mass basis) | Species | Dietary Fiber Content (wet mass basis) | Species | Content (wet mass basis) | Dietary Fiber Content (wet mass basis) | Treatment Method | Enzyme Content (wet mass basis) | | |
| | | | mass % | | mass % | | | mass % | | U/Dough 100g (wet mass) | mass % | mass % |
| Test Example | 13 | Yellow Pea (with seed skin) | 7.0 | — | — | Psyllium Seed Skin | 3 | 2.7 | Pectinase | 0.001 | 9.7 | 1.1 |
| Comparative Example | 14 | Yellow Pea (with seed skin) | 7.0 | — | — | Psyllium Seed Skin | 3 | 2.7 | Pectinase | 0.001 | 9.7 | 1.1 |
| Test Example | 15 | Yellow Pea (with seed skin) | 2.4 | — | — | Psyllium Seed Skin | 3 | 2.7 | Pectinase | 0.001 | 5.3 | 0.9 |
| Test Example | 16 | Yellow Pea (with seed skin) | 7.1 | — | — | Psyllium Seed Skin | 3 | 2.7 | Pectinase | 0.001 | 9.8 | 1.2 |
| Test Example | 17 | — | — | Kibi (common millet) | 4.4 | Psyllium Seed Skin | 3 | 2.7 | Pectinase | 0.001 | 7.1 | 0.9 |
| Test Example | 18 | Mung Bean (with seed skin) | 7.0 | — | — | Psyllium Seed Skin | 3 | 2.7 | Pectinase | 0.001 | 9.7 | 1.1 |
| Test Example | 19 | Mung Bean (with seed skin) | 7.0 | — | — | Psyllium Seed Skin | 3 | 2.7 | Pectinase | 0.001 | 9.7 | 1.1 |
| Test Example | 20 | Yellow Pea (with seed skin) 75%, Mung Bean (with seed skin) 25% | 5.5 | — | — | Psyllium Seed Skin | 3 | 2.7 | Pectinase | 0.001 | 8.2 | 1.0 |
| Test Example | 21 | Yellow Pea (with seed skin) | 7.0 | — | — | Psyllium Seed Skin | 3 | 2.7 | Pectinase | 0.001 | 9.7 | 1.1 |
| Test Example | 22 | Yellow Pea (with seed skin) | 7.0 | — | — | Psyllium Seed Skin | 3 | 2.7 | Xylanase | 0.001 | 9.7 | 1.1 |
| Test Example | 23 | Yellow Pea (with seed skin) | 7.0 | — | — | Psyllium Seed Skin | 3 | 2.7 | Pectinase | 0.001 | 9.7 | 1.1 |
| Test Example | 24 | Yellow Pea (with seed skin) | 6.6 | — | — | Psyllium Seed Skin | 6 | 5.4 | Pectinase | 0.001 | 12.0 | 1.6 |
| Comparative Example | 25 | Yellow Pea (with seed skin) | 5.7 | — | — | Psyllium Seed Skin | 12 | 10.8 | Pectinase | 0.001 | 16.5 | 2.6 |

[Preparation and parameter measurement of swollen compositions]

The dough composition of each of the Test Examples and Comparative Examples obtained by the above procedure was molded so each one side of a hypothetical rectangle of the minimum volume inscribed by the composition was 15 cm, and then subjected to dough processing and baking treatment under the conditions shown in Table 4 below. For the dough compositions in some examples indicated in Table 4 below, the fermentation and enzyme treatments were performed under the conditions shown in Table 4 below prior to the baking treatment (Oriental fresh yeast from Oriental Yeast Co., Ltd. was used as the yeast). After heat treatment, the composition was cooled at ordinary temperature to thereby obtain the swollen composition of each of the Test Examples (except Test Examples 15 and 20) and Comparative Examples. The shape of the swollen composition in each Test Example after cooling, reduced pressure treatment, and room temperature (20°C) storage for one hour was unchanged from that after baking. The composition of Test Example 13 experienced a slight shrinkage over time after swelling, but was acceptable.

[Table 4-1]

| Table 4 | | Step (ii) Heating Treatment | | | | | Step (iii) Reduced Pressure |
|---|---|---|---|---|---|---|---|
| | | Dough Compositon Conditions | | | Baking Conditions | | Reduced Pressure Conditions |
| | | Treatment | Temperature | Time | Conditions | Decrease Ratio of Dry Mass Basis Moisture Content during Baking | Pressure |
| | | | °C | Hours | | % | bar |
| Comparative Example | 1 | Yeast Fermentation | 38 °C | 2 | 200 °C, 15 min | 68% | — |
| Test Example | 2 | Yeast Fermentation | 38 °C | 2 | 200 °C, 15 min | 65% | — |
| Test Example | 3 | Yeast Fermentation | 38 °C | 2 | 200 °C, 15 min | 62% | — |
| Test Example | 4 | Yeast Fermentation | 38 °C | 2 | 200 °C, 15 min | 65% | — |
| Test Example | 5 | Yeast Fermentation | 38 °C | 2 | 200 °C, 15 min | 58% | — |
| Test Example | 6 | Yeast Fermentation | 38 °C | 2 | 200 °C, 15 min | 67% | — |
| Test Example | 7 | Yeast Fermentation | 38 °C | 2 | 200 °C, 15 min | 64% | — |
| Test Example | 8 | Yeast Fermentation | 38 °C | 6 | 200 °C, 15 min | 60% | — |
| Test Example | 9 | Yeast Fermentation | 38 °C | 4 | 200 °C, 15 min | 68% | — |
| Test Example | 10 | Yeast Fermentation | 38 °C | 4 | 200 °C, 15 min | 69% | — |
| Test Example | 11 | Yeast Fermentation | 38 °C | 2 | 200 °C, 15 min | 49% | — |
| Test Example | 12 | Yeast Fermentation | 38 °C | 2 | 200 °C, 15 min | 84% | — |
| Test Example | 13 | Yeast Fermentation | 15 °C | 2 | 200 °C, 15 min | 55% | — |

[Table 4-2]

| Table 4 | | Step (ii) Heating Treatment | | | | | Step (iii) Reduced Pressure |
|---|---|---|---|---|---|---|---|
| | | Dough Compositon Conditions | | | Baking Conditions | | Reduced Pressure Conditions |
| | | Treatment | Temperature | Time | Conditions | Decrease Ratio of Dry Mass Basis Moisture Content during Baking | Pressure |
| | | | °C | Hours | | % | bar |
| Comparative Example | 14 | Yeast Fermentation | 4 °C | 2 | 200 °C, 15 min | 69% | — |
| Test Example | 15 | Yeast Fermentation | 38 °C | 2 | 200 °C, 15 min | 62% | 0.8 |
| Test Example | 16 | Left with Expansion Agent | 38 °C | 2 | 200 °C, 15 min | 66% | — |
| Test Example | 17 | Yeast Fermentation | 38 °C | 2 | 200 °C, 15 min | 62% | — |
| Test Example | 18 | Yeast Fermentation | 38 °C | 2 | 200 °C, 15 min | 65% | — |
| Test Example | 19 | Yeast Fermentation | 15 °C | 15 | 200 °C, 15 min | 67% | — |
| Test Example | 20 | Yeast Fermentation | 15 °C | 15 | 200 °C, 15 min | 69% | 0.1 |
| Test Example | 21 | Yeast Fermentation | 38 °C | 2 | 200 °C, 15 min | 62% | — |
| Test Example | 22 | Yeast Fermentation | 38 °C | 2 | 200 °C, 15 min | 60% | — |
| Test Example | 23 | Yeast Fermentation | 38 °C | 2 | 200 °C, 15 min | 64% | — |
| Test Example | 24 | Yeast Fermentation | 38 °C | 2 | 200 °C, 15 min | 64% | — |
| Comparative Example | 25 | Yeast Fermentation | 38 °C | 2 | 200 °C, 15 min | 64% | — |

The swollen compositions of the Test Examples and Comparative Examples obtained by the above procedure were subjected to measurement of various parameters using the methods described in the [DESCRIPTION OF ENMODINMNTS] section above. The results of the swollen compositions of the Test Examples and Comparative Examples are shown in Tables 5 and 6 below. For all of the compositions with an "Pull" score of three or more, the total porosity increased by 1% or more before and after the heat treatment at step (ii), and both the total porosity and the total percentage of closed pores measured for frozen section A were above 1%.

[Table 5-1]

| Table 5 | | Swollen Composition | | | | | | | | | |
|---|---|---|---|---|---|---|---|---|---|---|---|
| | | Raw Material | | | Parameters Relating to Starch | | | | | | |
| | | Pulse Content (wet mass basis) | Cereal Content (wet mass basis) | Edible Plant Raw Material (other than pulse and cereal) | Starch Content (wet mass basis) | Starch Grains | $AUC_{5.0\text{-}6.5}$ | | Breakdown Viscosity [Value α] | Peak Viscosity [Value β] | Peak Viscosity / Breakdown Viscosity ([Value β] / [Value α]) |
| | | | | | | | Value after Step (iii) | Decrease Ratio during Step (iii) | | | |
| | | mass % | mass % | mass % | mass % | /mm$^2$ | % | % | cp | cp | |
| Comparative Example | 1 | 75.0 | — | — | 37.5 | 0 | 47 | 72% | 300 | — | — |
| Test Example | 2 | 73.2 | — | — | 36.6 | 0 | 52 | 56% | 300 | 95 | 0.3 |
| Test Example | 3 | 71.3 | — | — | 35.7 | 0 | 47 | 72% | 300 | 286 | 1.0 |
| Test Example | 4 | 72.6 | — | — | 36.3 | 0 | 48 | 69% | 300 | 477 | 1.6 |
| Test Example | 5 | 68.6 | — | — | 34.3 | 0 | 55 | 47% | 300 | 763 | 2.5 |
| Test Example | 6 | 71.7 | — | — | 35.9 | 0 | 58 | 40% | 300 | 1716 | 5.7 |
| Test Example | 7 | 68.4 | — | — | 34.2 | 0 | 42 | 93% | 300 | 2860 | 9.5 |
| Test Example | 8 | 66.4 | — | — | 33.2 | 0 | 57 | 42% | 100 | 1210 | 12.1 |
| Test Example | 9 | 70.5 | — | — | 35.2 | 0 | 61 | 33% | 200 | 1592 | 8.0 |
| Test Example | 10 | 62.1 | — | — | 31.0 | 0 | 48 | 56% | 200 | 1705 | 8.5 |
| Test Example | 11 | 61.6 | — | — | 30.8 | 0 | 59 | 37% | 300 | 2566 | 8.6 |
| Test Example | 12 | 33.6 | 33.6 | — | 33.6 | 0 | 61 | 44% | 300 | 2749 | 9.2 |
| Test Example | 13 | 64.1 | — | — | 32.1 | 0 | 71 | 14% | 200 | 2897 | 14.5 |

[Table 5-2]

| Table 5 | | Swollen Composition | | | | | | | | | |
|---|---|---|---|---|---|---|---|---|---|---|---|
| | | Raw Material | | | Parameters Relating to Starch | | | | | | |
| | | Pulse Content (wet mass basis) | Cereal Content (wet mass basis) | Edible Plant Raw Material (other than pulse and cereal) | Starch Content (wet mass basis) | Starch Grains | $AUC_{5.0-5.5}$ Value after Step (iii) | $AUC_{5.0-5.5}$ Decrease Ratio during Step (iii) | Breakdown Viscosity [Value α] | Peak Viscosity [Value β] | Peak Viscosity / Breakdown Viscosity ([Value β] / [Value α]) |
| | | mass % | mass % | mass % | mass % | /mm$^2$ | % | % | cp | cp | |
| Comparative Example | 14 | 71.0 | — | — | 35.5 | 0 | 78 | 4% | 200 | 2830 | 14.2 |
| Test Example | 15 | 23.2 | — | 44.2 | 44.9 | 0 | 46 | 54% | 200 | 1740 | 8.7 |
| Test Example | 16 | 70.1 | — | — | 35.1 | 0 | 58 | 40% | 200 | 2291 | 11.5 |
| Test Example | 17 | — | 67.4 | — | 33.7 | 0 | 51 | 47% | 400 | 1905 | 4.8 |
| Test Example | 18 | 68.9 | — | — | 34.4 | 0 | 55 | 44% | 200 | 2800 | 14.0 |
| Test Example | 19 | 69.9 | — | — | 35.0 | 0 | 48 | 65% | 200 | 2550 | 12.8 |
| Test Example | 20 | 62.1 | — | — | 31.0 | 0 | 48 | 56% | 300 | 1803 | 6.0 |
| Test Example | 21 | 67.4 | — | — | 33.7 | 0 | 50 | 62% | 200 | 2775 | 13.9 |
| Test Example | 22 | 66.4 | — | — | 33.2 | 0 | 46 | 76% | 200 | 2775 | 13.9 |
| Test Example | 23 | 68.4 | — | — | 34.2 | 0 | 42 | 93% | 300 | 2860 | 9.5 |
| Test Example | 24 | 64.0 | — | — | 32.0 | 0 | 48 | 69% | 100 | 6117 | 61.2 |
| Comparative Example | 25 | 55.1 | — | — | 27.6 | 0 | 51 | 59% | 100 | Not Measurable | Not Measurable |

[Table 6-1]

| Table 6 | | Swollen Composition | | | | | | | | |
|---|---|---|---|---|---|---|---|---|---|---|
| | | Parameters Relating to Polysaccharides | | | Dietary Fiber Content (wet mass basis) | Protein | | Organic Acid Content | Plant Polysaccharides Content (wet mass basis) | Dry Mass Basis Moisture Content |
| | | 1st+2nd / Molecular Weight Logarithms 3.5 | 2ndMP/1stMP | | | Protein Content (wet mass basis) | PDI Value | | | |
| | | | Value after Step (iii) | Decrease Ratio during Step (iii) | | | | | | |
| | | | % | % | mass % | mass % | mass % | mass % | mass % | mass % |
| Comparative Example | 1 | 0.1 | 95.0% | 0% | 11.3% | 15.0 | 4.2% | 0.1% | 0.0 | 32 |
| Test Example | 2 | 0.2 | 85.0% | 11% | 11.2% | 14.6 | 4.2% | 0.1% | 0.1 | 35 |
| Test Example | 3 | 0.3 | 85.0% | 11% | 11.2% | 14.3 | 4.2% | 0.1% | 0.4 | 38 |
| Test Example | 4 | 1 | 81.0% | 15% | 11.6% | 14.5 | 4.2% | 0.1% | 0.7 | 35 |
| Test Example | 5 | 2 | 84.0% | 12% | 11.4% | 13.7 | 4.2% | 0.1% | 1.1 | 42 |
| Test Example | 6 | 4 | 79.0% | 17% | 13.3% | 14.3 | 4.2% | 0.1% | 2.7 | 33 |
| Test Example | 7 | 7 | 83.0% | 13% | 14.3% | 13.7 | 4.2% | 0.1% | 4.4 | 36 |
| Test Example | 8 | 7 | 71.0% | 25% | 13.9% | 13.3 | 4.2% | 0.1% | 4.3 | 40 |
| Test Example | 9 | 8 | 75.0% | 21% | 14.7% | 14.1 | 4.2% | 0.1% | 4.5 | 32 |
| Test Example | 10 | 7 | 78.0% | 18% | 14.0% | 12.4 | 3.1% | 0.1% | 5.1 | 47 |
| Test Example | 11 | 7 | 87.0% | 8% | 12.9% | 12.3 | 4.2% | 0.1% | 4.0 | 51 |
| Test Example | 12 | 6 | 85.0% | 11% | 14.3% | 10.1 | 4.0% | 0.1% | 6.8 | 33 |
| Test Example | 13 | 9 | 91.0% | 4% | 13.4% | 12.8 | 4.2% | 0.1% | 4.1 | 45 |

[Table 6-2]

| Table 6 | | Swollen Composition | | | | | | | | |
|---|---|---|---|---|---|---|---|---|---|---|
| | | Parameters Relating to Polysaccharides | | | Dietary Fiber Content (wet mass basis) | Protein | | Organic Acid Content | Plant Polysaccharides Content (wet mass basis) | Dry Mass Basis Moisture Content |
| | | 1st+2nd / Molecular Weight Logarithms 3.5 | 2ndMP/1stMP | | | Protein Content (wet mass basis) | PDI Value | | | |
| | | | Value after Step (iii) | Decrease Ratio during Step (iii) | | | | | | |
| | | | % | % | mass % | mass % | mass % | mass % | mass % | mass % |
| Comparative Example | 14 | 7 | 98.0% | 0% | 14.8% | 14.2 | 4.2% | 0.1% | 4.6 | 31 |
| Test Example | 15 | 7 | 85.0% | 11% | 7.6% | 7.3 | 2.8% | 0.1% | 4.3 | 38 |
| Test Example | 16 | 6 | 88.0% | 7% | 14.6% | 14.0 | 4.2% | 0.1% | 4.5 | 34 |
| Test Example | 17 | 6 | 70.0% | 26% | 10.2% | 6.7 | 5.6% | 0.1% | 4.3 | 38 |
| Test Example | 18 | 8 | 87.0% | 8% | 14.4% | 13.8 | 2.6% | 0.1% | 4.4 | 35 |
| Test Example | 19 | 7 | 87.0% | 8% | 14.6% | 14.0 | 2.6% | 0.1% | 4.5 | 33 |
| Test Example | 20 | 7 | 78.0% | 18% | 14.0% | 12.4 | 3.1% | 0.1% | 5.1 | 47 |
| Test Example | 21 | 7 | 87.0% | 8% | 14.1% | 13.5 | 4.2% | 0.8% | 4.3 | 38 |
| Test Example | 22 | 7 | 87.0% | 8% | 13.9% | 13.3 | 4.2% | 0.1% | 4.3 | 40 |
| Test Example | 23 | 7 | 83.0% | 13% | 14.3% | 13.7 | 71% | 0.1% | 4.4 | 36 |
| Test Example | 24 | 7 | 83.0% | 13% | 17.6% | 12.8 | 4.8% | 0.1% | 8.8 | 36 |
| Comparative Example | 25 | 7 | 85.0% | 11% | 24.2% | 11.0 | 4.2% | 0.1% | 17.6 | 36 |

[Sensory evaluation of swollen compositions]

The swollen compositions of the Test Examples and Comparative Examples were subjected to sensory evaluation by the following procedure. The sensory inspectors were selected from those who achieved excellent performance in the identification training described in A to C below, had experience in product development, had a lot of knowledge about food qualities such as taste and texture, and were capable of performing absolute evaluation for each sensory evaluation item.

A) Taste discrimination test: a total of seven samples were prepared, including five aqueous solutions prepared for five tastes (sweetness: taste of sugar; sourness: taste of tartaric acid; umami: taste of monosodium glutamate; saltiness; taste of sodium chloride; and bitterness: taste of caffeine), each with a concentration close to the threshold value of each component, and two sample solutions with distilled water, and the trainees were instructed to accurately identify the sample of each taste.
B) Concentration difference discrimination test: a series of five solutions with slightly different concentrations was prepared for each of salt and acetic acid, and the trainees were instructed to accurately distinguish the solutions of different concentrations for each component.
C) Three-point identification test to accurately identify from three soy sauce samples, two from Manufacturer A and one from Manufacturer B, the soy sauce sample from Manufacturer B.

In each of the evaluation items, an objective sensory examination was carried out by 10 inspectors, after standard samples were evaluated in advance by all the inspectors, and each score of the evaluation criteria was standardized. Specifically, ten trained sensory inspectors observed each composition during the production process and ingested each swollen composition, and evaluated it in terms of "Swelling," "Food texture unique to swollen food," and "Overall evaluation," on the criteria explained below. The arithmetic mean of the 10 sensory inspectors' scores was calculated and rounded off to one decimal place to give the final score. In addition, the obtained samples were subjected to cooling and reduced pressure treatments, and then left to stand for one hour at room temperature (20°C), and the shape of each of the obtained products was evaluated by sensory examination.

*Evaluation criteria for "Swelling":

The swollen state of each composition after heating treatment was evaluated on the following one-to-five scale.

5: Very favorable, with very good swollen state.
4: Favorable, with good swollen state.
3: Rather favorable, with slightly good swollen state.
2: Rather unfavorable, with slightly bad swollen state.
1: Unfavorable, with bad swollen state.

*Evaluation criteria for "Viscoelasticity (pull) characteristic of starch network":

The food texture unique to swollen food for each composition after heating treatment was evaluated on the following one-to-five scale.

5: Very favorable, with the viscoelasticity (pull) characteristic of starch network completely retained.
4: Favorable, with the viscoelasticity (pull) characteristic of starch network generally retained.
3: Rather favorable, although the viscoelasticity (pull) characteristic of starch network is somewhat lost.
2: Rather unfavorable, with the viscoelasticity (pull) characteristic of starch network considerably lost.
1: Unfavorable, with the viscoelasticity (pull) characteristic of starch network completely lost.

*Evaluation criteria for "Overall evaluation":

The overall balance of properties and taste of each composition was evaluated on the following one-to-five scale. The comments on "Raw material-derived odor" were also added.

5: Very favorable, with very good balance between the swelling ability during heating and retention of the viscoelasticity (pull) characteristic of starch network after heating.
4: Favorable, with good balance between the swelling ability during heating and retention of the viscoelasticity (pull) characteristic of starch network after heating.
3: Rather favorable, with slightly good balance between the swelling ability during heating and retention of the viscoelasticity (pull) characteristic of starch network after heating.
2: Rather unfavorable, with slightly bad balance between the swelling ability during heating and retention of the viscoelasticity (pull) characteristic of starch network after heating.
1: Unfavorable, with bad balance between the swelling ability during heating and retention of the viscoelasticity (pull) characteristic of starch network after heating.

The results of the sensory evaluation of the swollen compositions of the Test Examples and Comparative Examples are shown in Table 7 below.

[Table 7]

| Table 7 | | Sensory Evaluation | | | |
|---|---|---|---|---|---|
| | | Swelling | Pull (Viscoelastisy characteristic of starch network) | Overall Evaluation (balance) | Comments |
| Comparative Example | 1 | 1 | 1 | 1 | |
| Test Example | 2 | 3 | 3 | 3 | |
| Test Example | 3 | 3 | 3 | 3 | |
| Test Example | 4 | 4 | 4 | 4 | |
| Test Example | 5 | 5 | 5 | 5 | |
| Test Example | 6 | 5 | 5 | 5 | |
| Test Example | 7 | 5 | 5 | 5 | |
| Test Example | 8 | 5 | 4 | 4 | |
| Test Example | 9 | 5 | 5 | 5 | |
| Test Example | 10 | 5 | 5 | 5 | |
| Test Example | 11 | 5 | 5 | 5 | |
| Test Example | 12 | 5 | 5 | 5 | |
| Test Example | 13 | 3 | 3 | 3 | |
| Comparative Example | 14 | 2 | 2 | 2 | |
| Test Example | 15 | 5 | 5 | 5 | |
| Test Example | 16 | 5 | 5 | 5 | |
| Test Example | 17 | 5 | 5 | 5 | |
| Test Example | 18 | 5 | 5 | 5 | |
| Test Example | 19 | 5 | 5 | 5 | |
| Test Example | 20 | 5 | 5 | 5 | |
| Test Example | 21 | 5 | 5 | 5 | |
| Test Example | 22 | 5 | 5 | 5 | |
| Test Example | 23 | 5 | 5 | 5 | Raw smell of materials noticeable |
| Test Example | 24 | 5 | 5 | 5 | |
| Comparative Example | 25 | 1 | 1 | 1 | |

The reasons for the good results in each Test Example can be deemed as follows: a lower viscosity value ([Value α]) during heating for baking (corresponding to the temperature increasing step (a1) in the present invention) than [Value β] is deemed to have helped air bubbles to expand during baking, resulting in a dough viscosity that makes it easier to achieve the expanded state. In addition, a higher viscosity value ([Value β]) during the latter half of the baking (during cooling, corresponding to the temperature decreasing step (a2) of the present invention) than [Value α] is deemed to have helped add a favorable viscosity (pull) to the composition. Furthermore, a large difference between the molecular weight logarithm value of 1stMP, which presumably reflects a fraction of plant polysaccharides (especially seed skin of psyllium) relatively high molecular weights, and the molecular weight logarithm value of 2ndMP, which presumably reflects a fraction of plant polysaccharides (especially seed skin of psyllium) with relatively low molecular weights, is deemed to have helped air bubbles to expand further during baking. Although the principle behind this is unknown, it is deemed that adjusting the size of plant polysaccharides having viscosity to be relatively small helped slightly suppress the elasticity and thereby promote secondary growth of air bubbles during baking.

## INDUSTRIAL APPLICABILITY

The present invention provides a swollen composition comprising a starch derived from pulse and/or cereal which exhibits accelerated swelling property and to which a viscoelasticity (pull) characteristic of the starch network is imparted, and is of great use value in the field of food products.

## Claims

1. A swollen composition comprising a starch derived from pulse and/or cereal and satisfying requirements (1) to (5) below.

    (1) The composition has a starch content of in terms of wet mass basis 3 mass % or more.
    (2) The composition has a dry mass basis moisture content of less than 150 mass %.
    (3) The composition has a dietary fiber content of 3.0 mass % or more in terms of wet mass basis.
    (4) The composition has a plant polysaccharide content of 0.1 mass % or more in terms of wet mass basis.
    (5) When the composition is subjected to measurement in accordance with <Method a>, the ratio of [Value β] / [Value α] as defined below is 100 or less.

        [Value α]: A breakdown viscosity (cP) during temperature increasing step (a1).
        [Value β]: A peak viscosity (cP) during temperature decreasing step (a2).
        <Method a> As a measurement sample, 32 g of 22 mass % aqueous slurry of a crushed product of the composition is subjected to measurement using a rapid visco-analyzer with carrying out steps (a1) and (a2) below.
        (a1) Temperature increasing step, in which the temperature of the measurement sample is increased from 50 °C to 140 °C at an increasing rate 12 °C/min and then maintained for 3 minutes.
        (a2) Temperature decreasing step, in which the temperature is decreased from 140 °C to 50 °C at a decreasing rate of 12 °C/min, wherein
        the swollen composition is obtainable by a method comprising the following steps.

            (i) Preparing a dough composition containing starch derived from pulse and/or cereal and satisfying requirements (1a) to (5a) below

                (1a) The dough composition has a starch content of 3.0 mass % or more in terms of wet mass basis,
                (2a) The dough composition has a dry mass basis moisture content of more than 60 mass %,
                (3a) The dough composition has a dietary fiber content of 3.0 mass % or more in terms of wet mass basis.
                (4a) The dough composition has a plant polysaccharide content of 0.1 mass % or more in terms of wet mass basis.
                (5a) The dough composition has a content of a seed skin of psyllium of 0.1 mass % or more but 10 mass % or less, wherein the seed skin of psyllium having undergone enzyme treatment.

            (ii) Swelling the dough composition from step (i) via heating treatment, wherein
            (6a) the dry mass basis moisture content of the dough composition decreases by 5 mass % or more during the heating treatment,
            (iii) subjecting the dough composition from step (ii) to treatment under reduced pressure.

2. The swollen composition according to claim 1,

wherein when 6% suspension of the swollen composition is observed, the number of starch grain structures is 300/mm$^2$ or less,
wherein the swollen composition has a PDI (protein dispersibility index) value of less than 55 mass %,
wherein when at least one composition frozen section A obtained via [Procedure C] below is observed, requirement (7) below is satisfied:

(7) When pores with an area of 10000 $\mu m^2$ or more in a cross-section image of the composition frozen section are observed, the ratio of a weighted average area of the pores to a weighted average perimeter of the pores {(weighted average area)/(weighted average perimeter)} is 100 or more.
[Procedure C] The composition is frozen at -25°C and cut along a cut plane A to prepare a composition frozen section A,

wherein the composition frozen section A includes composition frozen section A1, which is obtained along cut plane A1, wherein cut plane A1 is orthogonal to a longitudinal axis of the composition,
wherein the composition frozen section A includes composition frozen section A1, which is obtained along cut plane A1, and composition frozen section A2, which is obtained along cut plane A2, wherein cut plane A1 is orthogonal to a longitudinal axis of the composition and cut plane A2 is parallel to the longitudinal axis of the composition,
wherein when the composition is subjected to [Procedure d] below and the resulting product is subjected to measurement under [Condition D] below to obtain a molecular weight distribution curve in an interval with molecular weight logarithms of 3.5 or more but less than 6.5 (hereinafter referred to as "$MWDC_{3.5-6.5}$"), the ratio of an area under the curve in an interval with molecular weight logarithms of 5.0 or more but less than 6.5 to the area under the entire curve (hereinafter referred to as "$AUC_{5.0-6.5}$") is 1 % or more but 70 % or less.

[Procedure d] The composition is crushed, and an ethanol-insoluble and dimethyl sulfoxide-soluble component is obtained.
[Condition D] When the composition is treated via [Procedure d] above and dissolved into 1M aqueous solution of sodium hydroxide at a concentration of 0.30 mass %, and allowed to stand at 37 °C for 30 minutes, then combined with an equal volume of water and an equal volume of eluent and subjected to filtration with a 5-$\mu$m filter, and the filtrate is then subjected to gel filtration chromatography to thereby obtain a molecular weight distribution,

wherein the organic acid content is 0.01 mass % more,
wherein the pulse is one or more species of pulse selected from Pisum, Phaseolus, Cajanus, Vigna, Vicia, Cicer, Glycine and Lens species,
wherein the pulse is matured pulse,
wherein the cereal is one or more species of cereal selected from awa (foxtail millet), hie (Japanese millet), kibi (common millet), sorghum, rye, oat, hatomugi (job' s tear), corn, buckwheat, amaranthus, and quinoa,
wherein the ratio of the starch content contained in pulse and/or cereal to the total starch content of the composition is 10 mass % or more, and/or
wherein the swollen composition is substantially free of gluten.

**3.** The swollen composition according to claim 1 or 2, comprising dietary fiber-localized part of pulse and/or cereal.

**4.** The swollen composition according to claim 3,

comprising edible part of pulse and/or cereal, and/or
wherein the total content of edible part of pulse and/or cereal and dietary fiber-localized part of pulse and/or cereal is 10 mass % or more in terms of wet mass basis.

**5.** The swollen composition according to claim 3 or 4,
wherein the enzyme treatment is cellulase, xylanase, or pectinase treatment.

**6.** The swollen composition according to any one of claims 1 to 5,

wherein the plant polysaccharide satisfies requirement (8) below. (8) A viscosity of aqueous solution containing 4 mass % of plant polysaccharide, measured with a Type B viscometer at 4°C, 60 rpm, pH 4, is more than 200 cP,
wherein the plant polysaccharide derives from seed skin of psyllium,
wherein the plant polysaccharide has undergone enzyme treatment,
wherein the plant polysaccharide has a soluble dietary fiber content of 5 mass % or more in terms of wet mass basis, and/or
wherein the plant polysaccharide is a plant viscous component.

**7.** The swollen composition according to any one of claims 1 to 6,
wherein the content of seed skin of psyllium is preferably 0.1 mass % or more in terms of wet mass basis.

**8.** A method for producing a swollen composition, comprising the following steps.

(i) Preparing a dough composition containing starch derived from pulse and/or cereal and satisfying requirements (1) to (5) below

(1) The dough composition has a starch content of 3.0 mass % or more in terms of wet mass basis,
(2) The dough composition has a dry mass basis moisture content of more than 60 mass %,
(3) The dough composition has a dietary fiber content of 3.0 mass % or more in terms of wet mass basis.
(4) The dough composition has a plant polysaccharide content of 0.1 mass % or more in terms of wet mass basis.
(4') The dough composition has a content of a seed skin of psyllium of 0.1 mass % or more but 10 mass % or less, wherein the seed skin of psyllium having undergone enzyme treatment.
(5) When the composition is subjected to measurement in accordance with <Method a>, the ratio of [Value β] / [Value α] as defined below is 100 or less.

[Value α]: A breakdown viscosity (cP) during temperature increasing step (a1).
[Value β]: A peak viscosity (cP) during temperature decreasing step (a2).
<Method a> As a measurement sample, 32 g of 22 mass % aqueous slurry of a crushed product of the composition is subjected to measurement using a rapid visco-analyzer with carrying out steps (a1) and (a2) below.

(a1) Temperature increasing step, in which the temperature of the measurement sample is increased from 50 °C to 140 °C at an increasing rate 12 °C/min and then maintained for 3 minutes.
(a2) Temperature decreasing step, in which the temperature is decreased from 140 °C to 50 °C at a decreasing rate of 12 °C/min.

(ii) Swelling the dough composition from step (i) via heating treatment, wherein
(6) the dry mass basis moisture content of the dough composition decreases by 5 mass % or more during the heating treatment, and (iii) subjecting the dough composition from step (ii) to treatment under reduced pressure.

**9.** The method according to claim 8,

wherein step (ii) includes:

(ii-a) yeast-fermenting the dough composition from step (i); and
(ii-b) subjecting the yeast-fermented composition from step (ii-a) to baking treatment step, or

wherein step (ii) includes:

(ii-2a) mixing the dough composition from step (i) with air bubbles and/or an expansion agent; and
(ii-2b) subjecting the mixed composition from step (ii-2a) to baking treatment.

**10.** The method according to claim 8 or 9,

wherein the degree of gelatinization of the dough composition from step (i) is less than 70 mass %, and/or
wherein when 6% suspension of the dough composition from step (i) is observed, the number of starch grain structures is 10/$mm^2$ or more.

**11.** The method according to any one of claims 8 to 10,

wherein step (i) and/or step (ii) include(s) carrying out enzyme treatment, and
wherein step (i) and/or step (ii) preferably include(s) treatment one or more enzymes selected from cellulase, pectinase, and xylanase.

**12.** The method according to any one of claims 8 to 11,

wherein step (i) and/or step (ii) include(s) adding to the composition pulse and/or cereal with a PDI (protein dispersibility index) value of less than 55 mass %,
wherein step (i) and/or step (ii) include(s) adding to the composition plant polysaccharide having undergone enzyme treatment,
wherein step (i) and/or step (ii) include(s) adding to the composition plant polysaccharide satisfying requirements (8) and (9):
(8) When the plant polysaccharide is subjected to measurement in accordance with <Method a>, the ratio of [Value $\beta$] / [Value $\alpha$] as defined below is 100 or less.

[Value $\alpha$]: A breakdown viscosity (cP) during temperature increasing step (a1).
[Value $\beta$]: A peak viscosity (cP) during temperature decreasing step (a2).
<Method a> As a measurement sample, 32 g of 22 mass % aqueous slurry of a crushed product of the composition is subjected to measurement using a rapid visco-analyzer with carrying out steps (a1) and (a2) below.
(a1) Temperature increasing step, in which the temperature of the measurement sample is increased from 50 °C to 140 °C at an increasing rate 12 °C/min and then maintained for 3 minutes.
(a2) Temperature decreasing step, in which the temperature is decreased from 140 °C to 50 °C at a decreasing rate of 12 °C/min.

**13.** A swollen composition produced by a method according to any one of claims 8 to 12.

**Patentansprüche**

**1.** Gequollene Zusammensetzung, umfassend eine aus einer Hülsenfrucht und/oder einem Getreide gewonnene Stärke und die nachstehenden Anforderungen (1) bis (5) erfüllend,

(1) die Zusammensetzung weist einen Stärkegehalt von 3 Masse-% oder mehr, bezogen auf die Feuchtmassenbasis, auf,
(2) die Zusammensetzung weist einen Trockenmassenbasisfeuchtigkeitsgehalt von weniger als 150 Masse-% auf,
(3) die Zusammensetzung weist einen Gehalt an Ballaststoffen von 3,0 Masse-% oder mehr, bezogen auf die Feuchtmassenbasis, auf,
(4) die Zusammensetzung weist einen Pflanzenpolysaccharidgehalt von 0,1 Masse-% oder mehr, bezogen auf die Feuchtmassenbasis, auf,
(5) wenn die Zusammensetzung einer Messung gemäß <Verfahren a> unterzogen wird, beträgt das Verhältnis von [Wert $\beta$] / [Wert $\alpha$], wie unten definiert, 100 oder weniger,

[Wert $\alpha$]: ein Viskositätsverlust (cP) während des Temperaturerhöhungsschritts (a1),
[Wert $\beta$]: eine Spitzenviskosität (cP) während des Temperaturabsenkungsschritts (a2),
<Verfahren a> als Messprobe werden 32 g einer 22 Masse-%igen wässrigen Aufschlämmung eines zerkleinerten Produkts der Zusammensetzung einer Messung unter Verwendung eines Schnell-Viskositätsanalysators unterzogen, wobei die nachstehenden Schritte (a1) und (a2) durchgeführt werden,
(a1) Temperaturerhöhungsschritt, bei dem die Temperatur der Messprobe von 50 °C auf 140 °C mit einer Erhöhungsrate von 12 °C/min erhöht und dann 3 Minuten lang aufrechterhalten wird,
(a2) Temperaturabsenkungsschritt, bei dem die Temperatur von 140 °C auf 50 °C mit einer Absenkungsrate von 12 °C/min abgesenkt wird, wobei
die gequollene Zusammensetzung durch ein Verfahren erhaltbar ist, das die folgenden Schritte umfasst,

(i) bereiten einer Teigzusammensetzung, die aus einer Hülsenfrucht und/oder einem Getreide gewonnene Stärke enthält und die nachstehenden Anforderungen (1a) bis (5a) erfüllt

(1a) die Teigzusammensetzung weist einen Stärkegehalt von 3,0 Masse-% oder mehr, bezogen auf die Feuchtmassenbasis, auf,
(2a) die Teigzusammensetzung weist einen Trockenmassenbasisfeuchtigkeitsgehalt von mehr als 60 Masse-% auf,
(3a) die Teigzusammensetzung weist einen Gehalt an Ballaststoffen von 3,0 Masse-% oder mehr, bezogen auf die Feuchtmassenbasis, auf,
(4a) die Teigzusammensetzung weist einen Pflanzenpolysaccharidgehalt von 0,1 Masse-% oder mehr, bezogen auf die Feuchtmassenbasis, auf,
(5a) die Teigzusammensetzung weist einen Gehalt an Flohsamenschale von 0,1 Masse-% oder mehr, aber 10 Masse-% oder weniger auf, wobei die Flohsamenschale eine Enzymbehandlung durchlaufen hat,

(ii) quellenlassen der Teigzusammensetzung aus Schritt (i) mittels Erwärmungsbehandlung, wobei (6a) der Trockenmassenbasisfeuchtigkeitsgehalt der Teigzusammensetzung um 5 Masse-% oder mehr während der Erwärmungsbehandlung abnimmt,
(iii) unterziehen der Teigzusammensetzung aus Schritt (ii) einer Behandlung unter vermindertem Druck.

**2.** Gequollene Zusammensetzung nach Anspruch 1,

wobei, wenn eine 6 %ige Suspension der gequollenen Zusammensetzung beobachtet wird, die Anzahl an Stärkekornstrukturen 300/$mm^2$ oder weniger beträgt,
wobei die gequollene Zusammensetzung einen PDI(Proteindispergierbarkeitsindex)-Wert von weniger als 55 Masse-% aufweist,
wobei, wenn mindestens ein Gefrierschnitt A der Zusammensetzung, der mittels nachstehendem [Vorgang C] erhaltener wird, beobachtet wird, die nachstehende Anforderung (7) erfüllt ist:

(7) wenn Poren mit einer Fläche von 10000 $\mu m^2$ oder mehr in einem Querschnittsbild des Gefrierschnitts der Zusammensetzung beobachtet werden, beträgt das Verhältnis einer gewichteten durchschnittlichen Fläche der Poren zu einem gewichteten durchschnittlichen Umfang der Poren {(gewichtete durchschnittliche Fläche)/(gewichteter durchschnittlicher Umfang)} 100 oder mehr,
[Vorgang C] die Zusammensetzung wird bei -25 °C gefroren und entlang einer Schnittebene A geschnitten, um einen Gefrierschnitt A der Zusammensetzung zu bereiten,
wobei der Gefrierschnitt A der Zusammensetzung einen Gefrierschnitt A1 der Zusammensetzung enthält, der entlang der Schnittebene A1 erhalten wird, wobei die Schnittebene A1 orthogonal zu einer Längsachse der Zusammensetzung ist,
wobei der Gefrierschnitt A der Zusammensetzung einen Gefrierschnitt A1 der Zusammensetzung, der entlang der Schnittebene A1 erhalten wird, und einen Gefrierschnitt A2 der Zusammensetzung, der entlang der Schnittebene A2 erhalten wird, enthält, wobei die Schnittebene A1 orthogonal zu einer Längsachse der Zusammensetzung ist und die Schnittebene A2 parallel zu der Längsachse der Zusammensetzung ist,
wobei, wenn die Zusammensetzung dem nachstehenden [Vorgang d] unterzogen wird und das resultierende Produkt einer Messung unter nachstehender [Bedingung D] unterzogen wird, um eine Molekulargewichtsverteilungskurve in einem Intervall mit Molekulargewichtslogarithmen von 3,5 oder mehr, aber weniger als 6,5 (im Folgenden als "$MWDC_{3,5-6,5}$" bezeichnet) zu erhalten, das Verhältnis einer Fläche unter der Kurve in einem Intervall mit Molekulargewichtslogarithmen von 5,0 oder mehr, aber weniger als 6,5, zu der Fläche unter der gesamten Kurve (im Folgenden als "$AUC_{5,0-6,5}$" bezeichnet) 1 % oder mehr, aber 70 % oder weniger beträgt,
[Vorgang d] die Zusammensetzung wird zerkleinert und eine in Ethanol unlösliche und in Dimethylsulfoxid lösliche Komponente wird erhalten,
[Bedingung D] wenn die Zusammensetzung mittels vorstehendem [Vorgang d] behandelt und in 1M wässriger Natriumhydroxidlösung mit einer Konzentration von 0,30 Masse-% gelöst wird und bei 37 °C 30 Minuten lang stehen gelassen wird, dann mit einem gleichen Volumen Wasser und einem gleichen Volumen Elutionsmittel kombiniert wird und einer Filtration mit einem 5-$\mu$m-Filter unterzogen wird und das Filtrat dann Gelfiltrationschromatographie unterzogen wird, um dadurch eine Molekulargewichtsverteilung zu erhalten,
wobei der Gehalt an organischer Säure 0,01 Masse-% mehr beträgt,
wobei die Hülsenfrucht eine oder mehrere Hülsenfruchtspezies ist, ausgewählt aus den Spezies Pisum, Phaseolus, Cajanus, Vigna, Vicia, Cicer, Glycine und Lens,
wobei die Hülsenfrucht eine gereifte Hülsenfrucht ist,
wobei das Getreide eine oder mehrere Getreidespezies ist, ausgewählt aus Awa (Kolbenhirse), Hie (japanische Hirse), Kibi (gemeine Hirse), Sorghum, Roggen, Hafer, Hatomugi (Hiobsträne), Mais, Buchweizen, Amaranthus und Quinoa,
wobei das Verhältnis des Stärkegehalts, der in der Hülsenfrucht und/oder in dem Getreide enthalten ist, zu dem Gesamtstärkegehalt der Zusammensetzung 10 Masse-% oder mehr beträgt und/oder
wobei die gequollene Zusammensetzung im Wesentlichen glutenfrei ist.

**3.** Gequollene Zusammensetzung nach Anspruch 1 oder 2, umfassend einen Teil einer Hülsenfrucht und/oder eines Getreides, in dem sich Ballaststoffe befinden.

**4.** Gequollene Zusammensetzung nach Anspruch 3,

umfassend einen essbaren Teil einer Hülsenfrucht und/oder eines Getreides und/oder
wobei der Gesamtgehalt eines essbaren Teils einer Hülsenfrucht und/oder eines Getreides und eines Teil einer Hülsenfrucht und/oder eines Getreides, in dem sich Ballaststoffe befinden, 10 Masse-% oder mehr, bezogen auf Feuchtmassenbasis, beträgt.

**5.** Gequollene Zusammensetzung nach Anspruch 3 oder 4,
wobei die Enzymbehandlung eine Cellulase-, Xylanase- oder Pektinasebehandlung ist.

**6.** Gequollene Zusammensetzung nach einem der Ansprüche 1 bis 5,

wobei das Pflanzenpolysaccharid die nachstehende Anforderung (8) erfüllt,
(8) eine Viskosität einer wässrigen Lösung, die 4 Masse-% Pflanzenpolysaccharid enthält, gemessen mit einem Viskosimeter Typ B bei 4 °C, 60 U/min, pH 4, beträgt mehr als 200 cP,
wobei das Pflanzenpolysaccharid aus Flohsamenschale gewonnen wird,
wobei das Pflanzenpolysaccharid eine Enzymbehandlung durchlaufen hat,
wobei das Pflanzenpolysaccharid einen Gehalt an löslichen Ballaststoffen von 5 Masse-% oder mehr, bezogen auf die Feuchtmassenbasis, aufweist und/oder
wobei das Pflanzenpolysaccharid eine visköse Pflanzenkomponente ist.

**7.** Gequollene Zusammensetzung nach einem der Ansprüche 1 bis 6,
wobei der Gehalt an Flohsamenschale bevorzugt 0,1 Masse-% oder mehr, bezogen auf die Feuchtmassenbasis, beträgt.

**8.** Verfahren zum Herstellen einer gequollenen Zusammensetzung, die folgenden Schritte umfassend,

(i) Bereiten einer Teigzusammensetzung, die aus einer Hülsenfrucht und/oder einem Getreide gewonnene Stärke enthält und die nachstehenden Anforderungen (1) bis (5) erfüllt

(1) die Teigzusammensetzung weist einen Stärkegehalt von 3,0 Masse-% oder mehr, bezogen auf die Feuchtmassenbasis, auf,
(2) die Teigzusammensetzung weist einen Trockenmassenbasisfeuchtigkeitsgehalt von mehr als 60 Masse-% auf,
(3) die Teigzusammensetzung weist einen Gehalt an Ballaststoffen von 3,0 Masse-% oder mehr, bezogen auf die Feuchtmassenbasis, auf,
(4) die Teigzusammensetzung weist einen Pflanzenpolysaccharidgehalt von 0,1 Masse-% oder mehr, bezogen auf die Feuchtmassenbasis, auf,
(4') die Teigzusammensetzung weist einen Gehalt an Flohsamenschale von 0,1 Masse-% oder mehr, aber 10 Masse-% oder weniger auf, wobei die Flohsamenschale eine Enzymbehandlung durchlaufen hat,
(5) wenn die Zusammensetzung einer Messung gemäß <Verfahren a> unterzogen wird, beträgt das Verhältnis von [Wert $\beta$] / [Wert $\alpha$], wie unten definiert, 100 oder weniger,

[Wert $\alpha$]: ein Viskositätsverlust (cP) während des Temperaturerhöhungsschritts (a1),
[Wert $\beta$]: eine Spitzenviskosität (cP) während des Temperaturabsenkungsschritts (a2),
<Verfahren a> als Messprobe werden 32 g einer 22 Masse-%igen wässrigen Aufschlämmung eines zerkleinerten Produkts der Zusammensetzung einer Messung unter Verwendung eines Schnell-Viskositätsanalysators unterzogen, wobei die nachstehenden Schritte (a1) und (a2) durchgeführt werden,
(a1) Temperaturerhöhungsschritt, bei dem die Temperatur der Messprobe von 50 °C auf 140 °C mit einer Erhöhungsrate von 12 °C/min erhöht und dann 3 Minuten lang aufrechterhalten wird,
(a2) Temperaturabsenkungsschritt, bei dem die Temperatur von 140 °C auf 50 °C mit einer Absenkungsrate von 12 °C/min abgesenkt wird,

(ii) Quellenlassen der Teigzusammensetzung aus Schritt (i) mittels Erwärmungsbehandlung, wobei
(6) der Trockenmassenbasisfeuchtigkeitsgehalt der Teigzusammensetzung um 5 Masse-% oder mehr während der Erwärmungsbehandlung abnimmt, und (iii) Unterziehen der Teigzusammensetzung aus Schritt (ii) einer Behandlung unter vermindertem Druck.

**9.** Verfahren nach Anspruch 8,

wobei Schritt (ii) Folgendes enthält:

(ii-a) Hefefermentieren der Teigzusammensetzung aus Schritt (i); und
(ii-b) Unterziehen der hefefermentierten Zusammensetzung aus Schritt (ii-a) einem Backbehandlungsschritt oder

wobei Schritt (ii) Folgendes enthält:

(ii-2a) Mischen der Teigzusammensetzung aus Schritt (i) mit Luftblasen und/oder einem Treibmittel; und
(ii-2b) Unterziehen der gemischten Zusammensetzung aus Schritt (ii-2a) einer Backbehandlung.

**10.** Verfahren nach Anspruch 8 oder 9,

wobei der Verkleisterungsgrad der Teigzusammensetzung aus Schritt (i) weniger als 70 Masse-% beträgt und/oder
wobei, wenn eine 6 %ige Suspension der Teigzusammensetzung aus Schritt (i) beobachtet wird, die Anzahl an Stärkekornstrukturen 10/mm$^2$ oder mehr beträgt.

**11.** Verfahren nach einem der Ansprüche 8 bis 10,

wobei Schritt (i) und/oder Schritt (ii) Durchführen einer Enzymbehandlung enthält/enthalten und
wobei Schritt (i) und/oder Schritt (ii) bevorzugt eine Behandlung ein oder mehrere Enzyme, ausgewählt aus Cellulase, Pektinase und Xylanase, enthält/enthalten.

**12.** Verfahren nach einem der Ansprüche 8 bis 11,

wobei Schritt (i) und/oder Schritt (ii) Hinzufügen einer Hülsenfrucht und/oder eines Getreides mit einem PDI(Proteindispergierbarkeitsindex)-Wert von weniger als 55 Masse-% zu der Zusammensetzung enthält/enthalten,
wobei Schritt (i) und/oder Schritt (ii) Hinzufügen eines Pflanzenpolysaccharids, das eine Enzymbehandlung durchlaufen hat, zu der Zusammensetzung enthält/enthalten,
wobei Schritt (i) und/oder Schritt (ii) Hinzufügen eines Pflanzenpolysaccharids, das die Anforderungen (8) und (9) erfüllt, zu der Zusammensetzung enthält/enthalten:

(8) wenn das Pflanzenpolysaccharid einer Messung gemäß <Verfahren a> unterzogen wird, beträgt das Verhältnis von [Wert $\beta$] / [Wert $\alpha$], wie unten definiert, 100 oder weniger,
[Wert $\alpha$]: ein Viskositätsverlust (cP) während des Temperaturerhöhungsschritts (a1),
[Wert $\beta$]: eine Spitzenviskosität (cP) während des Temperaturabsenkungsschritts (a2),
<Verfahren a> als Messprobe werden 32 g einer 22 Masse-%igen wässrigen Aufschlämmung eines zerkleinerten Produkts der Zusammensetzung einer Messung unter Verwendung eines Schnell-Viskositätsanalysators unterzogen, wobei die nachstehenden Schritte (a1) und (a2) durchgeführt werden,
(a1) Temperaturerhöhungsschritt, bei dem die Temperatur der Messprobe von 50 °C auf 140 °C mit einer Erhöhungsrate von 12 °C/min erhöht und dann 3 Minuten lang aufrechterhalten wird,
(a2) Temperaturabsenkungsschritt, bei dem die Temperatur von 140 °C auf 50 °C mit einer Absenkungsrate von 12 °C/min abgesenkt wird.

**13.** Gequollene Zusammensetzung, hergestellt durch ein Verfahren nach einem der Ansprüche 8 bis 12.

**Revendications**

**1.** Composition gonflée comprenant un amidon dérivé de légumineuses et/ou de céréales et satisfaisant aux exigences (1) à (5) ci-dessous

(1) La composition présente une teneur en amidon, sur une base de masse humide, de 3 % en masse ou plus
(2) La composition présente une teneur en humidité, sur une base de masse sèche, inférieure à 150 % en masse
(3) La composition présente une teneur en fibres alimentaires de 3,0 % en masse ou plus, sur une base de masse humide
(4) La composition présente une teneur en polysaccharide végétal de 0,1 % en masse ou plus, sur une base de masse humide
(5) Lorsque la composition est soumise à une mesure conformément au <Procédé a>, le rapport [Valeur $\beta$]/[Valeur $\alpha$] tel que défini ci-dessous est de 100 ou moins

[Valeur $\alpha$] : Viscosité de rupture (cP) pendant une étape d'augmentation de la température (a1)
[Valeur $\beta$] : Viscosité maximale (cP) pendant une étape de diminution de la température (a2)
<Procédé a> À titre d'échantillon de mesure, 32 g de boue aqueuse à 22 % en masse d'un produit broyé de la composition sont soumis à une mesure à l'aide d'un visco-analyseur rapide avec réalisation des étapes (a1) et (a2) ci-dessous
(a1) Étape d'augmentation de la température, dans laquelle la température de l'échantillon de mesure est augmentée de 50 °C à 140 °C à une vitesse d'augmentation de 12 °C/min, puis maintenue pendant 3 minutes
(a2) Étape de diminution de la température, dans laquelle la température est diminuée de 140 °C à 50 °C à une vitesse de diminution de 12 °C/min, dans laquelle
la composition gonflée peut être obtenue par un procédé comprenant les étapes suivantes

(i) Préparation d'une composition de pâte contenant de l'amidon dérivé de légumineuses et/ou de céréales et satisfaisant aux exigences (1a) à (5a) ci-dessous

(1a) La composition de pâte présente une teneur en amidon de 3,0 % en masse ou plus, sur une base de masse humide,
(2a) La composition de pâte présente une teneur en humidité, sur une base de masse sèche, supérieure à 60 % en masse,
(3a) La composition de pâte présente une teneur en fibres alimentaires de 3,0 % en masse ou plus, sur une base de masse humide
(4a) La composition de pâte présente une teneur en polysaccharide végétal de 0,1 % en masse ou plus, sur une base de masse humide
(5a) La composition de pâte présente une teneur en enveloppe de graines de psyllium de 0,1 % en masse ou plus et de 10 % en masse ou moins, ladite enveloppe de graines de psyllium ayant subi un traitement enzymatique

(ii) Gonflement de la composition de pâte de l'étape (i) par traitement thermique, où
(6a) la teneur en humidité, sur une base de masse sèche, de la composition de pâte diminue de 5 % en masse ou plus pendant le traitement thermique,
(iii) Soumission de la composition de pâte de l'étape (ii) à un traitement sous pression réduite.

**2.** Composition gonflée selon la revendication 1,

dans laquelle, lorsqu'une suspension à 6 % de la composition gonflée est observée, le nombre de structures de grains d'amidon est de 300/$mm^2$ ou moins,
dans laquelle la composition gonflée présente une valeur PDI (indice de dispersibilité des protéines) inférieure à 55 % en masse,
dans laquelle, lorsqu'au moins une section A congelée de composition obtenue par la [Procédure C] ci-dessous est observée, l'exigence (7) ci-dessous est satisfaite :

(7) Lorsque des pores d'une aire de 10000 $\mu m^2$ ou plus dans une image en coupe transversale de la section congelée de composition sont observés, le rapport entre une aire moyenne pondérée des pores et un périmètre moyen pondéré des pores {(aire moyenne pondérée)/(périmètre moyen pondéré)} est de 100 ou plus

[Procédure C] La composition est congelée à -25 °C et coupée le long d'un plan de coupe A pour préparer une section A congelée de composition,

dans laquelle la section A congelée de composition comprend une section A1 congelée de composition, qui est obtenue le long d'un plan de coupe A1, ledit plan de coupe A1 étant orthogonal à un axe longitudinal de la composition,

dans laquelle la section A congelée de composition comprend une section A1 congelée de composition, qui est obtenue le long d'un plan de coupe A1, et une section A2 congelée de composition, qui est obtenue le long d'un plan de coupe A2, ledit plan de coupe A1 étant orthogonal à un axe longitudinal de la composition et ledit plan de coupe A2 étant parallèle à l'axe longitudinal de la composition,

dans laquelle, lorsque la composition est soumise à la [Procédure d] ci-dessous et que le produit résultant est soumis à une mesure selon la [Condition D] ci-dessous pour obtenir une courbe de distribution de poids moléculaire dans un intervalle avec des logarithmes de poids moléculaire de 3,5 ou plus et moins de 6,5 (ci-après dénommée « $MWDC_{3,5-6,5}$ »), le rapport entre une aire sous la courbe dans un intervalle avec des logarithmes de poids moléculaire de 5,0 ou plus et moins de 6,5 et l'aire sous la courbe entière (ci-après dénommée « $AUC_{5,0-6,5}$ ») est de 1 % ou plus et de 70 % ou moins

[Procédure d] La composition est broyée et un composant insoluble dans l'éthanol et soluble dans le diméthylsulfoxyde est obtenu

[Condition D] Lorsque la composition est traitée par la [Procédure d] ci-dessus et dissoute dans une solution aqueuse d'hydroxyde de sodium 1M à une concentration de 0,30 % en masse, et laissée reposer à 37 °C pendant 30 minutes, puis combinée avec un volume égal d'eau et un volume égal d'éluant et soumise à une filtration avec un filtre de 5 $\mu m$, et le filtrat est ensuite soumis à une chromatographie de filtration sur gel pour obtenir ainsi une distribution de poids moléculaire,

dans laquelle la teneur en acide organique est de 0,01 % en masse plus,

dans laquelle les légumineuses sont une ou plusieurs espèces de légumineuses choisies parmi les espèces Pisum, Phaseolus, Cajanus, Vigna, Vicia, Cicer, Glycine et Lens,

dans laquelle les légumineuses sont des légumineuses matures,

dans laquelle les céréales sont une ou plusieurs espèces de céréales choisies parmi awa (millet des oiseaux), hie (millet japonais), kibi (millet commun), le sorgho, le seigle, l'avoine, hatomugi (larme de Job), le maïs, le sarrasin, l'amarante et le quinoa,

dans laquelle le rapport entre la teneur en amidon contenue dans les légumineuses et/ou céréales et la teneur totale en amidon de la composition est de 10 % en masse ou plus, et/ou

dans laquelle la composition gonflée est sensiblement exempte de gluten.

**3.** Composition gonflée selon l'une des revendications 1 ou 2, comprenant une partie localisée de fibres alimentaires de légumineuses et/ou de céréales.

**4.** Composition gonflée selon la revendication 3,

comprenant une partie comestible de légumineuses et/ou de céréales, et/ou

dans laquelle la teneur totale en partie comestible de légumineuses et/ou de céréales et en partie localisée de fibres alimentaires de légumineuses et/ou de céréales est de 10 % en masse ou plus, sur une base de masse humide.

**5.** Composition gonflée selon l'une des revendications 3 ou 4,
dans laquelle le traitement enzymatique est un traitement par cellulase, xylanase ou pectinase.

**6.** Composition gonflée selon l'une quelconque des revendications 1 à 5, dans laquelle le polysaccharide végétal satisfait à l'exigence (8) ci-dessous

(8) Une viscosité d'une solution aqueuse contenant 4 % en masse de polysaccharide végétal, mesurée avec un viscosimètre de type B à 4 °C, 60 tr/min, pH 4, est supérieure à 200 cP,

dans laquelle le polysaccharide végétal provient de l'enveloppe des graines de psyllium,

dans laquelle le polysaccharide végétal a subi un traitement enzymatique,

dans laquelle le polysaccharide végétal présente une teneur en fibres alimentaires solubles de 5 % en masse ou plus sur une base de masse humide, et/ou
dans laquelle le polysaccharide végétal est un composant visqueux végétal.

**7.** Composition gonflée selon l'une quelconque des revendications 1 à 6,
dans laquelle la teneur en enveloppe de graines de psyllium est de préférence de 0,1 % en masse ou plus sur une base de masse humide.

**8.** Procédé permettant la production d'une composition gonflée, comprenant les étapes suivantes

(i) Préparation d'une composition de pâte contenant de l'amidon dérivé de légumineuses et/ou de céréales et satisfaisant aux exigences (1) à (5) ci-dessous

(1) La composition de pâte présente une teneur en amidon de 3,0 % en masse ou plus sur une base de masse humide,
(2) La composition de pâte présente une teneur en humidité, sur une base de masse sèche, supérieure à 60 % en masse,
(3) La composition de pâte présente une teneur en fibres alimentaires de 3,0 % en masse ou plus, sur une base de masse humide
(4) La composition de pâte présente une teneur en polysaccharide végétal de 0,1 % en masse ou plus, sur une base de masse humide
(4') La composition de pâte présente une teneur en enveloppe de graines de psyllium de 0,1 % en masse ou plus et de 10 % en masse ou moins, ladite enveloppe de graines de psyllium ayant subi un traitement enzymatique
(5) Lorsque la composition est soumise à une mesure conformément au <Procédé a>, le rapport [Valeur $\beta$]/[Valeur $\alpha$] tel que défini ci-dessous est de 100 ou moins

[Valeur $\alpha$] : Viscosité de rupture (cP) pendant une étape d'augmentation de la température (a1)
[Valeur $\beta$] : Viscosité maximale (cP) pendant une étape de diminution de la température (a2)
<Procédé a> À titre d'échantillon de mesure, 32 g de boue aqueuse à 22 % en masse d'un produit broyé de la composition sont soumis à une mesure à l'aide d'un visco-analyseur rapide avec réalisation des étapes (a1) et (a2) ci-dessous

(a1) Étape d'augmentation de la température, dans laquelle la température de l'échantillon de mesure est augmentée de 50°C à 140 °C à une vitesse d'augmentation de 12 °C/min, puis maintenue pendant 3 minutes
(a2) Étape de diminution de la température, dans laquelle la température est diminuée de 140 °C à 50 °C à une vitesse de diminution de 12 °C/min

(ii) Gonflement de la composition de pâte de l'étape (i) par traitement thermique, où
(6) la teneur en humidité, sur une base de masse sèche, de la composition de pâte diminue de 5 % en masse ou plus pendant le traitement thermique, et
(iii) Soumission de la composition de pâte de l'étape (ii) à un traitement sous pression réduite.

**9.** Procédé selon la revendication 8,

dans lequel l'étape (ii) comprend :

(ii-a) la fermentation à la levure de la composition de pâte de l'étape (i) ; et
(ii-b) la soumission de la composition fermentée à la levure de l'étape (ii-a) à une étape de traitement de cuisson, ou

dans lequel l'étape (ii) comprend :

(ii-2a) le mélange de la composition de pâte de l'étape (i) avec des bulles d'air et/ou un agent d'expansion ; et
(ii-2b) la soumission de la composition mélangée de l'étape (ii-2a) à un traitement de cuisson.

**10.** Procédé selon l'une des revendications 8 ou 9,

dans lequel le degré de gélatinisation de la composition de pâte de l'étape (i) est inférieur à 70 % en masse, et/ou dans lequel, lorsqu'une suspension à 6 % de la composition de pâte de l'étape (i) est observée, le nombre de structures de grains d'amidon est de 10/$mm^2$ ou plus.

**11.** Procédé selon l'une quelconque des revendications 8 à 10,

dans lequel l'étape (i) et/ou l'étape (ii) comprend/comprennent la réalisation d'un traitement enzymatique, et dans lequel l'étape (i) et/ou l'étape (ii) comprend/comprennent de préférence un traitement par une ou de plusieurs enzymes choisies parmi la cellulase, la pectinase et la xylanase.

**12.** Procédé selon l'une quelconque des revendications 8 à 11,

dans lequel l'étape (i) et/ou l'étape (ii) comprend/comprennent l'ajout à la composition de légumineuses et/ou de céréales avec une valeur PDI (indice de dispersibilité des protéines) inférieure à 55 % en masse,
dans lequel l'étape (i) et/ou l'étape (ii) comprend/comprennent l'ajout à la composition de polysaccharide végétal ayant subi un traitement enzymatique,
dans lequel l'étape (i) et/ou l'étape (ii) comprend/comprennent l'ajout à la composition de polysaccharide végétal satisfaisant aux exigences (8) et (9) :

(8) Lorsque le polysaccharide végétal est soumis à une mesure conformément au <Procédé a>, le rapport [Valeur $\beta$]/[Valeur $\alpha$] tel que défini ci-dessous est de 100 ou moins
[Valeur $\alpha$] : Viscosité de rupture (cP) pendant une étape d'augmentation de la température (a1)
[Valeur $\beta$] : Viscosité maximale (cP) pendant une étape de diminution de la température (a2)
<Procédé a> À titre d'échantillon de mesure, 32 g de boue aqueuse à 22 % en masse d'un produit broyé de la composition sont soumis à une mesure à l'aide d'un visco-analyseur rapide avec réalisation des étapes (a1) et (a2) ci-dessous
(a1) Étape d'augmentation de la température, dans laquelle la température de l'échantillon de mesure est augmentée de 50 °C à 140 °C à une vitesse d'augmentation de 12 °C/min, puis maintenue pendant 3 minutes
(a2) Étape de diminution de la température, dans laquelle la température est diminuée de 140 °C à 50 °C à une vitesse de diminution de 12 °C/min.

**13.** Composition gonflée produite par un procédé selon l'une quelconque des revendications 8 à 12.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2019024347 A
- JP 2007124928 A
- JP H11075776 A
- US 20070248726 A
- CN 1681392 A
- CN 102796717 A
- EP 1989302 A
- WO 2013114048 A


### Non-patent literature cited in the description


- Japan Standard Tables for Food Composition. 2015
- Japanese Standard Tables of Food Composition. 2020
- *CHEMICAL ABSTRACTS*, 110-54-3
- *CHEMICAL ABSTRACTS*, 67-68-5
- About Food Labeling Standards. *Food Labeling Law*, 30 March 2015